(19) Europäisches Patentamt
European Patent Office
Office européen des brevets

(11) EP 2 887 356 B1

(12) # EUROPEAN PATENT SPECIFICATION

(45) Date of publication and mention of the grant of the patent:
**12.04.2017 Bulletin 2017/15**

(21) Application number: **12884853.8**

(22) Date of filing: **20.09.2012**

(51) Int Cl.:
*G21C 3/328* (2006.01) *G21C 3/62* (2006.01)
*G21C 21/02* (2006.01) *G21D 3/00* (2006.01)

(86) International application number:
**PCT/JP2012/074042**

(87) International publication number:
**WO 2014/045368 (27.03.2014 Gazette 2014/13)**

(54) **COMPUTER-IMPLEMENTED METHOD FOR SETTING EQUIVALENT FISSILE COEFFICIENT**

COMPUTERIMPLEMENTIERTES VERFAHREN ZUR EINSTELLUNG ÄQUIVALENTER SPALTBARER KOEFFIZIENTEN

PROCÉDÉ MIS EN OEUVRE PAR ORDINATEUR DE RÉGLAGE DE COEFFICIENT FISSIBLE ÉQUIVALENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2015 Bulletin 2015/26**

(73) Proprietor: **Nuclear Fuel Industries, Ltd.**
**Tokyo 10400002 (JP)**

(72) Inventors:
- **TOKASHIKI, Mikio**
  **Naka-gun, Ibaraki 319-1196 (JP)**
- **OKUI, Shota**
  **Naka-gun, Ibaraki 319-1196 (JP)**

(74) Representative: **Regimbeau**
**20, rue de Chazelles**
**75847 Paris Cedex 17 (FR)**

(56) References cited:
**WO-A1-2011/015755**
**JP-A- H 102 980**
**JP-A- H09 325 195**
**JP-A- 2006 208 226**
**JP-A- 2009 014 511**
**JP-A- 2009 014 511**
**JP-A- 2010 261 866**
**JP-A- 2010 261 866**
**JP-B2- 3 008 129**

- **Martin Plesinger: "Faculty of Mechatronics and Interdisciplinary Engineering Studies The Total Least Squares Problem and Reduction of Data in A X ~ B", Academy of Sciences of the Czech Republic, 31 March 2008 (2008-03-31), XP055230054, Retrieved from the Internet: URL:http://www.fp.tul.cz/~plesinger/my_publications/doctoral_thesis/thesis.pdf [retrieved on 2015-11-20]**
- **NOBUO NAKAE ET AL.: 'Control of plutonium content using a concept of physical accounting method for adjusted fissile enrichment' DONEN GIHO, NO.70, POWER REACTOR AND NUCLEAR FUEL DEVELOPMENT CORP. June 1989, pages 77 - 81, XP008176776**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an equivalent fissile method used in enrichment adjustment that is performed so that reactivity may become equivalent to the base design when isotopic compositions of uranium and plutonium are different from a design serving as a standard in manufacture of a uranium-plutonium mixed oxide fuel assembly, and more specifically, to a method for setting equivalent fissile coefficients and a method for manufacturing a fuel assembly in which adjustment of the plutonium enrichment is performed using the coefficients.

### Background Art

In boiling water reactors (BWRs) and pressurized water reactors (PWRs), there is proceeding a so-called plutonium-thermal project that aims at resource saving of uranium and utilization of plutonium by loading a uranium-plutonium mixed oxide fuel (hereafter termed as an MOX fuel) that uses plutonium obtained by reprocessing of spent fuel as a nuclear fuel material in a reactor. In loading the MOX fuel, there is a method for loading it in a reactor core being intermingled with a uranium fuel as part of a reload fuel.

Incidentally, an isotopic composition of plutonium (hereafter described as Pu) contained in the MOX fuel varies mainly depending on a type, a degree of enrichment, and a burn-up of the spent fuel to be reprocessed. For example, a weight ratio of Pu239 in Pu that is obtained by reprocessing spent fuel of $9 \times 9$ arrangement fuel (B type) of the BWR with a burn-up of 45 GWd/t is about 51%; a weight ratio of Pu239 in Pu obtained by burning that fuel up to 50 GWd/t is about 48%.

Moreover, also in a period from a point of time of being reprocessed until being loaded in a reactor core, Pu241 suffers generation of Am241 and reduction of Pu241 by $\beta$ decay of a half-life of about 14 years. Therefore, it needs to be premised that MOX powders of various compositions should be supplied in manufacture of the MOX fuel.

When the isotopic composition of Pu contained in the MOX fuel differ, even if it has the same Pu enrichment (hereafter described simply as an enrichment) as that of the design serving as a base (hereafter described simply as base design), abundance of each plutonium isotope contained in the fuel naturally differs from that of the base design.

Especially, if abundances of Pu239 and Pu241 that are fissionable nuclides are larger than those of the base design, the reactivity will become higher than that of the base design. On the other hand, if abundances of Pu240 and Am241 that have large poison effects on neutrons are larger than those of the base design, the reactivity will become lower than that of the base design. Therefore, according to the isotopic composition contained in the MOX fuel, it is necessary to adjust the enrichment so that the MOX fuel may become equivalent at least in reactivity to the base design.

Here, there is a literature (Non-patent Literature 1) that discusses the Pu enrichment of the MOX fuel for PWRs. In this Non-patent Literature 1, in the end of cycle of a PWR reactor core, it is considered so that a prescribed cycle burn-up may be attained even when the MOX fuel is loaded as part of a reload fuel by making uranium fuel loaded in the reactor core and the MOX fuel equivalent in reactivity to each other. Specifically, the consideration is to adjust the enrichment according to a Pu isotopic composition in the MOX fuel so that an infinite multiplication factor $k_\infty$ of the uranium fuel and an infinite multiplication factor $k_\infty$ of the MOX fuel may become an equal value in the reactor core average burn-up at the end of cycle (hereafter described as EOC). In this enrichment adjustment, an equivalent fissile method is used in the Non-patent Literature 1.

On the other hand, there is a literature (refer to Patent Literature 1) showing a method whereby enrichment distribution of inner layer and intermediate layer regions and the outer layer region of the fuel assembly is changed until it becomes a target LPF and subsequently the enrichment distributions of the respective regions that satisfy the reactivity equivalence is determined in order to freely control local power peaking while maintaining reactivity equivalence.

Moreover, as a method for calculating the equivalent fissile coefficients that is different from that of Non-patent Literature 1, Patent Literature 2 discloses a method for obtaining equivalent fissile coefficients, for example, by obtaining in advance an average enrichment of MOX fuel rods that makes reactivities equivalent for two cases where nuclide compositions are different, respectively, and solving simultaneous linear equations with two equivalent fissile coefficients that should be obtained set as unknowns.

Furthermore, as a method for calculating the equivalent fissile coefficients, Patent Literature 3 discloses a method for obtaining reactivity coefficients by obtaining correlation between a nuclide composition and a necessary enrichment at several points by direct calculation and performing fitting of them.

Incidentally, the equivalent fissile method, when the isotopic compositions of uranium and Pu raw materials are given, is to obtain the Pu enrichment that gives a proper reactivity by a mathematical formula. That is, regarding the MOX fuel in which various kinds of isotopes are intermingled, when a reactivity worth of each isotope of the raw material is converted into that of Pu239 and the equivalent Pu239 enrichment when the MOX fuel is converted into a virtual MOX fuel consisting of only Pu239 and U238 is denoted by $E_{239}$, if the isotopic compositions of uranium and Pu of a certain MOX fuel and the Pu enrichment ε (Put enrichment: {(total Pu + Am241) / (total Pu + Am241 + total U)} × 100 (wt%)) are given, the $E_{239}$ can be obtained through calculation from $E_{239} = \varepsilon\Sigma_i\alpha_i\eta_i + (100-\varepsilon)\,\Sigma_i\beta_i\eta_i$ ... basic equation (1) of Non-patent Literature 1.

Where $\alpha_i$ is the Pu isotopic composition (weight ratio to total Pu + Am241), $\beta_i$ is a U isotopic composition (weight ratio to total U), and $\eta_i$ is Pu239 equivalent coefficients of each isotope (coefficients for converting the reactivity worth of Pu and U isotopic nuclides to that of Pu239, i.e., the equivalent fissile coefficients).

Therefore, in the case where the Pu enrichment is determined so that the MOX fuel may be able to have the proper reactivity to uranium and Pu of the given raw materials, the Pu enrichment that becomes the proper reactivity for the MOX fuel having a representative isotopic composition is obtained, the $E_{239}$ of the MOX fuel is calculated, this is fixed as a constant, and then the Pu enrichment ε is determined so that the $E_{239}$ may become a decided value in the isotopic composition of the given raw materials. Below, an equation (1) equivalent to a basic equation (2) of Non-patent Literature 1 that is used in this case is shown with a different notation.

[Mathematical 1]

$$\varepsilon = \frac{\sum_m c_m \cdot w_m - E_{239}}{\sum_m c_m \cdot w_m - \sum_n c_n \cdot w_n} \qquad (1)$$

Where

ε : Enrichment at which $k_\infty$ in EOC reactor core average burn-up becomes a value equal to $k_\infty$ of standard fuel

$E_{239}$ : Enrichment at which $k_\infty$ at EOC reactor core average burn-up becomes a value equal to $k_\infty$ of standard fuel in virtual isotopic composition consisting of only Pu239 and U238,

$w$ : Weight ratio that each isotope occupies in uranium or plutonium. Incidentally $\sum_m w_m = 1,\ \sum_n w_n = 1$

$c$ : Equivalent fissile coefficients of each isotope in uranium or plutonium. Incidentally, they are defined as $c_{28}$ = 0 and $c_{49}$ = 1.

$m$ : Subscript indicating each isotope of uranium. Incidentally, they are:
24: U234
25: U235
26: U236
28: U238.

$n$ : Subscript indicating each isotope of plutonium (Am241 is included conveniently). Incidentally, they are:
48: Pu238
49: Pu239
40: Pu240
41: Pu241
42: Pu242
51: Am241.

By the above-mentioned equation (1), the Pu enrichment ε can be determined so that the reactivity of the MOX fuel may become an appropriate value. As a method for obtaining equivalent fissile coefficients C necessary in doing this, page 7 of Non-patent Literature 1 gives "determining by analyzing and arranging fluctuation of the infinite multiplication factor to a change of a value of beginning life of each isotope enrichment". Although there is no description of a specific procedure for obtaining it in Non-patent Literature 1 in any way, it is considered that obtaining it is done by procedures as shown generally by a flowchart of Fig. 27. That is, it is the following procedures.

Procedure 1: Set a design (base design) serving as a standard that has been checked to satisfy a life when being loaded in a reactor core and a thermal limit value by a design calculation. If there is no applicable design, an enrichment of each fuel rod is determined so that the life when being loaded in the reactor core and the thermal limit value maybe satisfied.

Procedure 2 : Evaluate an amount of change $dk_{49}$ of the infinite multiplication factor $k_\infty$ per unit change weight when changing a minute amount of an abundance weight of Pu239 with a lattice code that was used when evaluating nuclear properties of the base design. Incidentally, when changing an abundance of Pu239, an abundance of U238 is adjusted so that a gross weight of uranium and Pu in the MOX fuel at the beginning of life may be preserved. For example, when evaluating a case where the abundance of Pu239 is increased, the abundance of U238 is decreased by the same weight.
Procedure 3: Evaluate an amount of change $dk_m$ (or $dk_n$) of the infinite multiplication factor $t_\infty$ per unit change weight when changing a minute amount of an abundance weight of an objective nuclide m (or n) of the equivalent fissile coefficients that is intended to be obtained with the lattice code. Incidentally, when changing the abundance of the objective nuclide m (or n), the abundance of U238 is adjusted so that the gross weight of uranium and Pu in the MOX fuel at the beginning of life may be preserved. That is, when evaluating the case where the abundance of the objective nuclide m (or n) is increased, the abundance of U238 is reduced by the same weight.
Procedure 4: Calculate the equivalent fissile coefficients $C_m$ (or $C_n$) by an equation of

$$C_m = dk_m / dk_{49}, \text{ (or } C_n = dk_n / dk_{49}).$$

Procedure 3 and Procedure 4 are performed as many times as the number of the objective nuclides of the equivalent fissile coefficients intended to be obtained.

Incidentally, regarding the equivalent fissile coefficients of Non-patent Literature 1, as described in page 8 of Non-patent Literature 1, it is said, "Since the isotopic compositions of plutonium used in actual MOX fuel manufacturing are extremely various, it is necessary to determine equivalent coefficients so that it maybe applicable to isotopic composition fluctuation of a wide range. However, if the set of equivalent coefficients is intended to be applied to all the isotopic compositions, lowering of the accuracy is inevitable because the basic equation 1 of the equivalent fissile method is a linear equation. In order to avoid this, it is necessary that the plutonium isotopic compositions be classified to several groups and the set of equivalent coefficients be set for each group". That is, since the equivalent fissile coefficients are not constants and may change by various factors, and Pu actually used is of the isotopic compositions of a very wide range, high accuracy cannot be obtained if the set of equivalent fissile coefficients determined in a certain specific isotopic composition is used as it is for the enrichment determination of various isotopic compositions of a wide range.

Therefore, in Non-patent Literature 1, groups 1 to 5 are set mainly for numerical value ranges of Puf fraction ((Pu239 + Pu241) / (total Pu + Am241) x 100 (wt%)), respectively, and a procedure shown in Fig. 27 is conducted for each group, as shown in a flowchart of Fig. 28. Incidentally, Group 1 stands for a Puf fraction of not less than 55% and less than 60%, Group 2 stands for a Puf fraction of not less than 60% and less than 65%, Group 3 stands for a Puf fraction of not less than 65% and less than 70%, Group 4 stands for a Puf fraction of not less than 70% and less than 75%, and Group 5 stands for a Puf fraction of not less than 75%. Thus, in the technique of Non-patent Literature 1, in order to support various isotopic compositions and determine the Pu enrichment without deteriorating the accuracy, the determination is performed by preparing the base design and the equivalent fissile coefficients individually for each group.

Although the above Non-patent Literature 1 describes a method for determining an assembly average enrichment, it does not mention a method for determining the enrichment of each fuel rod at all. As is described at page 2 of Non-patent Literature 1, this is because "since this document aims at presenting a technique of adjusting reactivity of an MOX fuel assembly, it does not discuss difference of isotopic composition and plutonium enrichment of each fuel rod but deals with only isotopic composition and plutonium enrichment of an assembly average."

However, although such handling enables the reactivity to acquire a desired value, it has a problem that there is a possibility that the LPF (local power peaking factor that is an index of the power distribution flattening in the fuel assembly) fluctuates largely from the desired value because consideration about Pu enrichment distribution in the fuel assembly is not made.

In Patent Literature 1, such a problem is solved by the following method. That is, first, the inner layer and intermediate layer regions and the outer layer region of an assembly are paid attention to, respectively, and the equivalent fissile coefficients corresponding to these regions are obtained in advance, respectively. Next, in order to adjust the LPF to the desired value, when changing the enrichment of the inner layer and intermediate layer regions, the enrichment of the outer layer region is determined so that the reactivity equivalence may be maintained. When the enrichment of this outer layer region is determined, the respective equivalent fissile coefficients of the inner layer and intermediate layer regions and the outer layer region that have been previously obtained in advance are used. By doing this, it became possible to determine the enrichment having the reactivity equivalence while satisfying the target LPF.

Prior Art Documents List

Patent Literature

Patent Literature 1 : Japanese Patent No. 3008129

Patent Literature 2 : Japanese Unexamined Patent Publication No. 2009-14511
Patent Literature 3 : Japanese Unexamined Patent Publication No. 2010-261866

Non-patent Literature

Non-patent Literature 1 : "On Plutonium Enrichment of MOX Fuel for PWR, " MHI-NES-1001, published by Mitsubishi Heavy Industries, Ltd., February, Heisei 8 (1996)

Summary of Invention

Problem to be solved by the Invention

However, in an MOX fuel for BWRs that is targeted at a wide range of a Pu isotopic composition, it does not happen that a combination of technologies of Non-patent Literature 1 and Patent Literature 1 that are conventional technologies as described above makes it possible to be accurately determine enrichment distribution that has equivalences of reactivity and LPF to the base design.

First, equivalent fissile coefficients C in an equation (1) are obtained by $C_m = dk_m / dk_{49}$ (or $C_n = dk_n / dk_{49}$), where $dk_m$ (or $dk_n$) is an amount of change of an infinite multiplication factor $k_\infty$ per unit change weight when an abundance weight of an objective nuclide m (or n) of the equivalent coefficients intended to be obtained is changed by an infinitesimal quantity (the amount of change of $k_\infty$ itself is evaluated with a lattice code).

On the other hand, as to "how much" the abundance weight of the objective nuclide m (or n) is made to change, there is arbitrariness, which has quite a few influence to accuracy of the equivalent fissile coefficients to be obtained. This is because when the amount of change of the abundance weight is a too infinitesimal quantity, a significant sensitivity as the amount of change of $k_\infty$ cannot be obtained, although it is desirable that the amount of change of the abundance weight be set as small as possible in the viewpoint of a fact that linearity of the equivalent fissile coefficients holds. It is considered that this comes from a fact that a numerical calculation procedure of a neutron transport equation that is solved in evaluating $k_\infty$ with the lattice code depends on a so-called iterative calculation technique. That is, this is because in the process of the iterative calculation of the neutron transport equation, the iterative calculation is aborted by the limited number of times based on the convergence determining condition over a neutron flux distribution defined in advance, and therefore, a calculation result of $k_\infty$ always includes an error accompanying the discontinuation of fixed iterative calculation. On the contrary, if the abundance weight of the objective nuclide is changed somewhat largely so that a significant sensitivity can be obtained as the amount of change of $k_\infty$, nonlinearity will appear in the sensitivity to $k_\infty$. Therefore, in reality, it is necessary to determine a variation width of the abundance weight so that the whole error may become a minimum while permitting nonlinearity of sensitivity to $k_\infty$, namely, permitting accuracy deterioration of an equivalent fissile method. However, no quantitative technique has been disclosed as the method of advanced technical judgment like this heretofore including Non-patent Literature 1.

Moreover, with the method for "setting the set of equivalent coefficients for each group" in Non-patent Literature 1, it tends to be thought that when higher accurate equivalent coefficients are required, it can be supported by setting grouping more finely. However, in practice, it is considered that no matter how finely the grouping is performed, there is a limit in obtaining high accurate equivalent fissile coefficients. This is because, although Non-patent Literature 1 uses a method whereby in addition to the grouping of each numeral value range of the Puf fraction, isotopic composition fractions of Pu239 and Pu242 are considered as coordinates in a two-dimensional orthogonal coordinate system and further region dividing is performed, plutonium isotopes other than Pu239 and Pu242 that are considered to cause significant influences on the linearity of the equivalent fissile coefficients are not considered as indices of the grouping. Especially, regarding Pu240, a poison effect on neutrons per unit number of atoms is not so large, but its abundance is relatively large; therefore, it is considered that the poison net effect on neutrons is relatively large, and has a significant influence on the linearity of the equivalent fissile coefficients.

Therefore, if the number of nuclides used for the index of the grouping is changed from two kinds of Pu239 and Pu242 to three kinds or more including Pu240, it is considered that achieving high accurate equivalent coefficients becomes possible. However, it is necessary to deal with the orthogonal coordinate system of three dimensions or more as a space dealt with as the grouping, the number of times of grouping becomes a huge number in an exponential manner, and it is practically impossible to deal with it.

Furthermore, in manufacturing of the MOX fuel, although the Pu composition varies within a certain range of tolerance in a certain manufacturing unit, and the following problems is considerable also in dealing with a case where a range of dispersion strides over a boundary of the grouping. When the dispersion of the Pu composition strides over a boundary of the grouping in a certain manufacturing unit, in order to avoid complexity on an actual operation, a method of consistently using the equivalent fissile coefficients of the grouping in which the average composition in the manufacturing unit is included is considered rational. Therefore, even when the division width of the grouping is narrower than a tolerance of Pu composition, since "the equivalent fissile coefficients of the grouping in which the average composition is included is used consistently," improvement of the accuracy of the equivalent fissile coefficients by thinning down the division width of the grouping cannot be expected. That is, the division width of the grouping comes to a limit of an order of the tolerance of Pu composition.

As described above, since increasing the accuracy of the equivalent fissile coefficients using the technology shown in Non-patent Literature 1 causes the grouping to become huge and restricts a substantial limit of accuracy to an order of the tolerance of Pu composition in the manufacturing, it can be said that it is not suitable for practical use.

Next, in the above-mentioned Patent Literature 1, as a "method for determining the enrichment distribution having a target LPF while maintaining reactivity equivalence to the base design," in the example of the fuel assembly shown in Fig. 2 quoted in the embodiment, the same raw materials are used for fuel materials of an inner layer fuel rod and an intermediate layer fuel rod, and is comprised of one kind of the Pu enrichment in the inner layer and intermediate layer regions and one kind of Pu enrichment in the outer layer region, total two kinds of Pu enrichments. Therefore, in the embodiment of this Patent Literature 1, what is necessary is just to deal with the equivalent fissile coefficients for two regions, at most. Moreover, since only two variables of the Pu enrichment of the inner layer and intermediate layer regions and the Pu enrichment of the outer layer region are dealt with, a relationship of the both enrichments that satisfy the target LPF is only a two-dimensional simple curve as shown in Fig. 3 of Patent Literature 1. Therefore, it is possible to obtain only one intersection of a curve "E" of Fig. 3 that satisfies a "target equivalent fissile quantity" where the reactivity becomes equivalent to that of the standard fuel and a curve that satisfies the target LPF.

On the other hand, a design that uses about four kinds of Pu enrichments as Pu enrichment types to be used is generally practiced for the MOX fuel for BWRs. A design example of an MOX fuel assembly for BWRs shown in Fig. 1 is a fuel rod lattice arrangement of nine lines by nine rows of fuel rods and has a large-diameter water rod W of a square tube shape occupying a region of nine fuel rods (3 × 3) in a central part, in which the MOX fuel rods P1 to P4 that exclude the top end regions and 14 uranium fuel rods U containing no MOX fuel are arranged in prescribed positions, respectively. One kind of Pu enrichment is used for each of MOX fuel rods P1 to P4, respectively. Therefore, in the example shown in this Fig. 1, four kinds of Pu enrichment types are used in the fuel assembly.

When applying the technology shown in Patent Literature 1 to the design example as shown in this Fig. 1, a region where P1 is arranged can be regarded as "inner layer and intermediate layer regions" that is called in the embodiment of Patent Literature 1, and a region where P2 to P4 are arranged can be regarded as an "outer layer region" that is called in the embodiment of Patent Literature 1. In this case, since the number of the regions to be dealt with is two regions, at most, it is considered that the technology shown in Patent Literature 1 is applicable. However, in reality, since only the average enrichment of the regions concerned is dealt with for regions where P2 to P4 are arranged, there is arbitrariness about how to determine the enrichment distribution of P2 to P4.

Especially, in the case of the fuel assembly for BWRs, there is often the case where a fuel rod where the LPF occurs is usually a fuel rod in an outer periphery region of the assembly, and P2 to P4 are arranged in this region. Therefore, the LPF is affected by enrichment distribution of P1 to P4, and the LPF cannot be necessarily set to a desired value only by distribution of the Pu enrichment of P1 of "the inner layer and intermediate layer regions" and the average Pu enrichment of P2 to P4 of the "outer layer region." In order to solve this problem, it is necessary to find out a method for determining uniquely the enrichment distribution of P2 to P4, but Patent Literature 1 does not mention such a method at all.

As a candidate of solutions against this problem that are easily conceived, a method for giving the enrichment distribution within P2 to P4 of the "outer layer region" by multiplying the enrichment distribution of P2 to P4 of the base design by a constant is conceivable. However, with such a method, when the Pu composition differs largely from the standard composition, the power peaking of any one of the fuel rods among P2 to P4 becomes excessive, and a possibility can be easily conceived that there does not exist a combination that realizes a target LPF only by adjusting the Pu enrichment of P1 and the distribution of the average enrichment of P2 to P4. Therefore, in essence, like the technology shown in Non-patent Literature 1, a designer needs to prepare the enrichment distribution that satisfies the target LPF in advance for grouping into multiple groups. This leads to an idea that most of merits of the technology shown in Patent Literature 1 have been lost because of a point that a technology of Patent Literature 1 of adjusting the LPF to the desired value exerts only an effect of fine adjustment or so on the LPF that shows a minute change in a narrow composition range by nature.

Furthermore, as another method of application of the technology shown in Patent Literature 1 to a design example as shown in Fig. 1, a method for obtaining equivalent fissile coefficients of respective regions of P1 to P4 is conceivable. That is, it is a method whereby the number of regions to be dealt with is set to four regions. In this case, although constraint conditions are two, namely, "attaining the target LPF" and "making standard fuel and reactivity equivalent," in contrast to this, variables to be dealt with are Pu enrichments of four respective regions, i.e., four variables. Therefore, since the variables to be obtained is four for two constraint conditions, the degree of freedom is larger by two variables, and the enrichments of four regions cannot be determined uniquely. Patent Literature 1 does not mention a method for determining the enrichment at all in such a case where the degree of freedom is large.

As an easily conceivable candidate of means of solving this problem, a method of increasing the constraint conditions in number can be considered, for example, a method whereby the target LPFs at the burn-ups B1, B2, and B3 are set as the target LPF and the enrichments of P1 to P4 are determined so as to satisfy them. However, this method comes with a question as to "whether a solution that satisfies all the constraint conditions is sure to be found." This question can be put in another way as a problem as to "whether the LPFs of the burn-ups B1, B2, and B3 can be controlled freely by the enrichment distribution of P1 to P4 . " Generally, the LPF that comes though burn-up of the MOX fuel for BWRs is affected by the enrichment distribution of P1 to P4 and as well as an arrangement and the number of the fuel rods to which gadolinium is added as a burnable poison. Especially, in a period when gadolinium exists in a gadolinium added fuel rod, the LPF is strongly affected by consumption of gadolinium accompanying burning of the fuel. This consumption of gadolinium is seldom affected by the enrichment distribution of P1 to P4, but is affected by the Pu composition contained in the MOX fuel rod. Therefore, in a period when gadolinium exists in the gadolinium added fuel rod, it is impossible to control the LPF by the enrichment distribution of P1 to P4. Moreover, a transition accompanying burn-up of the LPF in a period after entire gadolinium in the gadolinium added fuel rod was consumed is determined mainly by the Pu composition contained in the MOX fuel rod. Therefore, it is considered physically difficult to "freely control the LPF of the burn-ups B1, B2, and B3 by the enrichment distribution of P1 to P4." That is, it is a high probability that the enrichment distribution of P1 to P4 that satisfies the target LPF in the burn-ups B1, B2, and B3 does not exist physically.

As described above, it is considered impossible to apply the technology shown in Patent Literature 1 to an MOX fuel with three kinds or more of enrichment types.

Moreover, in a method for obtaining equivalent fissile coefficients disclosed in Patent Literatures 2, the equivalent fissile coefficients are determined by simultaneous linear equations using a set of values of average enrichments of the MOX fuel rods whose number is the same at most as the number of the equivalent fissile coefficients that shouldbe obtained. This is not a sufficient number to make error components resulting from numerical computation such as the iterative calculation as described above cancel each other. Therefore, also in this Patent Literature 2, similarly with the conventional technologies including Non-patent Literature 1, it is necessary to decide the variation width of the abundance weight such that the whole error may become a minimum, namely a case of the nuclide composition while allowing the nonlinearity of the sensitivity to $k_\infty$, that is, while allowing deterioration of the accuracy of the equivalent fissile method. However, a quantitative technique for that has not been clarified heretofore.

Moreover, Patent Literature 3 does not describe a concrete explanation about a method for obtaining required enrichment in advance at all, and there is arbitrariness when determining the enrichment distribution of multiple kinds of the MOX fuel rods in the assembly. Therefore, if a designer determines the enrichment distribution artificially to each nuclide composition, as is generally carried out, the average enrichment of the MOX fuel rods that will become equivalent in reactivity will be affected by the enrichment distribution as described above, and this influence will appear, as it is, as errors of the equivalent fissile coefficients; therefore, the equivalent fissile coefficients cannot be obtained with a high accuracy. Therefore, also by the method of this Patent Literature 3, it is impossible to minimize an error contained in the equivalent fissile method as a whole.

An object of the present invention is to provide a method capable for setting the equivalent fissile coefficients with a higher accuracy than before by minimizing errors contained in the equivalent fissile coefficients as a whole for a more efficient design and manufacture of the MOX fuel assembly. Moreover, the present invention aims at providing a method for setting equivalent fissile coefficients that make reactivity equivalence to the base design more excellent also in a wide Pu composition range. Furthermore, the present invention aims at providing a method capable for determining the enrichment distribution of each fuel rod that realizes a local power peaking factor equivalent to the base design also in the MOX fuel with three kinds or more of enrichment types.

Means for solving the Problem

In order to achieve the above-mentioned object, a method for setting equivalent fissile coefficients according to a first aspect of the present invention is a method for setting equivalent fissile coefficients for each of the predetermined nuclides that is used for determining the plutonium enrichment corresponding to a plutonium isotopic composition to be applied to the nuclear fuel material by an equivalent fissile method in targeting, as a manufacture object, an MOX fuel assembly containing uranium and plutonium as nuclear fuel materials. The method comprising the steps of: selecting a plurality of plutonium isotopic compositions that cover a range of plutonium isotopic compositions to be applied thereto up to a number larger than the whole number of the equivalent fissile coefficients; determining an enrichment distribution of each MOX fuel rod that becomes equivalent in infinite multiplication factor to a design serving as a predetermined base for each the selected plutonium isotopic composition; and obtaining equivalent fissile coefficients by calculating an equation obtained by applying a least squares method to an equivalent fissile method defined by the equation (1) using a plutonium enrichment s based on the determined enrichment distribution and data based on a weight ratio that each isotope occupies in uranium or plutonium in each plutonium isotopic composition.

[Mathematical 2]

$$\varepsilon = \frac{\sum_{m} c_m \cdot w_m - E_{239}}{\sum_{m} c_m \cdot w_m - \sum_{n} c_n \cdot w_n} \qquad (1)$$

Where

$\varepsilon$ : Enrichment at which $k_\infty$ in EOC reactor core average burn-up becomes a value equal to $k_\infty$ of standard fuel

$E_{239}$ : Enrichment at which $k_\infty$ at EOC reactor core average burn-up becomes a value equal to $k_\infty$ of standard fuel in virtual isotopic composition consisting of only Pu239 and U238,

$w$ : Weight ratio that each isotope occupies in uranium or plutonium. Incidentally $\sum_{m} w_m = 1,\ \sum_{n} w_n = 1$

$c$ : Equivalent fissile coefficients of each isotope in uranium or plutonium. Incidentally, they are defined as $c_{28}$ = 0 and $c_{49}$ = 1.

$m$ : Subscript indicating each isotope of uranium. Incidentally, they are:
24: U234
25: U235
26: U236
28: U238.

$n$ : Subscript indicating each isotope of plutonium (Am241 is included conveniently). Incidentally, they are:
48: Pu238
49: Pu239
40: Pu240
41: Pu241
42: Pu242
51: Am241.

A method for setting equivalent fissile coefficients according to a second aspect of the present invention is the method for setting equivalent fissile coefficients described in the first aspect thereof, in which the step of determining the enrichment distribution determines it by an adjustment step of iterating a step of multiplying the enrichment of each MOX fuel rod given as an initial enrichment distribution by a constant uniformly until a difference between the infinite multiplication factor for the enrichment distribution set in the step and the infinite multiplication factor of the base design becomes smaller than a predetermined convergence determining value.

A method for setting equivalent fissile coefficients according to a third aspect of the present invention is the method for setting equivalent fissile coefficients according to either the first or the second aspect thereof, in which the step of obtaining equivalent fissile coefficients obtains C through calculation by making the plutonium enrichment ε of the selected plutonium isotopic composition and the data based on the weight ratio that each isotope occupies correspond with an equation (11) as a fitting function y and the variables x of the fitting function.

[Mathematical 3]

$$\mathbf{C} = \mathbf{A}^{-1}\,\mathbf{B} \qquad (11)$$

Where

**A** : Square matrix having $a_{ij}$ as elements,

**B** : Vector having $b_i$ as elements,

**C** : Vector having nontrivial equivalent fissile coefficients and $E_{239}$ as elements,

$$a_{ij} = \sum_{l}\left[f_i\left(x_{1,l}, x_{2,l}, \ldots\right) \cdot f_j\left(x_{1,l}, x_{2,l}, \ldots\right)\right]$$

$$b_i = \sum_l \left[ y_l \cdot f_i\left(x_{1,l}, x_{2,l}, \ldots\right)\right]$$

$l$ : Subscript indicating a set of data to be fitted.

A method for setting equivalent fissile coefficients according to a fourth aspect of the present invention is the method for setting equivalent fissile coefficients according to the third aspect thereof, in which C is obtained through calculation by setting a function shown in an equation (12) as the fitting function y and the variables x of the fitting function that shouldbe set and making this equation (12) correspond with the equation (11).
[Mathematical 4]

$$\begin{aligned}
y &:= -\varepsilon \cdot w_{49} \\
x_1 &:= w_{24} \cdot (1-\varepsilon) \\
x_2 &:= w_{25} \cdot (1-\varepsilon) \\
x_3 &:= w_{26} \cdot (1-\varepsilon) \\
x_4 &:= w_{48} \cdot \varepsilon \\
x_5 &:= w_{40} \cdot \varepsilon \\
x_6 &:= w_{41} \cdot \varepsilon \\
x_7 &:= w_{42} \cdot \varepsilon \\
x_8 &:= w_{51} \cdot \varepsilon
\end{aligned}$$

$$\begin{aligned}
c_1 &:= c_{24} \quad &;\quad f_1(x_1, x_2, \ldots x_8) &:= x_1 \\
c_2 &:= c_{25} \quad &;\quad f_2(x_1, x_2, \ldots x_8) &:= x_2 \\
c_3 &:= c_{26} \quad &;\quad f_3(x_1, x_2, \ldots x_8) &:= x_3 \\
c_4 &:= c_{48} \quad &;\quad f_4(x_1, x_2, \ldots x_8) &:= x_4 \\
c_5 &:= c_{40} \quad &;\quad f_5(x_1, x_2, \ldots x_8) &:= x_5 \\
c_6 &:= c_{41} \quad &;\quad f_6(x_1, x_2, \ldots x_8) &:= x_6 \\
c_7 &:= c_{42} \quad &;\quad f_7(x_1, x_2, \ldots x_8) &:= x_7 \\
c_8 &:= c_{51} \quad &;\quad f_8(x_1, x_2, \ldots x_8) &:= x_8 \\
c_9 &:= -E_{239} \quad &;\quad f_9(x_1, x_2, \ldots x_8) &:= 1
\end{aligned} \qquad (12)$$

A method for setting equivalent fissile coefficients according to a fifth aspect of the present invention is the method for setting equivalent fissile coefficients according to either the second aspect or the third aspect thereof and is characterized in that the equivalent fissile coefficients that shouldbe set are made to have a dependence on a composition fraction of isotopes of one kind or more that are selected in a descending order of a macroscopic cross section in plutonium, the largest the first.

A method for setting equivalent fissile coefficients according to a sixth aspect of the present invention is the method for setting equivalent fissile coefficients according to the fifth aspect thereof and is characterized in that C is obtained through calculation by setting an equation (14a) by designating a function shown in an equation (13a) as the fitting function y and the variables x of the fitting function that should be set and making this equation (14a) correspond with the equation (11).
[Mathematical 5]

$$
\begin{aligned}
c_{m(k)} &= 0, && k=1\\
c_{m(k)} &= c_{m(k),0} + \sum_{k'=1}^{N} c_{m(k),n(k')} \cdot w_{n(k')}, && k>1\\
c_{n(k)} &= 1, && k=1\\
c_{n(k)} &= c_{n(k),0} + \sum_{k'=1}^{N'} c_{n(k),n(k')} \cdot w_{n(k')}, && k>1
\end{aligned}
\tag{13a}
$$

where

- $m(k)$ : Sequence (example: {28, 24, 25, 26}), arrangement of an integer symbol 28 of first term (subscript $k$ = 1) indicating U238 that is trivial as equivalent fissile coefficient plus subsequent terms (subscript $k$ = 2, ...) of integer terms each indicating uranium isotope nuclide that is nontrivial as equivalent fissile coefficient and should be taken into consideration,
- $n(k)$ : Sequence (example: {49, 40, 41, 42, 51, 48}), arrangement of an integer symbol 49 of first term (subscript $k$ = 1) indicating Pu239 that is trivial as equivalent fissile coefficient plus subsequent terms (subscript $k$ = 2, ...) of integer terms each indicating Pu isotope nuclide that is nontrivial as equivalent fissile coefficient and should be taken into consideration (Am241 is also included conveniently) (however, for subscript $k$ = 2 and subsequent $k$'s, in decreasing order of macroscopic cross section),
- $N$ : Number of Pu isotopes that should be taken into consideration when providing dependence on composition fraction of Pu isotope to equivalent fissile coefficients,
- $N'$ : Lesser of $N$ and $k$-1 ($N'$ : = min{$N$, $k$-1}).

[Mathematical 6]

$$
\begin{aligned}
y &:= -\varepsilon \cdot w_{49}\\
x_{m(k),0} &:= (1-\varepsilon)\cdot w_{m(k)}, \quad x_{m(k),n(k')} := x_{m(k),0}\cdot w_{n(k')} \quad ; \; k>1,\; k'=1,..,N\\
x_{n(k),0} &:= \varepsilon \cdot w_{n(k)}, \quad x_{n(k),n(k')} := x_{n(k),0}\cdot w_{n(k')} \quad ; \; k>1,\; k'=1,...,N'\\
f_{m(k),0} &:= x_{m(k),0}, \quad f_{m(k),n(k')} := x_{m(k),n(k')} \quad ; \; k>1,\; k'=1,...,N\\
f_{n(k),0} &:= x_{n(k),0}, \quad f_{n(k),n(k')} := x_{n(k),n(k')} \quad ; \; k>1,\; k'=1,...,N'\\
f_{49,0} &:= 1
\end{aligned}
\tag{14a}
$$

A method for setting equivalent fissile coefficients according to a seventh aspect of the present invention is the method for setting equivalent fissile coefficients according to any one of the second to sixth aspects thereof that in targeting an MOX fuel assembly containing three kinds or more of plutonium enrichment types as the MOX fuel assembly to be manufacture object, has: a step of setting an enrichment distribution that reproduces a distribution of the physical quantity predetermined for each plutonium enrichment type regarding a single physical quantity of a target of design optimization for each of the selectedplutonium isotopic compositions based on an equation (30) using an equation (29), an equation (31), and the equation (32); an adjustment step of calculating the single physical quantity of the target of design optimization for the enrichment distribution set in the step, iterating the step until its difference from the predetermined physical quantity distribution becomes smaller than the predetermined convergence determining value, and designating the obtained enrichment distribution as the initial enrichment distribution; and an adjustment step of, when a difference between an infinite multiplication factor for the initial enrichment distribution and an infinite multiplication factor of the base design is larger than the predetermined convergence determining value, iterating a step of multiplying the initial enrichment distribution by a constant uniformly until it becomes smaller than it; and the equivalent fissile coefficients are obtained by applying the least squares method for each enrichment type based on the enrichment distribution adjusted in this adjustment step, respectively.
[Mathematical 7]

$$a_{i,j} = \Delta LDP_{i,j} / \Delta \varepsilon_j \quad (29)$$

Where

$LDP_i$ : Physical quantity serving as design objective of enrichment type *i*,
$\Delta LDP_{i,j}$ : Amount of fluctuation of $LDP_i$ at the time of fluctuation of Pu enrichment of enrichment type *j*
$\Delta\varepsilon_j$ : Amount of fluctuation of Pu enrichment of enrichment type *j*,
*i* : Subscript indicating enrichment type *i*,
*i* : The subscript indicating enrichment type *j*.

[Mathematical 8]

$$\varepsilon_i^{(n)} = \varepsilon_i^{(n-1)} + \Delta\varepsilon_i^{(n)} \quad (30)$$

Where

$\varepsilon_i^{(n-1)}$ : Enrichment of enrichment type *i* before enrichment adjustment,

$\varepsilon_i^{(n)}$ : Enrichment of enrichment type *i* after enrichment adjustment.[Mathematical 9]

$$\mathbf{C} = \mathbf{A}^{-1}\,\mathbf{B} \quad (31)$$

Where

**A** : Square matrix having $a_{ij}$ of equation (29) as elements,
**B** : Vector having $\Delta LDP_i^{(n-1)}$ as elements,
**C** : Vector having $\Delta\varepsilon_i^{(n)}$ as elements.

[Mathematical 10]

$$\Delta LDP_i^{(n-1)} = LDP_i^T - LDP_i^{(n-1)} \quad (32)$$

Where

$LDP_i^T$ :Predetermined desired value of physical quantity serving as design objective of enrichment type *i*.

A method for setting equivalent fissile coefficients according to an eighth aspect of the present invention has: a first processing step of designating the equivalent fissile coefficients obtained in advance by a method described in the seventh aspect of the present invention and an $E_{239}$ enrichment as zeroth equivalent coefficients, tentatively determining a plutonium enrichment of each MOX fuel rod that becomes equivalent to the $E_{239}$ enrichment from the equation (1) using the zeroth equivalent coefficients for each of the selected plutonium isotopic compositions, and designating it as the initial enrichment distribution; a second processing step of calculating an infinite multiplication factor for the tentatively determined plutonium enrichment distribution, and performing comparison determination of its difference from the infinite multiplication factor of the base design and the predetermined convergence determining value; a third processing step of, when a difference between the infinite multiplication factors of the both is larger than the convergence determining value by the determination, adjusting the plutonium enrichment of each MOX fuel rod by multiplying the tentatively determined plutonium enrichment distribution by a constant uniformly and obtaining a new tentatively determined plutonium enrichment distribution; a step of iterating a step of returning to the second processing step for the new tentatively determined plutonium enrichment distribution obtained in the third processing step and recalculating the infinite multiplication factor and performing the determination until the difference between the infinite multiplication factors of the both becomes smaller than the convergence determining value; and a fourth processing step of determining the equivalent fissile coefficients by a method described in the seventh aspect of the present invention based on the plutonium enrichment of each MOX fuel rod at a point of time when the difference between the infinite multiplication factors becomes smaller than the convergence determining value and each plutonium composition, and designating it as the first equivalent coefficients; the setting method iterates a series of work from the first processing step to the fourth processing step, each series of work uses the equivalent fissile coefficients determined in the fourth processing step of the previous round in the first processing step of the next round, and the work of an N-th round that is the last starts the first processing step using (N-1) -th equivalent coefficients and determines N-th equivalent coefficients in the fourth processing step.

A method for setting equivalent fissile coefficients according to a ninth aspect of the present invention is the method for setting equivalent fissile coefficients according to either the seventh aspect or the eighth aspect of the present invention and is characterized in that the single physical quantity of the target of design optimization is a maximum of the fuel rod linear heat generation or a maximum of a fuel rod burn-up of each plutonium enrichment type.

A method for setting equivalent fissile coefficients according to a tenth aspect of the present invention comprises: a first processing step of in targeting an MOX fuel assembly containing three kinds or more of plutoniumenrichment types as the MOX fuel assembly to be manufacture obj ect, designating the equivalent fissile coefficients obtained in advance by a method described by any one of the second to sixth aspects of the present invention as the zeroth equivalent coefficients, and determining an $E_{239}$ enrichment of each MOX fuel rod of the base design through calculation from the equation (1) based on the zeroth equivalent coefficients and the plutonium enrichment of each MOX fuel rod of the base design; a second processing step of tentatively determining the plutonium enrichment of each MOX fuel rod that becomes equal to the $E_{239}$ enrichment of each MOX fuel rod of the base design from the equation (1) using the zeroth equivalent coefficients for each of the selected plutonium isotopic compositions and designating it as the initial enrichment distribution; the thirdprocessing step of calculating an infinite multiplication factor for the tentatively determined plutonium enrichment distribution and performing comparison determination of its difference from the infinite multiplication factor of the base design and the predetermined convergence determining value; and the fourth processing step of when the difference between the infinite multiplication factors of the both is larger than the convergence determining value, adjusting the plutonium enrichment of each MOX fuel rod by multiplying the tentatively determined plutonium enrichment distribution by a constant uniformly and obtaining a new tentatively determined plutonium enrichment distribution; a step of iterating a step of returning to the third processing step for a new tentatively determined plutonium enrichment distribution obtained in the fourth processing step and performing the determination by calculating the infinite multiplication factor again until the difference between the infinite multiplication factors of the both becomes smaller than the convergence determining value; and a fifth processing step of determining the equivalent fissile coefficients by a method described in any one of the second to sixth aspects of the present invention based on the plutonium enrichments of the respective MOX fuel rods at a point of time when the difference between the infinite multiplication factors becomes smaller than the convergence determining value and the respective plutonium isotopic compositions, and designating them as the first equivalent coefficients; and the method iterates a series of work from the first processing step to the fifth processing step, each series of work uses the equivalent fissile coefficients determined in the fifth processing step of a previous round in the first processing step of a next round, and the work of the N-th round that is the last starts the first processing step using (N-1)-th equivalent coefficients and determines N-th equivalent coefficients in the fifth processing step.

## Advantageous Effects of Invention

The present invention can provide a method capable for setting equivalent fissile coefficients with the higher accuracy than the prior art by minimizing errors included in the equivalent fissile coefficients as a whole for more efficient design and manufacture of the MOX fuel assembly. Moreover, the present invention can also provide a method for setting equivalent fissile coefficients that make the reactivity equivalence to the base design more excellent also in the wide Pu composition range. Furthermore, the present invention can provide a method for determining the enrichment distribution for each fuel rod that makes a local power peaking factor equivalent to the base design also in an MOX fuel assembly with three kinds or more of enrichment types.

## Brief Description of Drawings

Fig. 1 is an outline design diagram showing an example of an MOX fuel assembly for BWRs that is targeted at in an embodiment of the present invention.

Fig. 2 is a comparison diagram of an average enrichment of the MOX fuel rod calculated using equivalent fissile coefficients determined in a first embodiment of the present invention and an average enrichment of the MOX fuel rods calculated with a lattice code.

Fig. 3 is a comparison diagram of an average enrichment of the MOX fuel rods calculated using equivalent fissile coefficients determined in a second embodiment of the present invention and an average enrichment of the MOX fuel rods calculated with the lattice code.

Fig. 4 is a diagrammatic drawing showing a statistic of a relative difference between a Pu enrichment obtained using the equivalent fissile coefficients for N = 0 to 6 and a Pu enrichment by the lattice code in the second embodiment of the present invention.

Fig. 5 is a flowchart diagram showing a processing procedure for obtaining zeroth equivalent fissile coefficients in a third embodiment of the present invention.

Fig. 6 is a flowchart diagram showing a processing procedure for obtaining N-th equivalent fissile coefficients in the third embodiment of the present invention.

Fig. 7 is a comparison diagram of an average enrichment of the MOX fuel rods calculated using the equivalent fissile coefficients determined in the third embodiment of the present invention and an average enrichment of the MOX fuel rods calculated with the lattice code.

Fig. 8 is a distribution chart showing a relative difference between an LPF of the assembly and an LPF of a base design for an enrichment distribution calculated using the equivalent fissile coefficients determined in the third embodiment of the present invention.

Fig. 9 is a flowchart diagram showing a processing procedure for obtaining zeroth equivalent fissile coefficients in a fourth embodiment of the present invention.

Fig. 10 is a flowchart diagram showing a processing procedure for obtaining N-th equivalent fissile coefficients in the fourth embodiment of the present invention.

Fig. 11 is a distribution chart showing a difference between an infinite multiplication factor in an EOC reactor core average burn-up calculated with the lattice code and an infinite multiplication factor of the base design for a Pu enrichment distribution determined by the equivalent fissile coefficients obtained in the fourth embodiment of the present invention.

Fig. 12 is a distribution chart showing a relative difference between the LPF in an early stage of burn-up and the LPF of the base design for the Pu enrichment distribution determined by the equivalent fissile coefficients obtained in the fourth embodiment of the present invention.

Fig. 13 is a first source program among FORTRAN 95 programs used for calculation to which a least squares method for obtaining equivalent fissile coefficients is applied in the first embodiment of the present invention.

Fig. 14 is a first half part of a second source program among the FORTRAN 95 programs used for calculation to which the least squares method for obtaining equivalent fissile coefficients is applied in the first embodiment of the present invention.

Fig. 15 is a second half part of the second source program.

Fig. 16 is a first half part of a third source program among the FORTRAN 95 programs used for calculation to which the least squares method for obtaining equivalent fissile coefficients is applied in the first embodiment of the present invention.

Fig. 17 is a second half part of the third source program.

Fig. 18 is a fourth source program among the FORTRAN 95 programs used for calculation to which the least squares method for obtaining equivalent fissile coefficients is applied in the first embodiment of the present invention.

Fig. 19 is a fifth source program among the FORTRAN 95 programs used for calculation to which the least squares method for obtaining equivalent fissile coefficients is applied in the first embodiment of the present invention.

Fig. 20 is a first half part of a sixth source program among the FORTRAN 95 programs used for calculation to which the least squares method for obtaining equivalent fissile coefficients is applied in the first embodiment of the present invention.

Fig. 21 is a second half part of the sixth source program.

Fig. 22 is a seventh source program among the FORTRAN 95 programs used for calculation to which the least squares method for obtaining equivalent fissile coefficients is applied in the first embodiment of the present invention.

Fig. 23 is an eighth source program among the FORTRAN 95 programs used for calculation to which the least squares method for obtaining equivalent fissile coefficients is applied in the first embodiment of the present invention.

Fig. 24 is a first half part of a source program that replaces the second source program of the first embodiment among the FORTRAN 95 programs used for calculation to which the least squares method for obtaining equivalent fissile coefficients is applied in the second embodiment of the present invention.

Fig. 25 is a second half part of the source program shown in Fig. 24.

Fig. 26 is a source program that replaces the fifth source program of the first embodiment among the FORTRAN 95 programs used for calculation to which the least squares method for obtaining equivalent fissile coefficients is applied in the second embodiment of the present invention.

Fig. 27 is a flowchart diagram showing a processing procedure for obtaining equivalent fissile coefficients assumed in Non-patent Literature 1 of the prior art.

Fig. 28 is a flowchart diagram showing a processing procedure for obtaining equivalent fissile coefficients for each Pu isotopic composition group assumed in Non-patent Literature 1 of the prior art.

Description of Embodiments

The present invention is a method for setting equivalent fissile coefficients for each predetermined nuclide used for determining a Pu enrichment corresponding to a Pu isotopic composition that is applied to an MOX fuel assembly to be manufactured as a nuclear fuel material by an equivalent fissile method. First, multiple Pu isotopic compositions that cover the range of the Pu isotopic compositions to be applied thereto are selected up to a number larger than the whole number of the equivalent fissile coefficients, the enrichment distribution of each MOX fuel rod is determined by multiplying the enrichment of each MOX fuel rod of a base design by a constant uniformly until it becomes equivalent in reactivity to a design serving as a predetermined base for each of the selected Pu isotopic composition, the average Pu enrichment $\varepsilon$ of the MOX fuel rods is obtained through calculation, and then the equivalent fissile coefficients are obtained by calculating an equation obtained by applying a least squares method to the equivalent fissile method using this average Pu enrichment $\varepsilon$ of the MOX fuel rods and data based on a weight ratio that each isotope occupies in uranium or Pu in each Pu isotopic composition.

Since it is considered to be possible to find an original amount of change of $k_\infty$ with error components arising from numerical calculation such as a iterative calculation cancelled mutually by obtaining the equivalent fissile coefficients of a certain nuclide based on results of a large number of calculation cases, not by using only one calculation result as a calculation case of $k_\infty$ that obtains the equivalent fissile coefficients of a certain nuclide, this method makes it possible to obtain significant equivalent fissile coefficients with numerical calculation errors of a lattice code excluded by obtaining equivalent fissile coefficients using results of lattice codes that are larger in number than the equivalent fissile coefficients to be obtained.

The present invention minimizes errors included in the equivalent fissile coefficients as a whole systematically by applying the least squares method "that is frequently used to obtain a solution for a state of excess determination" ("New Edition Handbook of Numerical Computation," ISBN4-274-07584-2, published by Ohmsha, Ltd., September 1990) in addition to the above method.

Application of the least squares method to the equivalent fissile method can be performed as follows. First, in order to apply the least squares method to an equation (1), the equation (1) is transformed into a following equation (2).
[Mathematical 11]

$$-\varepsilon \cdot c_{49} \cdot w_{49} = (1-\varepsilon) \cdot \sum_{m} (c_m \cdot w_m) + \varepsilon \sum_{n, n\neq 49} (c_n \cdot w_n) - E_{239} \qquad (2)$$

Since $C_{28} = 0$ and $C_{49} = 1$ hold, the above-mentioned equation (2) becomes a following equation (3).
[Mathematical 12]

$$-\varepsilon \cdot w_{49} = \sum_{m, m\neq 28} \left[ c_m \cdot w_m \cdot (1-\varepsilon) \right] + \sum_{n, n\neq 49} \left[ c_n \cdot w_n \cdot \varepsilon \right] - E_{239} \qquad (3)$$

In the present invention, when applying the least squares method to the equation (3), an average Pu enrichment $\varepsilon$ of MOX fuel rods that becomes equivalent in reactivity to the base design for a certain Pu composition is obtained in advance with a lattice code. Here, as a method for determining the enrichment of each MOX fuel rod, by multiplying the enrichment of each MOX fuel rod of the base design by a constant uniformly, an average enrichment of the MOX fuel rods is adjusted, and the enrichment distribution of the MOX fuel rods that becomes equivalent in reactivity to the base design is determined.

This is because generally in the MOX fuel assembly comprised of various kinds of enrichments, even when the Pu composition and the average enrichment of the MOX fuel rods are the same, $k_\infty$ differs slightly between designs that are different in enrichment distribution, the average enrichment of the MOX fuel rods that becomes equivalent in reactivity is affected by the enrichment distribution, and this influence appears as it is as errors of the equivalent fissile coefficients . In the present invention, in order to avoid this, the enrichment distribution of each MOX fuel rod is determined by a method that is clearly generalized with "the Pu enrichment of each MOX fuel rod of the base design is multiplied by a constant uniformly" and therefore has less arbitrariness. That is, it is important that continuous correlation holds between the Pu composition and the average enrichment of the MOX fuel rods that become equivalent in reactivity to the Pu composition.

The step of "multiplying the Pu enrichment of each MOX fuel rod of the base design by a constant uniformly" is as shown in the following a) to e).

a) First, enrichment distributions of the base design (enrichments $\varepsilon_1$ to $\varepsilon_4$ of respective fuel rod kinds), the average

enrichment $\varepsilon$ of the MOX fuel rods from them (standard average enrichment $\varepsilon$), a U/Pu composition (standard composition) used in the design concerned, and an infinite multiplication factor (standard infinite multiplication factor) $k_\infty$ at an EOC equivalent reactor core average burn-up evaluated with the lattice code for the design concerned are given as input values.

b) A U/Pu composition (a target composition) different from the standard composition is given.

c) The infinite multiplication factor $k_\infty^{(0)}$ at the EOC equivalent reactor core average burn-up is evaluated with the lattice code by using the standard enrichment distributions ($\varepsilon_1$ to $\varepsilon_4$, and $\varepsilon$) as the zeroth enrichment distributions ($\varepsilon_1^{(0)}$ to $\varepsilon_4^{(0)}$, and $\varepsilon^{(0)}$ and by combining them with the target composition. $k_\infty^{(0)}$ and $k_\infty$ are compared, and if their difference is within a convergence determining value (e.g., 0.00001), the calculation will be ended it is decided that the enrichment distribution that should be obtained has been obtained. If the difference is not within the convergence determining value, the flow will shift to the next step d).

d) The infinite multiplication factor $k_\infty^{(1)}$ is evaluated with the lattice code (U/Pu composition is the "target composition") by using an enrichment distribution calculated by a following equation D1 with a minute enrichment $\Delta\varepsilon$ set appropriately and $\varepsilon^{(0)}$ as a first enrichment distribution.

$$\varepsilon^{(1)} = \varepsilon^{(0)} - \Delta\varepsilon,\ \varepsilon_i^{(1)} = (\varepsilon^{(1)} / \varepsilon^{(0)})\ \varepsilon_i^{(0)},\ i = 1,\ 4 \ldots \text{Equation D1}$$

$k_\infty^{(1)}$ and $k_\infty$ are compared, and if their difference is a difference within the convergence determining value, the calculation will be ended it is decided that the enrichment distribution that should be obtained has been obtained. Otherwise, after calculating a parameter of a following equation D2, the flow will shift to the next step e).

$$a^{(1)} = (k_\infty^{(1)} - k_\infty^{(0)}) / (\varepsilon^{(1)} - \varepsilon^{(0)}) \ldots \text{Equation D2}$$

e) The infinite multiplication factor $k_\infty^{(n)}$ is evaluated with the lattice code (U/Pu composition is the "target composition") by using what was calculated by a following equation E1 as an n-th enrichment distribution. Incidentally, the evaluation value of a previous step are assumed to be an (n-1)-th evaluation value.

$$\varepsilon^{(n)} = \varepsilon^{(n-1)} - (k_\infty^{(n-1)} - k_\infty) / a^{(n-1)},\ \varepsilon_i^{(n)} = (\varepsilon^{(n)} / \varepsilon^{(n-1)})\ \varepsilon_i^{(n-1)},\ i = 1,\ 4 \ldots \text{Equation E1}$$

$k_\infty^{(n)}$ and $k_\infty$ are compared, and if their difference is a difference within the convergence determining value, the calculation will be ended it is decided that the enrichment distribution that should be obtained has been obtained. Otherwise, after calculating a parameter of a following equation E2, this step e) will be repeated again.

$$a^{(n)} = (k_\infty^{(n)} - k_\infty^{(n-1)}) / (\varepsilon^{(n)} - \varepsilon^{(n-1)}) \ldots \text{Equation E2}$$

Moreover, as the "reactivity equivalence," in a burn-up equivalent to an EOC reactor core average burn-up, the average Pu enrichment of the MOX fuel rods is adjusted until the infinite multiplication factor $k_\infty$ of the base design and $k_\infty$ of the MOX fuel assembly of a certain Pu composition come to agreement within a difference of, for example, 0.00001. Here, a reason why the " assembly average Pu enrichment" as in Non-patent Literature 1 is not used but the "average Pu enrichment of MOX fuel rods" is used is because in the MOX fuel assembly for BWRs, there exist the uranium fuel rods containing no Pu in the fuel assembly, as also shown in the example of Fig. 1. The MOX fuel for PWRs that is targeted in Non-patent Literature 1 contains no uranium fuel rod, and the assembly average Pu enrichment is equivalent to the average Pu enrichment of the MOX fuel rods.

Next, as the Pu composition that is an evaluation case, multiple Pu compositions are selected comprehensively for a specific fuel type, based on a burn-up history and a reprocessing scenario that are in conformity with reality. This is useful in a point that errors contained in the equivalent fissile coefficients can be minimized for actual MOX powder supplied from a reprocessing plant of a used nuclear fuel and in a point that a range of the errors can be statistically estimated by a statistic of the evaluated equivalent fissile coefficients. When using calculation results of multiple cases in each of which only a weight ratio of one nuclide is changed as is estimated from a description of Non-patent Literature 1, a concern that "an effect that the errors when obtaining equivalent fissile coefficients cancel each other is not necessarily expected" can be dispelled by a fact that an error accompanying the discontinuation of the iterative calculation appears in the calculation result with a tendency.

As described above, the equivalent fissile coefficients of the equation (1) are obtained by the least squares method using the average Pu enrichment ε of the MOX fuel rods that has been obtained in advance with multiple Pu compositions and the lattice code. Below, how to apply the least squares method to the equation (3) will be shown in detail. First, let a fitting formula treated in the least squares method be expressed like a following equation (4).
[Mathematical 13]

$$y(x_1, x_2, \ldots) = \sum_i c_i \cdot f_i(x_1, x_2, \ldots) \qquad (4)$$

Where

*x* : Variable of fitting function,
*y* : Fitting function,
*f* : Expansion function of fitting function,
*c* : Expansion coefficient of fitting function,
*i* : Subscript indicating expansion function of fitting function.

A following equation (5) is considered as data that should be fitted.
[Mathematical 14]

$$\begin{matrix} y_1 & x_{1,1} & x_{2,1} & \cdots \\ y_2 & x_{1,2} & x_{2,2} & \cdots \\ \vdots & \vdots & \vdots & \\ y_l & x_{1,l} & x_{2,l} & \cdots \\ \vdots & \vdots & \vdots & \end{matrix} \qquad (5)$$

Where

*l* : Subscript indicating a set of data to be fitted.

In the least squares method, expansion coefficients of a fitting function are determined so that a sum total of squares of residuals R between a fitting formula and fitting data may become a minimum. The residual R is expressed by a following equation (6).
[Mathematical 15]

$$\begin{aligned} R_l &= y_l - y(x_{1,l}, x_{2,l}, \ldots) \\ &= y_l - \sum_i c_i \cdot f_i(x_{1,l}, x_{2,l}, \ldots) \end{aligned} \qquad (6)$$

The sum total of the squares of the residuals R is expressed by a following equation (7).
[Mathematical 16]

$$\sum_l R_l^{\,2} = \sum_l \left[ y_l - \sum_i c_i \cdot f_i(x_{1,l}, x_{2,l}, \ldots) \right]^2 \qquad (7)$$

Regarding expansion coefficients $C_i$ that minimize the sum total of the squares of the residuals R, what is necessary is just to obtain variables $C_i$ that minimize "the sum total of the squares of the residuals R" when assuming "the sum total of the squares of the residuals R" to be a function of the expansion coefficients $C_i$. That is, what is necessary is to obtain variables $C_i$ each of which zeros out a differentiation of "the sum total of the squares of the residuals R" in terms of to the variable $C_i$. Mathematically, this can be represented by a following equation (8).
[Mathematical 17]

$$\begin{aligned}
0 &= \frac{\partial\left\{\sum_l R_l^2\right\}}{\partial c_i} \\
&= \frac{\partial\left\{\sum_l \left[y_l - y(x_{1,l}, x_{2,l}, \ldots)\right]^2\right\}}{\partial c_i} \\
&= \frac{\partial\left\{\sum_l \left[y_l - \sum_j c_j \cdot f_j(x_{1,l}, x_{2,l}, \ldots)\right]^2\right\}}{\partial c_i} \\
&= \sum_l \frac{\partial\left\{\left[y_l - \sum_j c_j \cdot f_j(x_{1,l}, x_{2,l}, \ldots)\right]^2\right\}}{\partial c_i} \\
&= \sum_l \left\{2 \cdot \left[y_l - \sum_j c_j \cdot f_j(x_{1,l}, x_{2,l}, \ldots)\right] \cdot \left[-f_i(x_{1,l}, x_{2,l}, \ldots)\right]\right\} \\
&= -2 \cdot \sum_l \left[y_l \cdot f_i(x_{1,l}, x_{2,l}, \ldots) - \sum_j c_j \cdot f_j(x_{1,l}, x_{2,l}, \ldots) \cdot f_i(x_{1,l}, x_{2,l}, \ldots)\right] \\
&= -2 \cdot \left\{\sum_l \left[y_l \cdot f_i(x_{1,l}, x_{2,l}, \ldots)\right] - \sum_l \sum_j c_j \cdot f_j(x_{1,l}, x_{2,l}, \ldots) \cdot f_i(x_{1,l}, x_{2,l}, \ldots)\right\} \\
&= -2 \cdot \left\{\sum_l \left[y_l \cdot f_i(x_{1,l}, x_{2,l}, \ldots)\right] - \sum_j \left[c_j \cdot \sum_l \left(f_j(x_{1,l}, x_{2,l}, \ldots) \cdot f_i(x_{1,l}, x_{2,l}, \ldots)\right)\right]\right\} \\
&= -2 \cdot \left\{b_i - \sum_j \left[a_{ij} \cdot c_j\right]\right\}
\end{aligned} \quad (8)$$

Where

$$a_{ij} = \sum_l \left[f_i(x_{1,l}, x_{2,l}, \ldots) \cdot f_j(x_{1,l}, x_{2,l}, \ldots)\right]$$

$$b_i = \sum_l \left[y_l \cdot f_i(x_{1,l}, x_{2,l}, \ldots)\right]$$

Therefore, what is necessary is just to obtain $C_i$ that satisfies a relationship of a following equation (9) for each of the expansion coefficients $C_i$.
[Mathematical 18]

$$\begin{array}{lcl} \sum_j \left[a_{1j} \cdot c_j\right] & = & b_1 \\ \sum_j \left[a_{2j} \cdot c_j\right] & = & b_2 \\ \vdots & \vdots & \vdots \\ \sum_j \left[a_{ij} \cdot c_j\right] & = & b_i \\ \vdots & \vdots & \vdots \end{array} \qquad (9)$$

The above-mentioned equation (9) is expressed like a following equation (10) using a matrix.
[Mathematical 19]

$$\mathbf{AC} = \mathbf{B} \qquad (10)$$

Where

**A** : Square matrix having $a_{ij}$ as elements,
**B** : Vector having $b_i$ as elements,
**C** : Vector having expansion coefficients $c_i$ of fitting function as elements.

Therefore, the expansion coefficients $C_i$ are calculated by a following equation (11).
[Mathematical 20]

$$\mathbf{C} = \mathbf{A}^{-1}\,\mathbf{B} \qquad (11)$$

In order to apply the above least squares method to the equation (3), the expansion coefficients are made to correspond with the equation (4) of the least squares method as shown in the following equations (12), respectively.
[Mathematical 21]

$$
\begin{aligned}
y &:= -\varepsilon \cdot w_{49} \\
x_1 &:= w_{24} \cdot (1-\varepsilon) \\
x_2 &:= w_{25} \cdot (1-\varepsilon) \\
x_3 &:= w_{26} \cdot (1-\varepsilon) \\
x_4 &:= w_{48} \cdot \varepsilon \\
x_5 &:= w_{40} \cdot \varepsilon \\
x_6 &:= w_{41} \cdot \varepsilon \\
x_7 &:= w_{42} \cdot \varepsilon \\
x_8 &:= w_{51} \cdot \varepsilon
\end{aligned}
$$

$$
\begin{aligned}
c_1 &:= c_{24} &;\quad f_1(x_1, x_2, \ldots x_8) &:= x_1 \\
c_2 &:= c_{25} &;\quad f_2(x_1, x_2, \ldots x_8) &:= x_2 \\
c_3 &:= c_{26} &;\quad f_3(x_1, x_2, \ldots x_8) &:= x_3 \\
c_4 &:= c_{48} &;\quad f_4(x_1, x_2, \ldots x_8) &:= x_4 \\
c_5 &:= c_{40} &;\quad f_5(x_1, x_2, \ldots x_8) &:= x_5 \\
c_6 &:= c_{41} &;\quad f_6(x_1, x_2, \ldots x_8) &:= x_6 \\
c_7 &:= c_{42} &;\quad f_7(x_1, x_2, \ldots x_8) &:= x_7 \\
c_8 &:= c_{51} &;\quad f_8(x_1, x_2, \ldots x_8) &:= x_8 \\
c_9 &:= -E_{239} &;\quad f_9(x_1, x_2, \ldots x_8) &:= 1
\end{aligned}
\qquad (12)
$$

Therefore, the enrichment distribution of each MOX fuel rod for the each Pu composition is determined by the following steps: various kinds of Pu compositions are prepared considering a BWR fuel as a target; and the enrichment of the each MOX fuel rod of the base design is multiplied by a constant uniformly with the above-mentioned lattice code until the enrichment becomes equivalent in reactivity to the base design. Together with this, the average Pu enrichment $\varepsilon$ of the MOX fuel rods has been obtained in advance. Subsequently, the equivalent fissile coefficients ($C_{24}$, $C_{25}$, $C_{26}$, $C_{48}$, $C_{40}$, $C_{41}$, $C_{42}$, and $C_{51}$) are obtained by the following steps: y and $x_1$ to $x_8$ of an equation (12) are set from that enrichment $\varepsilon$ and a weight ratio w of each nuclide based on each Pu composition; and the equation (11) is calculated by bringing these pieces of data into correspondence.

According to the above method, as shown in a below-mentioned first embodiment, it is possible to determine high accurate equivalent fissile coefficients that cannot be achieved by the conventional technologies including Non-patent Literature 1.

Moreover, when setting the equivalent fissile coefficients by applying the least squares method as described above, by making each of the equivalent fissile coefficients have a dependence on the composition fraction of the isotopes of one kind or more having a largest macroscopic cross section in Pu, it is possible to determine only one the set of the equivalent fissile coefficients that have an extremely high accuracy to an extremely wide Pu composition region as follows.

The conventional technologies including Non-patent Literature 1 could not but take a symptomatic action such that region dividing of the Pu composition is made finer and finer in increasing the accuracy because of linearity of the basic equation (1) of the equivalent fissile method as described above.

First of all, it is considered that a reason why the linearity of the basic equation (1) does not hold for a wide composition range of some extent is that a neutron spectrum in the fuel assembly changes with a change of the Pu composition, which affects a reactivity worth of each nuclide, i.e., the equivalent fissile coefficients. This will be explained as follows. First, the reactivity worth of the nuclide depends on an absorption reaction rate and a nuclear fission reaction rate of the nuclide concerned, and these reaction rates depend on multiplication of an absorption cross section and a fission cross section by a neutron flux. On the other hand, since these absorption cross section and fission cross section are different depending on each nuclide, and in addition, have dependencies on energy of neutrons and the neutron spectrum is defined as a distribution to neutron energy of the neutron flux, the reactivity worth of each nuclide will change due to a change of the neutron spectrum.

The neutron spectrum itself depends on absorption and scattering cross sections of the fuel material in the fuel rod and of a structural material and a coolant in its periphery. The change of the Pu composition causes a change of the abundance of Pu isotope in the MOX fuel, i.e., a net absorption cross section of Pu isotope. The net absorption cross section of Pu isotope is obtained by multiplying the absorption cross section per atom of each isotope (termed a microscopic cross section) by the abundance in the fuel rod (atomic number density), and this physical quantity is termed the macroscopic cross section. Although the microscopic cross section differs according to each Pu isotope, when Pu239 is set to be a reference, those of Pu238 and Pu242 are about one fourth, that of Pu240 is about one half, and those of Pu241 and Am241 are about the same. Since Pu239 has a large microscopic cross section and its abundance itself is the largest as about 50 wt% to 80 wt%, Pu239 is the most dominant isotope in the macroscopic cross section in Pu. Although Pu240 has a not so much microscopic cross section, its abundance is as much as 13 wt% to 35 wt%, being relatively larger than those of other isotopes (about 10 wt% at most) except for Pu239. Therefore, it can be said that Pu240 is a comparatively dominant isotope in the macroscopic cross section in Pu, next to Pu239.

As described above, although the neutron spectrum is affected by the change of the Pu composition, since especially abundances of Pu239 and Pu240 are considered to be dominant, it is conceivable that while indices of subgrouping in Non-patent Literature 1 are nuclides of Pu239 and Pu242, grouping is performed by substituting them with nuclides of Pu239 and Pu240. However, with only this, some accuracy improvement can only be expected.

Therefore,in the presentinvention,equivalentfissile coefficients themselves are made to have neutron spectrum dependence, that is, a dependence on an isotope that is selected in a decreasing order of the macroscopic cross section. The number N of the selected isotope nuclide is unity or more, and an actual number is appropriately set depending on an application composition range and required accuracy. First, the equivalent fissile coefficients are expressed as functions shown in a following equation (13a), departing from the conventional constant values, and correspondence with the function when the least squares method is applied is as shown in an equation (14a).

[Mathematical 22]

$$
\begin{aligned}
c_{m(k)} &= 0, && k=1\\
c_{m(k)} &= c_{m(k),0} + \sum_{k'=1}^{N} c_{m(k),n(k')} \cdot w_{n(k')}, && k>1\\
c_{n(k)} &= 1, && k=1\\
c_{n(k)} &= c_{n(k),0} + \sum_{k'=1}^{N'} c_{n(k),n(k')} \cdot w_{n(k')}, && k>1
\end{aligned}
\qquad (13a)
$$

Where

- *m*(*k*) : Sequence (example: {28, 24, 25, 26}), arrangement of an integer symbol 28 of first term (subscript *k* = 1) indicating U238 that is trivial as equivalent fissile coefficient plus subsequent terms (subscript *k* = 2, ...) of integer terms each indicating uranium isotope nuclide that is nontrivial as equivalent fissile coefficient and should be taken into consideration,
- *n*(*k*) : Sequence (example: {49, 40, 41, 42, 51, 48}), arrangement of an integer symbol 49 of first term (subscript *k* = 1) indicating Pu239 that is trivial as equivalent fissile coefficient plus subsequent terms (subscript *k* = 2, ...) of integer terms each indicating Pu isotope nuclide that is nontrivial as equivalent fissile coefficient and should be taken into consideration (Am241 is also included conveniently) (however, for subscript *k* = 2 and subsequent *k's*, in decreasing order of macroscopic cross section),
- *N* : Number of Pu isotopes that should be taken into consideration when providing dependence on composition fraction of Pu isotope to equivalent fissile coefficients,
- *N'* : Lesser of *N* and *k*-1 (*N':* = min{*N*, *k*-1}).

[Mathematical 23]

$$
\begin{aligned}
y &:= -\varepsilon \cdot w_{49} \\
x_{m(k),0} &:= (1-\varepsilon)\cdot w_{m(k)} \quad , \quad x_{m(k),n(k')} := x_{m(k),0} \cdot w_{n(k')} \quad ; \quad k > 1,\ k' = 1, .., N \\
x_{n(k),0} &:= \varepsilon \cdot w_{n(k)} \quad , \quad x_{n(k),n(k')} := x_{n(k),0} \cdot w_{n(k')} \quad ; \quad k > 1,\ k' = 1, ..., N' \\
f_{m(k),0} &:= x_{m(k),0} \quad , \quad f_{m(k),n(k')} := x_{m(k),n(k')} \quad ; \quad k > 1,\ k' = 1, ..., N \\
f_{n(k),0} &:= x_{n(k),0} \quad , \quad f_{n(k),n(k')} := x_{n(k),n(k')} \quad ; \quad k > 1,\ k' = 1, ..., N' \\
f_{49,0} &:= 1
\end{aligned}
\tag{14a}
$$

For example, in the case where isotopes Pu239, Pu240 of N = 2 are selected in the decreasing order of the macroscopic cross section, the largest the first, and these two nuclides are made to have the dependence, the equivalent fissile coefficients are expressed as functions to the composition fractions of Pu239 and Pu240 shown in a following equation (13b) departing from the conventional constant value, and subsequently the least squares method is applied thereto.

[Mathematical 24]

$$
\begin{aligned}
c_{24}(w_{49},w_{40}) &= c_{24,0} + c_{24,49}\cdot w_{49} + c_{24,40}\cdot w_{40} \\
c_{25}(w_{49},w_{40}) &= c_{25,0} + c_{25,49}\cdot w_{49} + c_{25,40}\cdot w_{40} \\
c_{26}(w_{49},w_{40}) &= c_{26,0} + c_{26,49}\cdot w_{49} + c_{26,40}\cdot w_{40} \\
c_{28} &= 0 \\
c_{48}(w_{49},w_{40}) &= c_{48,0} + c_{48,49}\cdot w_{49} + c_{48,40}\cdot w_{40} \\
c_{49} &= 1 \\
c_{40}(w_{49}) &= c_{40,0} + c_{40,49}\cdot w_{49} \\
c_{41}(w_{49},w_{40}) &= c_{41,0} + c_{41,49}\cdot w_{49} + c_{41,40}\cdot w_{40} \\
c_{42}(w_{49},w_{40}) &= c_{42,0} + c_{42,49}\cdot w_{49} + c_{42,40}\cdot w_{40} \\
c_{51}(w_{49},w_{40}) &= c_{51,0} + c_{51,49}\cdot w_{49} + c_{51,40}\cdot w_{40}
\end{aligned}
\tag{13b}
$$

Here, the coefficients C of the right-hand side of the above-mentioned equation (13b) are all constant values. In order to deal with this equation (13b) by the least squares method, a following equation (14b) is used.

[Mathematical 25]

$$
\begin{aligned}
&y := -\varepsilon \cdot w_{49} \\
&x_1 := w_{24} \cdot (1-\varepsilon) \;;\; x_2 := w_{49} \cdot x_1 \;;\; x_3 := w_{40} \cdot x_1 \\
&x_4 := w_{25} \cdot (1-\varepsilon) \;;\; x_5 := w_{49} \cdot x_4 \;;\; x_6 := w_{40} \cdot x_4 \\
&x_7 := w_{26} \cdot (1-\varepsilon) \;;\; x_8 := w_{49} \cdot x_7 \;;\; x_9 := w_{40} \cdot x_7 \\
&x_{10} := w_{48} \cdot \varepsilon \;;\; x_{11} := w_{49} \cdot x_{10} \;;\; x_{12} := w_{40} \cdot x_{10} \\
&x_{13} := w_{40} \cdot \varepsilon \;;\; x_{14} := w_{49} \cdot x_{13} \\
&x_{15} := w_{41} \cdot \varepsilon \;;\; x_{16} := w_{49} \cdot x_{15} \;;\; x_{17} := w_{40} \cdot x_{15} \\
&x_{18} := w_{42} \cdot \varepsilon \;;\; x_{19} := w_{49} \cdot x_{18} \;;\; x_{20} := w_{40} \cdot x_{18} \\
&x_{21} := w_{51} \cdot \varepsilon \;;\; x_{22} := w_{49} \cdot x_{21} \;;\; x_{23} := w_{40} \cdot x_{21} \\
\\
&c_1 := c_{24,0} \;;\; c_2 := c_{24,49} \;;\; c_3 := c_{24,40} \\
&c_4 := c_{25,0} \;;\; c_5 := c_{25,49} \;;\; c_6 := c_{25,40} \\
&c_7 := c_{26,0} \;;\; c_8 := c_{26,49} \;;\; c_9 := c_{26,40} \\
&c_{10} := c_{48,0} \;;\; c_{11} := c_{48,49} \;;\; c_{12} := c_{48,40} \\
&c_{13} := c_{40,0} \;;\; c_{14} := c_{40,49} \\
&c_{15} := c_{41,0} \;;\; c_{16} := c_{41,49} \;;\; c_{17} := c_{41,40} \\
&c_{18} := c_{42,0} \;;\; c_{19} := c_{42,49} \;;\; c_{20} := c_{42,40} \\
&c_{21} := c_{51,0} \;;\; c_{22} := c_{51,49} \;;\; c_{23} := c_{51,40} \\
&c_{24} := -E_{239} \\
&f_n(x_1, x_2, \ldots x_{23}) := x_n, \; n < 24 \\
&f_n(x_1, x_2, \ldots x_{23}) := 1, \; n = 24
\end{aligned}
\tag{14b}
$$

Therefore, if various Pu compositions are prepared targeting the BWR fuels, the average Pu enrichment $\varepsilon$ of the MOX fuel rods that becomes equivalent in reactivity to the base design is obtained with the lattice code, and y and $x_1$ to $x_{23}$ of the equation (14b) are set, the equivalent fissile coefficients ($C_{24}$, $C_{25}$, $C_{26}$, $C_{48}$, $C_{40}$, $C_{41}$, $C_{42}$, and $C_{51}$) that are made to have the dependences of Pu239 and Pu240 being main Pu isotopes can be calculated by calculating the equation (11) from these pieces of data.

In the above method, as shown in a below-mentioned second embodiment, in all cases where N = 1 to 6 is set as the number of nuclides that are considered with respect to a dependence on a composition fraction of Pu isotope, the accuracy of the enrichment obtained by using the obtained equivalent fissile coefficients was high compared with that of the case where such dependence was not considered. Incidentally, since saturation tendency was shown for N = 3 or more in the result of the embodiment, N = 1 and N = 2 are suitable practically.

As described above, according to the method, it becomes possible to determine only one set of equivalent fissile coefficients that have extremely high accuracies to an extremely wide Pu composition region, which was completely impossible by the conventional technologies including Non-patent Literature 1. A method in which such an isotope whose macroscopic cross section in Pu is the largest is paid attention to and the equivalent fissile coefficients are made to have its dependence thereon can be said a new equivalent fissile method.

Incidentally, a determination procedure of the above equivalent fissile coefficients can be expressed by a flowchart shown in Fig. 5.

Moreover, in the present invention, by using the above method for setting the equivalent fissile coefficients, it is made possible to realize a method for determining the enrichment distribution of each fuel rod that makes the LPF equivalent to the base design for an MOX fuel with three kinds or more of enrichment types that has not been found heretofore.

That is, since if the Pu enrichment whose reactivity is equivalent in the unit of the MOX fuel rod is determined, it is expected that the reactivity distribution of each fuel rod will become equivalent to the base design and the power distribution will also become equivalent to the base design, the present inventors has considered that an $E_{239}$ enrichment that has been heretofore defined only for the average enrichment of the MOX fuel rods is defined for each Pu enrichment type, and has found the method as follows.

Strictly, it is considered that the neutron spectrum differs for each arrangement position in the fuel assembly of the MOX fuel rods, and the equivalent fissile coefficients become also different. In the Patent Literature 1, based on such an idea, the equivalent fissile coefficients are individually obtained in "the inner layer and intermediate layer regions" and the "outer layer region."

Therefore, first for simplicity, in the present invention, common values are used as the equivalent fissile coefficients of each region, and only the $E_{239}$ enrichment is defined for each Pu enrichment type. A determination procedure of the $E_{239}$ enrichment for each Pu enrichment type will be explained below using a flowchart diagram of Fig. 6.

This method uses the equivalent fissile coefficients obtained by the procedure shown in Fig. 5, terming them zeroth equivalent coefficients . In this stage, the Pu enrichment for each MOX fuel rod is the Pu enrichment of the base design simply multiplied by a constant.

In the processing 1 in Fig. 6, first, assuming N = 1, the $E_{239}$ enrichment for each MOX fuel rod of the base design is determined using the zeroth equivalent coefficients obtained previously. Here, in the base design, since the Pu enrichment for each MOX fuel rod is known, the $E_{239}$ enrichment can be obtained by calculating back the equation (1) using the zeroth equivalent coefficients.

In the processing 2, for each Pu composition, the Pu enrichment of each MOX fuel rod is obtained from the equation (1) and the zeroth equivalent coefficients so as to become equal to the $E_{239}$ enrichment of the base design that was obtained by the processing 1 and is designated as a tentatively determined value.

In the processing 3, $k_\infty$ is calculated with the lattice code for a Pu enrichment distribution that was tentatively determined by the processing 2, whether it is equivalent in reactivity to the base design (whether it agrees with the $k_\infty$ of the base design within a difference of 0.00001) is determined. If it is not equivalent in reactivity, in the processing 4, the adjustment is performed by multiplying the Pu enrichment of each MOX fuel rod by a constant uniformly from the Pu enrichment distribution tentatively determined in the processing 2.

When the Pu enrichment that is equivalent in reactivity to the base design is obtained for each Pu composition as a result of the iterative calculation of the processings 3 and 4, by setting y and x1 to x23 of the equation (14b) and calculating the equation (11) using these average Pu enrichments $\varepsilon$ of the MOX fuel rods in a similar manner as the processing 6 of the procedure shown in Fig. 5, as the processing 5, the equivalent fissile coefficients that are made to have the dependence of Pu239 and Pu 240 are determined, and these are designated as the first equivalent coefficients.

Based on these first equivalent coefficients, the number of isotope nuclides is regarded as N = 2 and the second equivalent coefficients is determined by procedures from the processing 1 to the processing 5. Thereafter, similarly, N-th equivalent coefficients plus smaller order equivalent coefficients are obtained by iterating the procedures from the processing 1 to the processing 5 using (N-1) -th equivalent coefficients until the equivalent fissile coefficients converge sufficiently. The equivalent fissile coefficients thus obtained are only one set of equivalent fissile coefficients that enables the enrichment having an extremely high accuracy of reactivity equivalence and LPF equivalence to be determined for an extremelywide Pu composition region that has been hitherto completely impossible by the conventional technologies including Non-patent Literature 1 and Patent Literature 1, as shown in a below-mentioned third embodiment.

Incidentally, although the equivalent fissile coefficients that were the same themselves in all regions in the fuel assembly were used in the above method, in order to determine the equivalent fissile coefficients that can realize higher accuracy of LPF equivalence, the equivalent fissile coefficients may be obtained for each region in which its enrichment type is the same (meaning almost the same as a region in which the neutron spectrum in the assembly is equivalent).

The equivalent fissile coefficients of each region can be obtained by the procedures that follow the processing 1 to the processing 6 shown in the flowchart diagram of Fig. 9. First, the processing 1 and the processing 2 set the base design and select appropriately the Pu composition group to which the application is performed similarly with the processing 1 and the processing 2 in Fig. 5 and Fig. 6.

First, when the Pu enrichments are four kinds, denoting power sharing of each enrichment by $ALPF_i$ (an average power of the fuel rods whose Pu enrichment types are the same after normalizing the average of the fuel rod power distribution in the assembly so that it may become unity), a relationship of a following equation (17) holds because the fuel rod powers in the assembly are normalized.

[Mathematical 26]

$$1 = \frac{\sum_{i=1} N_i \cdot ALPF_i}{\sum_{i=1} N_i} \qquad (17)$$

Where $N_i$ is the number of the fuel rods of type i. In the example of Fig. 1, as the fuel rod types, there are uranium fuel rods not containing plutonium in addition to four kinds of the MOX fuel rod types. Although the power sharing of the uranium fuel rods can be changed relatively by changing the enrichment of the entire MOX fuel rods, it is substantially difficult to adjust the power itself of the uranium fuel rod to a desired value because of necessity of determining the average enrichment of the MOX fuel rods in order to make the reactivity equivalent.

On the other hand, regarding the MOX fuel rods, although it is possible to freely adjust the power sharing of each enrichment by changing the Pu enrichment individually, nevertheless, it is impossible to determine the enrichment distribution that realizes target power sharing simultaneously for four kinds of the MOX fuel rod types. This can be said so because, for example, supposing that i = 1 corresponds to "a certain fuel rod type" and the power sharing is known for remaining fuel rod types, the power sharing of the fuel rod type of i = 1 is decided self-evidently from the equation (17) as a following equation (18). That is, this denotes that among four kinds of the MOX fuel rod types, only adjustment of power sharing of three kinds is possible.

[Mathematical 27]

$$ALPF_1 = \frac{\sum_{i=1} N_i - \sum_{i=2} N_i \cdot ALPF_i}{N_1} \qquad (18)$$

This constraint condition applies similarly to the power sharing $LPF_i$ of each enrichment (a maximum power of the fuel rods whose Pu enrichment types are the same after the fuel rod power distributions in the assembly are normalized so that the average thereof may become unity). Below, this embodiment will be described regarding adjustment of the power sharing of the $LPF_i$.

First, among four kinds of the MOX fuel rod types, as Pu enrichment types whose power sharing is adjusted, those other than the Pu enrichment type whose $LPF_i$ is a minimum are selected. As subscripts indicating the selected Pu enrichment type, i = 1 to 3 are used, and a subscript indicating the non-selected Pu enrichment type is set to i = 4.

Next, a sensitivity that the Pu enrichment gives the power sharing of any one of i = 1 to 3 when the Pu enrichment of Pu enrichment type 1 changes by $\Delta\varepsilon_1$ is defined as a following equation (19a). Although a value of $\Delta\varepsilon_1$ may be any value as long as it is a significant infinitesimal quantity, in a later-described embodiment, the value is set to one obtained by multiplying the Pu enrichment by 0.05.

[Mathematical 28]

$$a_{i,1} = \frac{\Delta LPF_{i,1}}{\Delta\varepsilon_1} \qquad (19a)$$

Where $\Delta LPF_{i,1}$ is an $LPF_i$ after enrichment fluctuation minus a value before the enrichment fluctuation (both are calculated values with the lattice code, and are normalized so that an average of the fuel rod power distribution in the assembly may become unity). Moreover, when the enrichment of the Pu enrichment type 1 is changed by $\Delta\varepsilon_1$, the enrichments of the remaining Pu enrichment types 2 and 3 that are targets of the power sharing adjustment are not altered. Furthermore, regarding Pu enrichment type 4 that is exempt from the targets of the power sharing adjustment, the enrichment is adjusted so that the average Pu enrichment of the MOX fuel rods may not be changed between before and after the enrichment fluctuation of the Pu enrichment type 1. Similarly, regarding Pu enrichment type 2, a following equation (19c) is defined; regarding Pu enrichment type 3, a following equation (19b) is defined, respectively.

[Mathematical 29]

$$a_{i,2} = \frac{\Delta LPF_{i,2}}{\Delta\varepsilon_2} \qquad (19b)$$

[Mathematical 30]

$$a_{i,3} = \frac{\Delta LPF_{i,3}}{\Delta\varepsilon_3} \qquad (19c)$$

An influence that the Pu enrichment type i gives to the power sharing when the Pu enrichments of the Pu enrichment types 1 to 3 change, respectively, is expressed by a following equation (20) by assuming that it is expressed by a linear combination of effects of the equation (19a) to the equation (19c).
[Mathematical 31]

$$\Delta LPF_i = a_{i,1} \cdot \Delta\varepsilon_1 + a_{i,2} \cdot \Delta\varepsilon_2 + a_{i,3} \cdot \Delta\varepsilon_3 \qquad (20)$$

Therefore, a matrix representation of the equation (20) becomes a following equation (21).
[Mathematical 32]

$$\begin{bmatrix} a_{1,1} & a_{1,2} & a_{1,3} \\ a_{2,1} & a_{2,2} & a_{2,3} \\ a_{3,1} & a_{3,2} & a_{3,3} \end{bmatrix} \begin{bmatrix} \Delta\varepsilon_1 \\ \Delta\varepsilon_2 \\ \Delta\varepsilon_3 \end{bmatrix} = \begin{bmatrix} \Delta LPF_1 \\ \Delta LPF_2 \\ \Delta LPF_3 \end{bmatrix} \qquad (21)$$

Next, denoting Pu enrichment distribution before Pu enrichment adjustment by $\varepsilon_i^{(0)}$, the power sharing by $LPFi^{(0)}$, and the target power sharing by $LPF_i^T$, the Pu enrichment distribution that realizes the $LPF_i^T$ is estimated by a following equation (22).
[Mathematical 33]

$$\varepsilon_i^{(n)} = \varepsilon_i^{(n-1)} + \Delta\varepsilon_i^{(n)} \qquad (22)$$

Where n is assumed to be n = 1. $\Delta\varepsilon_i^{(1)}$ is obtained by a following equation (23) from a relationship of the equation (21).
[Mathematical 34]

$$\begin{bmatrix} \Delta\varepsilon_1^{(n)} \\ \Delta\varepsilon_2^{(n)} \\ \Delta\varepsilon_3^{(n)} \end{bmatrix} = \begin{bmatrix} a_{1,1} & a_{1,2} & a_{1,3} \\ a_{2,1} & a_{2,2} & a_{2,3} \\ a_{3,1} & a_{3,2} & a_{3,3} \end{bmatrix}^{-1} \begin{bmatrix} \Delta LPF_1^{(n-1)} \\ \Delta LPF_2^{(n-1)} \\ \Delta LPF_3^{(n-1)} \end{bmatrix} \qquad (23)$$

Where $\Delta LPF_i^{(0)}$ is expressed by a following equation (24).
[Mathematical 35]

$$\Delta LPF_i^{(n-1)} = LPF_i^T - LPF_i^{(n-1)} \qquad (24)$$

Where

$LPF_i^T$ : Predetermined desired value of maximum output of fuel rod of enrichment type *i*.

Incidentally, regarding the enrichment of the Pu enrichment type 4 that is exempt from the targets of power sharing adjustment, the enrichment is adjusted so that the average Pu enrichment of the MOX fuel rods may not change between before and after the enrichment adjustment. A power sharing obtained by the calculation with the lattice code is designated as $LPF_i^{(1)}$ for the Pu enrichment distribution $\varepsilon_i^{(1)}$ adjusted by the equation (22). $\Delta$ $LPF_i^{(1)}$ is calculated with n = 2 set in the equation (24).

When an absolute value of the $\Delta$ $LPF_i^{(1)}$ is a sufficiently small value, for example, less than or equal to 0.00002 in the case of this embodiment, it is considered that the Pu enrichment distribution realizing the target power sharing $LPF_i^T$ is obtained, and what is determined by the equation (22) is designated as the Pu enrichment distribution that should be set in the processing 3 of Fig. 3. However, when the absolute value of the $\Delta LPF_i^{(1)}$ is not a sufficiently small value, a new Pu enrichment distribution is calculated with n = 2 set in the equation (22), $\Delta$ $LPF_i^{(n)}$ is obtained from the $LPF_i^{(n)}$ calculated with the lattice code for the enrichment distribution, and the above procedure is iterated until its absolute value becomes a sufficiently small value.

According to the method that follows the procedure shown in the above Fig. 9, it becomes possible to determine the enrichment distribution equivalent in LPF and reactivity to the base design also in the case of the MOX fuel with three kinds or more of enrichment types. This is completely impossible in the conventional technologies including Patent Literature 1, or the technology has not found a method of application.

Incidentally, if the enrichment distribution is determined using the LBU (here, it is defined as a maximum burn-up in the end of life of the MOX fuel assembly, etc. in the fuel rod of each enrichment type), it will be also possible to make the burn-up distribution in the end of life of the MOX fuel assembly, etc. equivalent to that of the base design. In this case, a sensitivity that the Pu enrichment affects the maximum burn-up of any one of i = 1 to 3 when it changes by $\Delta\varepsilon_1$ is defined by a following equation (25) for each of the Pu enrichment types 1 to 3, the Pu enrichment distribution that gives the target maximum burn-up is estimated by the equation (26) using the equation (27) and the equation (28), and the same procedure as that of the case of the LPF is iterated until an absolute value of $\Delta LBF_i^{(n)}$ becomes a sufficiently small value.

[Mathematical 36]

$$a_{i,j} = \Delta LBU_{i,j} / \Delta\varepsilon_j \qquad (25)$$

[Mathematical 37]

$$\varepsilon_i^{(n)} = \varepsilon_i^{(n-1)} + \Delta\varepsilon_i^{(n)} \qquad (26)$$

[Mathematical 38]

$$\begin{bmatrix} \Delta\varepsilon_1^{(n)} \\ \Delta\varepsilon_2^{(n)} \\ \Delta\varepsilon_3^{(n)} \end{bmatrix} = \begin{bmatrix} a_{1,1} & a_{1,2} & a_{1,3} \\ a_{2,1} & a_{2,2} & a_{2,3} \\ a_{3,1} & a_{3,2} & a_{3,3} \end{bmatrix}^{-1} \begin{bmatrix} \Delta LBU_1^{(n-1)} \\ \Delta LBU_2^{(n-1)} \\ \Delta LBU_3^{(n-1)} \end{bmatrix} \qquad (27)$$

[Mathematical 39]

$$\Delta LBU_i^{(n-1)} = LBU_i^T - LBU_i^{(n-1)} \qquad (28)$$

Where

$LBU_i^T$ : Predetermined desired value of maximum burn-up of fuel rod of enrichment type *i.*

Moreover, although in the above procedure, a physical quantity of a target of design optimization of each Pu enrichment type is designated to be the LPF or LBU, it is also possible to select a parameter termed an R factor that is necessary to calculate a minimum critical power ratio that is a thermal limit value during operation in place of the LPF and the LBU.

Furthermore, in the above procedure, although a value of the base design was adopted as the desired value of the physical quantity of the target of design optimization, in an actual design, it is conceivable that from a viewpoint of optimizing a reactor core characteristic for each Pu composition, the physical quantity of the target of design optimization of each Pu composition is differentiated from the value of the base design intentionally. Also in this case, by predetermining the physical quantity of the target of design optimization of each Pu composition based on the optimal design, it is also possible to set the predetermined physical quantity as the desired value in place of the value of the base design. For example, it is possible to predetermine the physical quantity of the target of design optimization that is expressed as a function of the Puf fraction dependence, and to set this as the desired value.

First Embodiment

As a first embodiment of the present invention, a case where the equation (12) is applied to the MOX fuel assembly for BWRs of the design shown in Fig. 1 will be shown below.

First, as Pu compositions that are targeted, 56 compositions that are targeted to the BWR fuels and have been evaluated with respect to various degrees of enrichment, burn-up histories, and periods to reprocessing based on reality are prepared. Further, for these compositions, three cases are assumed with respect to a period necessary to be loaded as a MOX fuel after the reprocessing, and total 168 compositions (56 compositions x three cases) that have been evaluated are prepared.

Among them, 43 compositions coming under a group 1 of Non-patent Literature 1 were selected, and total 50 compositions consisting of these plus seven compositions (Table 3.2 of Non-patent Literature 1 being referred to) were prepared.

Next, by multiplying the Pu enrichment of each MOX fuel rod of the base design by a constant uniformly, until its reactivity becomes equivalent to that of the base design for each Pu composition, namely until its $k_\infty$ becomes equal to $k_\infty$ of the base design in the burn-up equivalent to the EOC reactor core average burn-up within a difference of 0.00001 in this embodiment, the Pu enrichment of each MOX fuel rod was adjusted, and the average Pu enrichment $\varepsilon$ of the MOX fuel rods for each Pu composition was obtained.

By the above, regarding the prepared 50 compositions, y, $x_1$ to $x_8$ of the equation (12) are set, respectively, from the obtained average enrichment $\varepsilon$ of the MOX fuel rods and a weight ratio w of each nuclide in the each Pu composition, and the equation (11) was calculated by bringing these pieces of data into correspondence, whereby the equivalent fissile coefficients ($C_{24}$, $C_{25}$, $C_{26}$, $C_{48}$, $C_{40}$, $C_{41}$, $C_{42}$, and $C_{51}$) were obtained. This calculation was conducted using FORTRAN 95 programs shown in Figs. 13 to 23 (these programs are copyrighted works of the present applicant). The results are as shown in a column of the group 1 of Table 1 below.

Furthermore, the equivalent fissile coefficients ($C_{24}$, $C_{25}$, $C_{26}$, $C_{48}$, $C_{40}$, $C_{41}$, $C_{42}$, and $C_{51}$) were obtained by selecting the Pu composition corresponding to each of groups 2 to 5 described in Non-patent Literature 1 by the same procedure, preparing these compositions to which respective compositions of the groups 2 to 5 described in Non-patent Literature 1, setting y and $x_1$ to $x_8$ of the equation (12), respectively, for each group, and calculating the equation (11) by bringing these pieces of data into correspondence using the FORTRAN 95 programs shown in Figs. 13 to 23. The results are shown in columns of the groups 2 to 5 of Table 1.

[Table 1]

| | Group | | | | |
|---|---|---|---|---|---|
| | 1 | 2 | 3 | 4 | 5 |
| $C_{24}$ | -0.7982 | 0.4325 | -0.2050 | -0.1591 | -0.3190 |
| $C_{25}$ | 0.9561 | 1.0348 | 1.0551 | 0.9729 | 0.8905 |
| $C_{26}$ | -0.3911 | -0.6725 | -0.7188 | -0.4277 | 0.7227 |
| $C_{28}$ | 0 | 0 | 0 | 0 | 0 |
| $C_{48}$ | -0.3886 | -0.3956 | -0.2523 | -0.0843 | 0.6137 |
| $C_{49}$ | 1 | 1 | 1 | 1 | 1 |
| $C_{40}$ | -0.3696 | -0.3083 | -0.2543 | -0.2032 | -0.1103 |
| $C_{41}$ | 1.2533 | 1.2558 | 1.1932 | 1.1603 | 1.0833 |
| $C_{42}$ | -0.4736 | -0.5844 | -0.6507 | -0.7950 | -1.3519 |
| $C_{51}$ | -1.3622 | -1.3677 | -1.2657 | -1.1726 | -1.1092 |
| $E_{239}$ | Eg1* | Eg2* | Eg3* | Eg4* | Eg5* |
| * : Eg1 to Eg5 are average $E_{239}$ enrichments of MOX rods in each composition group (being found as one of coefficients at the time of obtaining equivalent fissile coefficients with least squares method). | | | | | |

The average enrichment of the MOX fuel rods is obtained by using five sets of equivalent fissile coefficients obtained by the above procedure, and is compared with the average enrichment of the MOX fuel rods obtained with the lattice code, and its result is shown in Fig. 2. As is clear from the comparison diagram of Fig. 2, according to the method shown in this embodiment, comparing it with a case where a Puf enrichment obtained from the equivalent fissile coefficients in the method of Non-patent Literature 1 is compared with those obtained with the design code (Fig. 3.3 of Non-patent Literature 1), it is shown that it is possible to determine the equivalent fissile coefficients with a higher accuracy. Besides, in contrast to Non-patent Literature 1 where the Pu composition region is further divided into two subgroups in the groups 2 to 4, in this embodiment, the Pu composition region is dealt with without such division into the subgroups, and it is possible to determine the equivalent fissile coefficients with a higher accuracy in an evaluation of total 197 compositions that exceed three times or more the total 63 compositions that are evaluation targets in Non-patent Literature 1. Therefore, it can be said that an excellent method for determining the equivalent fissile coefficients that could not be achieved by conventional technologies including Non-patent Literature 1 was realized. Incidentally, the lattice code used in this embodiment and following embodiments is a lattice code revised NEUPHYS (improved version of a calculation code disclosed in "Fuel Assembly Nuclear Characteristics Calculation Technique of BWR" published by NUCLEAR FUEL INDUSTRIES, Ltd., NLR-01 Revision 1, April, Heisei 20(2008)).

Second Embodiment

Next, as a second embodiment of the present invention, a case where the equation (13b) and the equation (14b) in which a progression n(k) of the equation (13a) and the equation (14a) is set to be {49, 40, 41, 42, 51, 48} and the number of Pu nuclides that are considered with respect to a dependence on the composition fraction nuclide of Pu isotope is set to N = 2 are applied to the MOX fuel assembly for BWRs of the design shown in Fig. 1 is described below. As Pu compositions to which the equation (14b) is applied, total 237 compositions consisting of 168 compositions originating from the BWR fuel prepared in the first embodiment, 63 compositions of Non-patent Literature 1, and in addition to them, typical six compositions used to check an effect of fluctuation of the Pu composition in a design stage were prepared.

The Pu enrichment ε of each MOX fuel rod that is used in the least squares method was obtained similarly with the first embodiment. That is, by multiplying the Pu enrichment of each MOX fuel rod of the base design by a constant uniformly using the lattice code until its reactivity becomes equivalent to that of the base design (until its $k_\infty$ becomes equal to $k_\infty$ of the base design within a difference of 0.00001), the Pu enrichment of each MOX fuel rod was adjusted, and the average enrichment ε of the MOX fuel rods for each Pu composition was obtained. Here, regarding the base design, only one base design is used for the 237 compositions.

The equivalent fissile coefficients were obtained by setting y and $x_1$ to $x_{23}$ of the equation (14b) based on the obtained average enrichment ε of the MOX fuel rods and the weight ratio w for each nuclide in the prepared 237 compositions and then by calculating the equation (11) by bringing these pieces of data in correspondence. The calculation was conducted with programs shown in Fig. 24, Fig. 25, and Fig. 26 (these programs are copyrighted works of the present applicant) such that programs shown in Fig. 14, Fig. 15, and Fig. 19 among the FORTRAN 95 programs shown in Fig. 13 to Fig. 23 were changed a little in place of the programs of Fig. 14, Fig. 15, and Fig. 19. The obtained equivalent fissile coefficients are as shown in Table 2.

[Table 2]

| | $C_{xx,0}$ | $C_{xx,49}$ | $C_{xx,40}$ |
|---|---|---|---|
| $C_{24}$ | -4.1344 | 4.0217 | 3.0246 |
| $C_{25}$ | 0.5447 | 0.3882 | 1.0481 |
| $C_{26}$ | 1.8694 | -1.8192 | -4.5218 |
| $C_{28}$ | 0 | - | - |
| $C_{48}$ | -0.6255 | 0.7754 | -0.2585 |
| $C_{49}$ | 1 | - | - |
| $C_{40}$ | -0.7503 | 0.9235 | - |
| $C_{41}$ | 1.1621 | -0.1479 | 1.1632 |
| $C_{47}$ | 1.0322 | -1.9301 | -1.5534 |
| $C_{51}$ | -1.5456 | 1.2387 | -1.6384 |
| | | | |
| $E_{239}$ | E* | | |
| * : E is average $E_{239}$ enrichment of MOX rods (being found as one of coefficients at the time of obtaining equivalent fissile coefficients with least squares method). | | | |

The average enrichment of the MOX fuel rods is calculated using the equivalent fissile coefficients shown in Table 2, and is compared with the average enrichment of the MOX fuel rods obtained with the lattice code, and its result is shown in Fig. 3. As is clear from the comparison diagram of this Fig. 3, according to this embodiment, it has been confirmed that the obtained only one set of equivalent fissile coefficients is applicable to an extremely wide range of the Pu composition.

In the first embodiment, five sets of equivalent fissile coefficients obtained in the whole of the groups 1 to 5 - the number of coefficients is total 45 - are used, the obtained accuracy of the enrichment is as follows : a maximum of an absolute value of the relative difference is 0.27% and a standard deviation is 0.09%. In contrast to this, in this embodiment, despite the obtained equivalent fissile coefficients being one set and the number of coefficients being total 25, which are about halves of those of the first embodiment, the accuracy of the enrichment obtained by using the equivalent fissile coefficients is as follows: the maximum of the absolute value of the relative difference was 0.12% and the standard deviation was 0.04%, which are at least two times larger than those of the first embodiment.

Incidentally, although the above-mentioned embodiment showed an example where evaluation corresponding to N = 2 was performed, here, the evaluation in a case of N = 1 to 6 set similarly was performed in contrast to a case where the evaluation was performed with N = 0, namely by the same equivalent fissile formula as that of Non-patent Literature 1 of the prior art that considered no dependence. N = 1 to 6 represent the first to sixth nuclides sequentially in descending order from one having the largest macroscopic cross section, as shown in Table 3. A result is shown in Fig. 4 as a statistic of a relative difference between the Pu enrichment obtained using the equivalent fissile coefficients obtained by the above-mentioned method and the Pu enrichment obtained with the lattice code for N = 0 to 6.

[Table 3]

| | N=0 Dependence None | N=1 Pu-239 | N=2 Pu-240 | N=3 Pu-241 | N=4 Pu-242 | N=5 Am-241 | N=6 Pu-238 |
|---|---|---|---|---|---|---|---|
| U-234 | ○ | ○ | ○ | ○ | ○ | ○ | ○ |
| U-235 | ○ | ○ | ○ | ○ | ○ | ○ | ○ |
| U-236 | ○ | ○ | ○ | ○ | ○ | ○ | ○ |
| Pu-240 | ○ | ○ | | | | | |
| Pu-241 | ○ | ○ | ○ | | | | |
| Pu-242 | ○ | ○ | ○ | ○ | | | |
| Am-241 | ○ | ○ | ○ | ○ | ○ | | |
| Pu-238 | ○ | ○ | ○ | ○ | ○ | ○ | |
| Number of coefficients | 8 | 16 | 23 | 29 | 34 | 38 | 41 |

Example of how to see table (in the case of N=2):

Combination having "○" in Table 3 among combinations included in rows from N=0 to N=2 is used. For example, regarding equivalent fissile coefficients for Am-241, coefficients corresponding to three terms in the following are defined.

1. Constant term independent on specific nuclide (corresponding to "○" at which Am-241 and matrix of N=0 intersect),
2. Term linearly dependent on Pu-239 (corresponding to "○" at which Am-241 and matrix of N=1 intersect),
3. Term linearly dependent on Pu-240 (corresponding to "○" at which Am-241 and matrix of N=2 intersect).

From a result of Fig. 4, regarding the accuracy of the enrichment obtained by using the equivalent fissile coefficients that are considered with respect to a dependence on the composition fraction of Pu isotope with N = 1 to 6 set, it is confirmed that extremely high accuracy of the enrichment, a maximum of the absolute value of the relative difference being 1/3 to 1/15 and the standard deviation being 1/5 to 1/25, can be obtained as compared with the case of N = 0 that does not consider the dependence of Pu isotope on the composition fraction. Regarding how many kinds of nuclides that are considered with respect to a dependence on the composition fraction of Pu isotope should be adopted as the number N of nuclides, it maybe set appropriately according to a range of the composition to which the one set of fissile coefficients are applied and required accuracy. However, from a result of Fig. 4, a saturation tendency is exhibited for N = 3 or more, and it is considered that consideration of four kind or more is unnecessary. Therefore, from a practical viewpoint, it is considered suitable to limit the number of nuclides as many as N = 2 that is shown in the above-mentioned example.

As described above, according to the method of this embodiment, by making the equivalent fissile coefficients have the dependence on the abundance of main Pu isotope, it becomes possible to determine the only one set of equivalent fissile coefficients having an extremely high accuracy for an extremely wide Pu composition region that has been completely impossible with the conventional technologies including Non-patent Literature 1.

Third Embodiment

Next, as a third embodiment of the present invention, in the design of the MOX fuel assembly for BWRs whose Pu enrichment types as shown in Fig. 1 are four kinds (P1 to P4), there is shown below a case of obtaining equivalent fissile coefficients capable of determining the enrichment that satisfies both the reactivity equivalence and the LPF equivalence to the base design by defining $E_{239}$ for each Pu enrichment type and subsequently iterating a method for determining the equivalent fissile coefficients shown in the second embodiment, following a procedure shown in Fig. 6.

First, by assuming the equivalent fissile coefficients determined flowing the procedures shown in Fig. 5 in the second embodiment as the zeroth equivalent coefficients and by assuming that the number of nuclides is N = 2 in the procedures shown in Fig. 6, the equivalent coefficients as far as those of the second order are obtained. That is, the Pu compositions used here are the 237 compositions same as in the second embodiment, calculation of the equation (11) that includes fitting of the data set by the equation (14b) to the equation (13b) with the least squares method was performed using the same program of FORTRAN 95 as that of the second embodiment. The obtained equivalent fissile coefficients are shown in Table 4.

[Table 4]

| | $C_{xx,0}$ | $C_{xx,49}$ | $C_{xx,40}$ |
|---|---|---|---|
| $C_{24}$ | -3.4729 | 3.3584 | 2.0828 |
| $C_{25}$ | 0.5942 | 0.3473 | 0.8269 |
| $C_{26}$ | 1.4713 | -1.4415 | -3.8100 |
| $C_{28}$ | 0 | - | - |
| $C_{48}$ | -0.7435 | 0.8861 | -0.0615 |
| $C_{49}$ | 1 | - | - |
| $C_{40}$ | -0.7557 | 0.9408 | - |
| $C_{41}$ | 1.1505 | -0.1365 | 1.1974 |
| $C_{42}$ | 1.1063 | -2.0049 | -1.6713 |
| $C_{51}$ | -1.5662 | 1.2537 | -1.6089 |
| | | | |
| $E_{239}$ of P1 | E1* | | |
| $E_{239}$ of P2 | E2* | | |
| $E_{239}$ of P3 | E3* | | |
| $E_{239}$ of P4 | E4* | | |
| * : E1 to E4 are $E_{239}$ enrichments of fuel rods P1 to P4 (obtained from average $E_{239}$ enrichment of MOX rods obtained as one of coefficients at the time of obtaining equivalent fissile coefficients by least squares method and Pu enrichments of fuel rods P1 to P4 of base design). | | | |

The average enrichment of the MOX fuel rods is calculated using the equivalent fissile coefficients shown in Table 4 and is compared with the average enrichment of the MOX fuel rods obtained with the lattice code, and its result is shown in a comparison diagram of Fig. 7. The obtained accuracy of the enrichment is as follows: a maximum of the absolute value of the relative difference is 0.12% and a standard deviation is 0.04%, which shows that the accuracy equivalent to the case of the second embodiment is obtained.

Moreover, a relative difference between the LPF of the base design and the LPF in the enrichment distribution determined using the equivalent fissile coefficients of Table 4 is compared in the beginning of life and is shown in Fig. 8. From the result of this Fig. 8, it is shown that the LPF in the enrichment distribution determined by this embodiment agrees with the LPF of the base design within a relative difference of about 1% or less, and has the LPF equivalence to the base design.

As described above, according to this embodiment, by iterating multiple times a determination process of the equivalent fissile coefficients whose procedure is shown in Fig. 6 using the equation (13b) based on the equation (13a) as a formula of equivalent fissile coefficients, it becomes possible to determine the only one set of equivalent fissile coefficients that enables the enrichments having an extremely high accuracy of reactivity equivalence and the LPF equivalence to be obtained in an extremely wide Pu composition region that has been completely impossible by the conventional technologies including Non-patent Literature 1 and Patent Literature 1. Incidentally, although this third embodiment showed the case where the number of nuclides that are considered with respect to a dependence on the composition fraction of Pu isotope was two, even in a case of zero, namely a case where the same equivalent fissile equation as that of Non-patent Literature 1 of the prior art that considers no dependence is applied, the same effect can be obtained although the grouping of the Pu composition region as shown in the first embodiment is necessary.

Fourth Embodiment

Next, as a fourth embodiment of the present invention, in designing the MOX fuel assembly for BWRs whose Pu enrichment types are four kinds (P1 to P4) as shown in Fig. 1, by changing the method for determining the equivalent fissile coefficients shown in the above-mentioned third embodiment into a procedure shown in Fig. 9, a case where obtaining the equivalent fissile coefficients capable of determining the enrichment that satisfies both the reactivity equivalence and strict LPF equivalence to the base design will be shown below.

Here, an essential difference between this fourth embodiment and the third embodiment is that the processing 3 shown in Fig. 5 in the third embodiment is changed into the processing 3 shown in Fig. 9 in this fourth embodiment. Incidentally, although the processing 6 shown in Fig. 5 in the third embodiment also differs from the processing 6 shown in Fig. 9 in this fourth embodiment, this difference is a difference between obtaining the equivalent fissile coefficients for the average enrichment of the MOX fuel rods and obtaining them for each MOX fuel rod of each enrichment type, and the technical means is the same.

First, following the procedure shown in Fig. 9, the base design is set by the processing 1 and the processing 2 similarly with the processing 1 and the processing 2 in Fig. 5, and the Pu composition group coming under the application is selected appropriately. In this embodiment, the same Pu composition group as that of the second embodiment was selected. Then, the enrichment distribution was set by the processing 3.

In the processing 3, among the Pu enrichment types 1 to 4, one that has a minimum $LPF_i$ is excluded and the remainders (i = 1 to 3) are selected here, the equations (19a) to (19c) are assigned with $\Delta\varepsilon_i$ obtained by multiplying respective Pu enrichments by 0.05, the Pu enrichment distribution that realizes the target power sharing $LPF_i^T$ is estimated by the equation (22) and the equation (23), and the enrichment distribution of the Pu enrichment types 1 to 3 is set. Regarding the Pu enrichment type 4, the enrichment is adjusted so that the average Pu enrichment of the MOX fuel rods may not change between before and after the enrichment adjustment. The above procedure is iterated with n of the equation (22) and the equation (23) changed as n = 1, 2... until an absolute value of $\Delta LPF_i^{(n)}$ becomes 0.0002 or less, and the Pu enrichment distribution that reproduces the target power sharing is set.

As described above, after the Pu enrichment distribution that reproduces the target power sharing was set by the processing 3 of Fig. 9, the procedures of the processing 4 to the processing 6 are performed similarly with the third embodiment, whereby the equivalent fissile coefficients are obtained. Furthermore, by designating this equivalent fissile coefficients as the zeroth equivalent coefficients and iterating the determination process of the equivalent fissile coefficients whose procedure is shown in Fig. 10 multiple times, final equivalent fissile coefficients can be obtained. The equivalent fissile coefficients obtained in the above procedure are as shown in Table 5.

[Table 5]

| | | P1 | P2 | P3 | P4 |
|---|---|---|---|---|---|
| $C_{24}$ | $C_{24,0}$ | 2.7370 | -4.9257 | -6.9923 | -3.1028 |
| | $C_{24,49}$ | -9.7714 | 5.7738 | 8.2004 | 3.3047 |
| | $C_{24,40}$ | 4.5972 | 2.3551 | 5.9315 | 3.3850 |
| $C_{25}$ | $C_{25,0}$ | -1.3812 | 0.9974 | 1.0081 | 0.5623 |
| | $C_{25,49}$ | 2.1693 | 0.0078 | -0.1165 | 0.0766 |
| | $C_{25,40}$ | 5.0846 | 0.2040 | -0.0607 | 0.1150 |

(continued)

| | | P1 | P2 | P3 | P4 |
|---|---|---|---|---|---|
| $C_{26}$ | $C_{26,0}$ | 6.5264 | 1.0825 | 0.8725 | 0.3316 |
| | $C_{26,49}$ | -3.6227 | -1.4706 | -1.4573 | -0.4107 |
| | $C_{26,40}$ | -17.8344 | -2.5309 | -1.3580 | -0.7566 |
| $C_{28}$ | $C_{28,0}$ | 0 | 0 | 0 | 0 |
| | $C_{28,49}$ | - | - | - | - |
| | $C_{28,40}$ | - | - | - | - |
| $C_{48}$ | $C_{48,0}$ | -0.9655 | -0.5845 | -0.3346 | -0.1538 |
| | $C_{48,49}$ | 1.0231 | 0.7516 | 0.5127 | 0.3334 |
| | $C_{48,40}$ | 0.2848 | -0.3712 | -0.6243 | -0.4740 |
| $C_{49}$ | $C_{49,0}$ | 1 | 1 | 1 | 1 |
| | $C_{49,49}$ | - | - | - | - |
| | $C_{49,40}$ | - | - | - | - |
| $C_{40}$ | $C_{40,0}$ | -0.8285 | -0.7600 | -0.6816 | -0.5219 |
| | $C_{40,49}$ | 0.7766 | 0.9849 | 0.9935 | 0.8876 |
| | $C_{40,40}$ | - | - | - | - |
| $C_{41}$ | $C_{41,0}$ | 1.3203 | 1.1484 | 1.1243 | 1.1027 |
| | $C_{41,49}$ | -0.0300 | -0.1799 | -0.2533 | -0.2583 |
| | $C_{41,40}$ | 0.7606 | 1.2605 | 1.2031 | 0.9404 |
| $C_{42}$ | $C_{42,0}$ | 1.4363 | 0.9573 | 0.6587 | 0.4380 |
| | $C_{42,49}$ | -2.8940 | -1.7786 | -1.2058 | -0.7943 |
| | $C_{42,40}$ | -1.6528 | -1.4894 | -1.2536 | -0.8832 |
| $C_{51}$ | $C_{51,0}$ | -2.0057 | -1.4952 | -1.2235 | -0.8896 |
| | $C_{51,49}$ | 1.6167 | 1.1730 | 1.1005 | 1.0734 |
| | $C_{51,40}$ | -2.0909 | -1.5889 | -1.4965 | -1.2380 |
| $E_{239}$ | | E1* | E2* | E3* | E4* |
| * : E1 to E4 are $E_{239}$ enrichments of fuel rods P1 to P4 (obtained as one of coefficients at the time of obtaining equivalent fissile coefficients by least squares method). | | | | | |

Moreover, the infinite multiplication factors in the EOC reactor core average burn-up are calculated with the lattice code for the Pu enrichment distribution determined with the equivalent fissile coefficients of Fig. 5 and differences between this value and the infinite multiplication factors of the base design are shown in Fig. 11. Furthermore, a relative difference between the LPF in the beginning of burn-up for the Pu enrichment distribution determined by the equivalent fissile coefficients of Table 5 and the LPF of the base design is shown in Fig. 12.

From these results, the equivalent fissile coefficients of Table 5 show that the infinite multiplication factors are equivalent in reactivity to the base design within a range of about ±0.02%dk, and the LPF becomes an almost equal value to that of the base design.

As described above, according to the method of this fourth embodiment, by designating the equivalent fissile coefficients obtained by the procedure of Fig. 9 using the equation (13b) based on the equation (13a) as a formula of the equivalent fissile coefficients as the zeroth equivalent coefficients and by iterating the determination process of the equivalent fissile coefficients whose procedure is shown in Fig. 10 multiple times, it becomes possible to determine the only one set of equivalent fissile coefficients that enables the enrichment having the extremely high accuracy of reactivity equivalence and the LPF equivalence to be obtained in an extremely wide Pu composition region that was completely impossible by the conventional technologies including Non-patent Literature 1 and Patent Literature 1. Incidentally, although this fourth embodiment showed the case where the number of nuclides that are considered with respect to a dependence on the composition fraction of Pu isotope was two, even in a case of zero, namely a case where the same equivalent fissile formula as that of Non-patent Literature 1 of the prior art that considers no dependence is applied, the same effect can be obtained although the grouping of the Pu composition regions as shown in the first embodiment is necessary.

Incidentally, although in the above procedure, the physical quantity of the target of design optimization for each Pu enrichment type is designated to be the LPF, it is also possible to select a parameter termed the R factor that is necessary to calculate the maximum burn-up in the end of life, etc. and the minimum critical power ratio that is the thermal limit value during operation in place of the LPF.

Furthermore, in the above procedure, although the value of the base design was adopted as the desired value of the physical quantity of the target of design optimization, in an actual design, from a viewpoint of optimizing the reactor core characteristic for each Pu composition, it is conceivable that the physical quantity of the target of design optimization for each Pu composition is differentiated from the value of the base design intentionally. Also in this case, by predetermining the physical quantity of the target of design optimization of each Pu composition based on the optimal design, it is also possible to designate the predetermined physical quantity as the desired value in place of the value of the base design. For example, it can be done that what is expressed for the physical quantity of the target of design optimization as the function of the Puf fraction dependence is predetermined, and it is designated as the desired value.

List of Reference Signs

| | |
|---|---|
| U: | Uranium fuel rod |
| P1, P2, P3, and P4: | MOX fuel rod |
| W: | Water rod |

**Claims**

1. A computer-implemented method for setting equivalent fissile coefficients for each of predetermined nuclides that in targeting, as a manufacture object, an MOX fuel assembly containing uranium and plutonium as nuclear fuel materials, is used for determining a plutonium enrichment corresponding to a plutonium isotopic composition applied to the nuclear fuel materials by an equivalent fissile method,
comprising the steps of:

selecting a plurality of plutonium isotopic compositions that cover a range of plutonium isotopic compositions to be applied thereto up to a number larger than the whole number of the equivalent fissile coefficients;
determining an enrichment distribution of each MOX fuel rod that becomes equivalent in infinite multiplication factor to a design serving as a predetermined base for each of the selected plutonium isotopic compositions; and
obtaining the equivalent fissile coefficients by calculating an equation obtained by applying a least squares method to an equivalent fissile method defined by an equation (1)
using a plutonium enrichment $\varepsilon$ based on the determined enrichment distribution and data based on a weight ratio that each isotope occupies in uranium or plutonium in each plutonium isotopic composition.

$$\varepsilon = \frac{\sum_m c_m \cdot w_m - E_{239}}{\sum_m c_m \cdot w_m - \sum_n c_n \cdot w_n} \qquad (1)$$

Where

$\varepsilon$ : Enrichment at which $k_\infty$ in EOC reactor core average burn-up becomes a value equal to $k_\infty$ of standard fuel
$E_{239}$ : Enrichment at which $k_\infty$ at EOC reactor core average burn-up becomes a value equal to $k_\infty$ of standard fuel in virtual isotopic composition consisting of only Pu239 and U238,
$w$ : Weight ratio that each isotope occupies in uranium or plutonium.

Incidentally $\sum_m w_m = 1, \ \sum_n w_n = 1$

$c$ : Equivalent fissile coefficients of each isotope in uranium or plutonium.
Incidentally, they are defined as $C_{28} = 0$ and $C_{49} = 1$.
$m$ : Subscript indicating each isotope of uranium.
Incidentally, they are:

24: U234
25: U235
26: U236
28: U238.

$n$ : Subscript indicating each isotope of plutonium (Am241 is included conveniently).
Incidentally, they are:

48: Pu238
49: Pu239
40: Pu240
41: Pu241
42: Pu242
51: Am241.

**2.** The method for setting equivalent fissile coefficients according to claim 1, wherein the step of determining the enrichment distribution determines the enrichment distribution by an adjustment step of iterating a step of multiplying the enrichment of each MOX fuel rod that is given as an initial enrichment distribution by a constant uniformly until a difference between an infinite multiplication factor for the enrichment distribution set in the step and an infinite multiplication factor of the base design becomes smaller than a predetermined convergence determining value.

**3.** The method for setting equivalent fissile coefficients according to either claim 1 or 2, wherein C is obtained through calculation by making the plutonium enrichment ε of the selected plutonium isotopic composition and data based on the weight ratio that each isotope occupies correspond with an equation (11) as a fitting function y and variables x of the fitting function.

$$\mathbf{C} = \mathbf{A}^{-1}\,\mathbf{B} \qquad (11)$$

**A** : Square matrix having $a_{ij}$ as elements,
**B** : Vector having $b_i$ as elements,
**C** : Vector having nontrivial equivalent fissile coefficients and $E_{239}$ as elements,

$$a_{ij} = \sum_l \left[ f_i\left(x_{1,l}, x_{2,l}, \ldots\right) \cdot f_j\left(x_{1,l}, x_{2,l}, \ldots\right) \right]$$

$$b_i = \sum_l \left[ y_l \cdot f_i\left(x_{1,l}, x_{2,l}, \ldots\right) \right]$$

$l$ : Subscript indicating a set of data to be fitted.

**4.** The method for setting equivalent fissile coefficients according to claim 3, wherein a function shown in an equation (12) is set as the fitting function y and the variables x of the fitting function, and wherein C is obtained through calculation by making this equation (12) correspond with the equation (11).

$$
\begin{aligned}
y &:= -\varepsilon \cdot w_{49} \\
x_1 &:= w_{24} \cdot (1-\varepsilon) \\
x_2 &:= w_{25} \cdot (1-\varepsilon) \\
x_3 &:= w_{26} \cdot (1-\varepsilon) \\
x_4 &:= w_{48} \cdot \varepsilon \\
x_5 &:= w_{40} \cdot \varepsilon \\
x_6 &:= w_{41} \cdot \varepsilon \\
x_7 &:= w_{42} \cdot \varepsilon \\
x_8 &:= w_{51} \cdot \varepsilon
\end{aligned}
$$

$$
\begin{aligned}
c_1 &:= c_{24} &;\quad f_1(x_1, x_2, \ldots x_8) &:= x_1 \\
c_2 &:= c_{25} &;\quad f_2(x_1, x_2, \ldots x_8) &:= x_2 \\
c_3 &:= c_{26} &;\quad f_3(x_1, x_2, \ldots x_8) &:= x_3 \\
c_4 &:= c_{48} &;\quad f_4(x_1, x_2, \ldots x_8) &:= x_4 \\
c_5 &:= c_{40} &;\quad f_5(x_1, x_2, \ldots x_8) &:= x_5 \\
c_6 &:= c_{41} &;\quad f_6(x_1, x_2, \ldots x_8) &:= x_6 \\
c_7 &:= c_{42} &;\quad f_7(x_1, x_2, \ldots x_8) &:= x_7 \\
c_8 &:= c_{51} &;\quad f_8(x_1, x_2, \ldots x_8) &:= x_8 \\
c_9 &:= -E_{239} &;\quad f_9(x_1, x_2, \ldots x_8) &:= 1
\end{aligned}
\qquad (12)
$$

**5.** The method for setting equivalent fissile coefficients according to either claim 2 or 3, wherein the equivalent fissile coefficients that should be set are each made to have a dependence on a composition fraction of an isotope of one kind or more that is selected in a decreasing order of a macroscopic cross section, the largest the first, in plutonium.

**6.** The method for setting equivalent fissile coefficients according to claim 5, wherein an equation (14a) is set by designating a function shown in an equation (13a) as the fitting function y and the variables x of the fitting function that should be set, and C is obtained through calculation by making this equation (14a) correspond with the equation (11).

$$
\begin{aligned}
c_{m(k)} &= 0, & & k=1 \\
c_{m(k)} &= c_{m(k),0} + \sum_{k'=1}^{N} c_{m(k),n(k')} \cdot w_{n(k')}, & & k>1 \\
c_{n(k)} &= 1, & & k=1 \\
c_{n(k)} &= c_{n(k),0} + \sum_{k'=1}^{N'} c_{n(k),n(k')} \cdot w_{n(k')}, & & k>1
\end{aligned}
\qquad (13a)
$$

Where

$m(k)$ : Sequence (example: {28, 24, 25, 26}), arrangement of an integer symbol 28 of first term (subscript $k$ = 1) indicating U238 that is trivial as equivalent fissile coefficient plus subsequent terms (subscript $k$ = 2, ...) of integer terms each indicating uranium isotope nuclide that is nontrivial as equivalent fissile coefficient and should be taken into consideration,

$n(k)$ : Sequence (example: {49, 40, 41, 42, 51, 48}), arrangement of an integer symbol 49 of first term (subscript

$k$ = 1) indicating Pu239 that is trivial as equivalent fissile coefficient plus subsequent terms (subscript $k$ = 2, ...) of integer terms each indicating Pu isotope nuclide that is nontrivial as equivalent fissile coefficient and should be taken into consideration (Am241 is also included conveniently) (however, for subscript $k$ = 2 and subsequent $k$'s, in decreasing order of macroscopic cross section),
$N$ : Number of Pu isotopes that should be taken into consideration wher providing dependence on composition fraction of Pu isotope to equivalent fissile coefficients,
$N'$ : Lesser of $N$ and $k$-1 ($N'$: = min{$N$, $k$-1}).

$$\begin{aligned}
y &:= -\varepsilon \cdot w_{49} \\
x_{m(k),0} &:= (1-\varepsilon) \cdot w_{m(k)} \quad , \quad x_{m(k),n(k')} := x_{m(k),0} \cdot w_{n(k')} \quad ; \quad k>1,\ k'=1, .., N \\
x_{n(k),0} &:= \varepsilon \cdot w_{n(k)} \quad , \quad x_{n(k),n(k')} := x_{n(k),0} \cdot w_{n(k')} \quad ; \quad k>1,\ k'=1, ..., N' \\
f_{m(k),0} &:= x_{m(k),0} \quad , \quad f_{m(k),n(k')} := x_{m(k),n(k')} \quad ; \quad k>1,\ k'=1, ..., N \\
f_{n(k),0} &:= x_{n(k),0} \quad , \quad f_{n(k),n(k')} := x_{n(k),n(k')} \quad ; \quad k>1,\ k'=1, ..., N' \\
f_{49,0} &:= 1
\end{aligned} \qquad (14a)$$

**7.** The method for setting equivalent fissile coefficients according to any one of claims 2 to 6, comprising:

a step of in targeting an MOX fuel assembly containing three kinds or more of plutonium enrichment types as the MOX fuel assembly to be manufacture object, setting an enrichment distribution that reproduces a distribution of the physical quantity predetermined for each plutonium enrichment type based on an equation (30) using an equation (29), an equation (31), and the equation (32) with respect to a single physical quantity of a target of design optimization for each of the selectedplutonium isotopic compositions;
an adjustment step of calculating the single physical quantity of the target of design optimization for the enrichment distribution set in the step, iterating the step until its difference from the predetermined physical quantity distribution becomes smaller than a predetermined convergence determining value, and designating the obtained enrichment distribution as an initial enrichment distribution; and
an adjustment step of when a difference between an infinite multiplication factor for the initial enrichment distribution and an infinite multiplication factor of the base design is larger than the predetermined convergence determining value, iterating a step of multiplying the initial enrichment distribution by a constant uniformly until the difference becomes smaller than it,
wherein the equivalent fissile coefficients are obtained for each enrichment type by applying the least squares method based on the enrichment distribution adjusted by this adjustment step.

$$a_{i,j} = \Delta LDP_{i,j} / \Delta\varepsilon_j \qquad (29)$$

Where

$LDP_i$ : Physical quantity serving as design objective of enrichment type $i$,
$\Delta LDP_{i,j}$ : Amount of fluctuation of $LDP_i$ at the time of fluctuation of Pu enrichment of enrichment type $j$
$\Delta\varepsilon_j$ : Amount of fluctuation of Pu enrichment of enrichment type $j$,
$i$ : Subscript indicating enrichment type $i$,
$j$ : The subscript indicating enrichment type $j$.

$$\varepsilon_i^{(n)} = \varepsilon_i^{(n-1)} + \Delta\varepsilon_i^{(n)} \qquad (30)$$

$\varepsilon_i^{(n-1)}$ : Enrichment of enrichment type $i$ before enrichment adjustment,

$\varepsilon_i^{(n)}$ : Enrichment of enrichment type $i$ after enrichment adjustment.

$$\mathbf{C} = \mathbf{A}^{-1}\,\mathbf{B} \qquad (31)$$

**A** : Square matrix having $a_{ij}$ of equation (29) as elements,
**B** : Vector having $\Delta LDP_i^{(n-1)}$ as elements,
**C** : Vector having $\Delta\varepsilon_i^{(n)}$ as elements.

$$\Delta LDP_i^{(n-1)} = LDP_i^T - LDP_i^{(n-1)} \qquad (32)$$

$LDP_i^T$ : Predetermined desired value of physical quantity serving as design objective of enrichment type *i*.

**8.** A method for setting equivalent fissile coefficients, comprising:

a first processing step of designating equivalent fissile coefficients and an $E_{239}$ enrichment that are obtained in advance by the method described in claim 7 as zeroth equivalent coefficients, tentatively determining a plutonium enrichment of each MOX fuel rod that becomes equal to the $E_{239}$ enrichment from the equation (1) using the zeroth equivalent coefficients for each of the selected plutonium isotopic compositions, and designating it as an initial enrichment distribution;
a second processing step of calculating an infinite multiplication factor for the tentatively determined plutonium enrichment distribution and performing comparison determination of its difference from an infinite multiplication factor of the base design and the predetermined convergence determining value;
a third processing step of when the difference between the infinite multiplication factors of the both is larger than the convergence determining value, adjusting the plutonium enrichment of each MOX fuel rod by multiplying the tentatively determined plutonium enrichment distribution by a constant uniformly, and obtaining a new tentatively determined plutonium enrichment distribution;
a step of iterating a step of returning to the second processing step for the new tentatively determined plutonium enrichment distribution obtained in the third processing step, calculating the infinite multiplication factor again, and performing the determination, until the difference between the infinite multiplication factors of the both becomes smaller than the convergence determining value; and
a fourth processing step of determining the equivalent fissile coefficients by the method described in the claim 7 based on the plutonium enrichment of each MOX fuel rod at a point of time when the difference between the infinite multiplication factors becomes smaller than the convergence determining value and each plutonium composition and designating them as the first equivalent coefficients,
wherein the method iterates a series of work from the first processing step to the fourth processing step, each series of work uses the equivalent fissile coefficients determined in the fourth processing step of a previous round in the first processing step of the next round, and the work of an N-th round that is the last starts the first processing step using (N-1) -th equivalent coefficients and determines N-th equivalent coefficients in the fourth processing step.

**9.** The method for setting equivalent fissile coefficients according to either claim 7 or 8,
wherein the single physical quantity of the target of design optimization is a maximum of the fuel rod linear heat generation of each plutonium enrichment type or a maximum of a fuel rod burn-up.
Where

A: Square matrix having $a_{ij}$ of equation (29) as elements,
B: Vector having $\Delta LDP_i^{(n-1)}$ as elements,
C: Vector having $\Delta\varepsilon_i^{(n)}$ as elements.

Where
LDPi: Predetermined desired value of physical quantity serving as design objective of enrichment type i.

**10.** A method for setting equivalent fissile coefficients, comprising:

a first processing step of in targeting an MOX fuel assembly containing three kinds or more of plutonium enrichment types as the MOX fuel assembly to be manufacture object, designating the equivalent fissile coefficients obtained in advance by a method described by any one of claims 2 to 6 as zeroth equivalent coefficients and determining an $E_{239}$ enrichment of each MOX fuel rod of the base design through calculation from an equation (1) based on the zeroth equivalent coefficients and a plutonium enrichment of each MOX fuel rod of the base design;

a second processing step of tentatively determining a plutonium enrichment of each MOX fuel rod that becomes equal to the $E_{239}$ enrichment of each MOX fuel rod of the base design from an equation (1) using the zeroth equivalent coefficients for each of the selected plutonium isotopic compositions and designating it as the initial enrichment distribution;
a third processing step of calculating an infinite multiplication factor for the tentatively determined plutonium enrichment distribution and performing comparison determination of its difference from the infinite multiplication factor of the base design and a predetermined convergence determining value;
a fourth processing step of when the difference between the infinite multiplication factors of the both is larger than the convergence determining value in the determination, adjusting the plutonium enrichment of each MOX fuel rod by multiplying the tentatively determined plutonium enrichment distribution by a constant uniformly, and obtaining a new tentatively determined plutonium enrichment distribution;
a step of iterating the step of returning to the third processing step for the new tentatively determined plutonium enrichment distribution obtained in the fourth processing step and performing the determination by calculating the infinite multiplication factor again until the difference between the infinite multiplication factors of the both becomes smaller than the convergence determining value; and
a fifth processing step of determining the equivalent fissile coefficients by a method according to any one of claims 2 to 6 based on the plutonium enrichment of each MOX fuel rod at a point of time when the difference between the infinite multiplication factors becomes smaller than the convergence determining value and each plutonium isotopic composition, and designating them as the first equivalent coefficients, wherein the method iterates a series of work from the first processing step to the fifth processing step, each of the series of work uses the equivalent fissile coefficients determined in the fifth processing step of the previous round in the first processing step of the next round, and the work of an N-th round that is the last starts the first processing step using (N-1) -th equivalent coefficients and determines N-th equivalent coefficients in the fifth processing step.

## Patentansprüche

**1.** Ein computerimplementiertes Verfahren
zum Einstellen von äquivalenten spaltbaren Koeffizienten für jedes der vorbestimmten Nuklide, das beim Targeting einer MOX-Brennelementanordnung, die Uran und Plutonium als Kernbrennstoffmaterial enthält, zur Bestimmung einer Plutoniumanreicherung verwendet wird, die einer Plutoniumisotopenzusammensetzung entspricht, die durch ein äquivalentes spaltbares Verfahren auf den Kernbrennstoff aufgebracht wird,
das die folgenden Schritte umfasst:

Auswählen einer Mehrzahl von Plutoniumisotopenzusammensetzungen, die einen Bereich von Plutoniumisotopenzusammensetzungen abdecken, die darauf aufgebracht werden sollen, dies bis zu einer Anzahl, die größer ist als die Gesamtanzahl der äquivalenten spaltbaren Koeffizienten;
Bestimmen einer Anreicherungsverteilung jedes MOX-Brennstabes, die in einem unendlichen Multiplikationsfaktor äquivalent zu einer Auslegung wird, die als eine vorbestimmte Basis für jede der ausgewählten Plutoniumisotopenzusammensetzungen dient; und
Ermitteln der äquivalenten spaltbaren Koeffizienten durch Berechnen einer Gleichung, die durch Anwendung einer Methode der kleinsten Quadrate auf ein äquivalentes spaltbares Verfahren erzielt wird, das durch die Gleichung (1) definiert ist,
unter Verwendung einer Plutoniumanreicherung ε auf der Grundlage der bestimmten Anreicherungsverteilung und Daten basierend auf einem Gewichtsverhältnis, das jedes Isotop in Uran oder Plutonium in jeder Plutoniumisotopenzusammensetzung belegt.

$$\varepsilon = \frac{\sum_m c_m \cdot w_m - E_{239}}{\sum_m c_m \cdot w_m - \sum_n c_n \cdot w_n} \quad (1)$$

wobei

$\varepsilon$: Anreicherung, bei der $k_\infty$ bei durchschnittlichem Abbrand im EOC Reaktorkern zu einem Wert von gleich $k_\infty$ bei Standardkraftstoff wird

$E_{239}$: Anreicherung, bei der $k_\infty$ bei durchschnittlichem Abbrand im EOC Reaktorkern zu einem Wert von gleich $k_\infty$ bei Standardkraftstoff in virtueller Isotopenzusammensetzung wird, die nur aus Pu239 und U238 besteht,

*w*: Gewichtsverhältnis, das jedes Isotop in Uran oder Plutonium einnimmt. mit $\sum_m w_m = 1, \sum_n w_n = 1$

*c*: Äquivalente spaltbare Koeffizienten jedes Isotops in Uran oder Plutonium. definiert als $C_{28} = 0$ und $C_{49} = 1$.
*m*: Tiefgestellt, das jedes Isotop des Urans anzeigt. mit:

24: U234
25: U234
26: U236
28: U238

*n:* Tiefgestellt, das jedes Isotop des Plutonium anzeigt (Am241 ist inbegriffen). mit:

48: Pu238
49: Pu239
40: Pu240
41: Pu241
42: Pu242
51: Am241.

**2.** Verfahren zum Einstellen von äquivalenten spaltbaren Koeffizienten nach Anspruch 1,
wobei der Schritt des Bestimmens der Anreicherungsverteilung die Anreicherungsverteilung durch einen Anpassungsschritt des Iterierens eines Schrittes des Multiplizierens der Anreicherung jedes MOX-Brennstabes bestimmt, der als eine ursprüngliche Anreicherungsverteilung durch eine Konstante gleichförmig bestimmt wird, bis eine Differenz zwischen einem unendlichen Multiplikationsfaktor für die in dem Schritt eingestellte Anreicherungsverteilung und einem unendlichen Multiplikationsfaktor der Basisauslegung kleiner als ein vorbestimmter Konvergenzbestimmungswert wird.

**3.** Verfahren zum Einstellen von äquivalenten spaltbaren Koeffizienten nach Anspruch 1 oder 2,
wobei C durch Berechnung erzielt wird, indem die Plutoniumanreicherung ε der ausgewählten Plutoniumisotopenzusammensetzung und Daten basierend auf dem Gewichtsverhältnis, das jedes Isotop einnimmt, mit einer Gleichung übereinstimmen (11) als eine Anpassungsfunktion y und Variable x der Anpassungsfunktion.

$$\mathbf{C} = \mathbf{A}^{-1}\mathbf{B} \qquad (11)$$

**A:** Quadratische Matrix mit $a_{ij}$-Elementen,
**B:** Vektor mit $b_i$ als Elementen,
**C:** Vektor mit nicht trivialen äquivalenten spaltbaren Koeffizienten und $E_{239}$ als Elementen,

$$a_{ij} = \sum_l \left[ f_i\left(x_{1,l}, x_{2,l}, \ldots\right) \cdot f_j\left(x_{1,l}, x_{2,l}, \ldots\right) \right]$$

$$b_i = \sum_l \left[ y_l \cdot f_i\left(x_{1,l}, x_{2,l}, \ldots\right) \right]$$

*l*: Tiefgestellt, das einen anzupassenden Datensatz angibt.

**4.** Verfahren zum Einstellen von äquivalenten spaltbaren Koeffizienten nach Anspruch 3,
wobei eine Funktion, die in einer Gleichung (12) gezeigt wird, als die Anpassungsfunktion y und die Variablen x der Anpassungsfunktion eingestellt ist, und
wobei C durch Berechnung erzielt wird, indem diese Gleichung (12) in Übereinstimmung mit der Gleichung (11)

gebracht wird.

$$\begin{aligned}
y &:= -\varepsilon \cdot w_{49} \\
x_1 &:= w_{24} \cdot (1-\varepsilon) \\
x_2 &:= w_{25} \cdot (1-\varepsilon) \\
x_3 &:= w_{26} \cdot (1-\varepsilon) \\
x_4 &:= w_{48} \cdot \varepsilon \\
x_5 &:= w_{40} \cdot \varepsilon \\
x_6 &:= w_{41} \cdot \varepsilon \\
x_7 &:= w_{42} \cdot \varepsilon \\
x_8 &:= w_{51} \cdot \varepsilon
\end{aligned}$$

$$\begin{aligned}
c_1 &:= c_{24} &;\quad f_1(x_1, x_2, \dots x_8) &:= x_1 \\
c_2 &:= c_{25} &;\quad f_2(x_1, x_2, \dots x_8) &:= x_2 \\
c_3 &:= c_{26} &;\quad f_3(x_1, x_2, \dots x_8) &:= x_3 \\
c_4 &:= c_{48} &;\quad f_4(x_1, x_2, \dots x_8) &:= x_4 \\
c_5 &:= c_{40} &;\quad f_5(x_1, x_2, \dots x_8) &:= x_5 \\
c_6 &:= c_{41} &;\quad f_6(x_1, x_2, \dots x_8) &:= x_6 \\
c_7 &:= c_{42} &;\quad f_7(x_1, x_2, \dots x_8) &:= x_7 \\
c_8 &:= c_{51} &;\quad f_8(x_1, x_2, \dots x_8) &:= x_8 \\
c_9 &:= -E_{239} &;\quad f_9(x_1, x_2, \dots x_8) &:= 1
\end{aligned} \tag{12}$$

**5.** Verfahren zum Einstellen von äquivalenten spaltbaren Koeffizienten nach Anspruch 2 oder 3, wobei die äquivalenten spaltbaren Koeffizienten, die eingestellt werden sollten, jeweils eine Abhängigkeit von einem Zusammensetzungsanteil eines Isotops einer oder mehrerer Arten aufweisen, die in absteigender Reihenfolge eines makroskopischen Querschnitts ausgewählt wird, wobei der größte der erste in Plutonium ist.

**6.** Verfahren zum Einstellen von äquivalenten spaltbaren Koeffizienten nach Anspruch 5, wobei eine Gleichung (14a) durch Bezeichnen einer Funktion eingestellt ist, die in einer Gleichung (13a) als die Anpassungsfunktion y gezeigt wird, und als Variable x der Anpassungsfunktion, die eingestellt werden sollte, und C durch Berechnung erzielt wird, indem diese Gleichung (14a) in Übereinstimmung mit der Gleichung (11) gebracht wird.

$$\begin{aligned}
c_{m(k)} &= 0, & k &= 1 \\
c_{m(k)} &= c_{m(k),0} + \sum_{k'=1}^{N} c_{m(k),n(k')} \cdot w_{n(k')}, & k &> 1 \\
c_{n(k)} &= 1, & k &= 1 \\
c_{n(k)} &= c_{n(k),0} + \sum_{k'=1}^{N'} c_{n(k),n(k')} \cdot w_{n(k')}, & k &> 1
\end{aligned} \tag{13a}$$

wobei

*m(k)*: Sequenz (Beispiel: {28, 24, 25, 26}), Anordnung einer ganzen Zahl Symbol 28 des ersten Begriffs (tiefgestellt $k$ = 1) der U238 anzeigt, der trivial ist als äquivalenter spaltbarer Koeffizient plus nachfolgende Begriffe (tiefgestellt $k$ = 2, ...) von ganzzahligen Ausdrücken, die jeweils ein Uranisotopennuklid angeben, das nicht trivial als äquivalenter spaltbarer Koeffizient gilt und in Betracht gezogen werden sollte,

*n(k)*: Sequenz (Beispiel: {49, 40, 41, 42, 51, 48}), Anordnung einer ganzen Zahl Symbol 49 des ersten Begriffs (tiefgestellt $k$ = 1) der Pu239 anzeigt, der trivial ist als äquivalenter spaltbarer Koeffizient plus nachfolgende Begriffe (tiefgestellt $k$ = 2, ...) von ganzzahligen Ausdrücken, die jeweils ein Pu Isotopennuklid angeben, das nicht trivial als äquivalenter spaltbarer Koeffizient gilt und in Betracht gezogen werden sollte (Am241 ist auch inbegriffen) (jedoch für tiefgestellte $k$ = 2 und folgende $k$ in absteigender Reihenfolge eines makroskopischen Querschnitts),
*N*: Anzahl der Pu-Isotope, die in Betracht gezogen werden sollten, wenn sie eine Abhängigkeit vom Zusammensetzungsanteil des Pu-Isotops zu äquivalenten spaltbaren Koeffizienten bereitstellen,
*N'*: Geringer als $N$ und $k$-1 ($N'$ := min{$N$, $k$-1}).

$$\begin{aligned}
&y &&:= -\varepsilon \cdot w_{49} \\
&x_{m(k),0} &&:= (1-\varepsilon)\cdot w_{m(k)} \quad , \quad x_{m(k),n(k')} := x_{m(k),0}\cdot w_{n(k')} \quad ; \quad k>1,\ k'=1,..,N \\
&x_{n(k),0} &&:= \varepsilon \cdot w_{n(k)} \quad , \quad x_{n(k),n(k')} := x_{n(k),0}\cdot w_{n(k')} \quad ; \quad k>1,\ k'=1,...,N' \\
&f_{m(k),0} &&:= x_{m(k),0} \quad , \quad f_{m(k),n(k')} := x_{m(k),n(k')} \quad ; \quad k>1,\ k'=1,...,N \\
&f_{n(k),0} &&:= x_{n(k),0} \quad , \quad f_{n(k),n(k')} := x_{n(k),n(k')} \quad ; \quad k>1,\ k'=1,...,N' \\
&f_{49,0} &&:= 1
\end{aligned} \tag{14a}$$

**7.** Verfahren zum Einstellen von äquivalenten spaltbaren Koeffizienten nach einem der Ansprüche 2 bis 6, das folgendes umfasst:

einen Schritt des Targeting einer MOX-Brennelementanordnung, die drei Arten oder mehr von Plutoniumanreicherungstypen enthält, als das MOX-Brennelement, um ein Herstellungsobjekt zu bilden, Einstellen einer Anreicherungsverteilung, die eine Verteilung der für jeden Plutoniumanreicherungstyp bestimmten physikalischen Größe auf der Grundlage einer Gleichung wiedergibt (30) unter Verwendung einer Gleichung (29), einer Gleichung (31) und der Gleichung (32) in Bezug auf eine einzelne physikalische Größe eines Ziels der Auslegungsoptimierung für jede der ausgewählten Plutonium-Isotopenzusammensetzungen;
einen Anpassungsschritt mit Berechnen der einzelnen physikalischen Größe des Ziels der Auslegungsoptimierung für die Anreicherungsverteilung, die in dem Schritt eingestellt ist, Iterieren des Schritts, bis seine Differenz zur vorbestimmten physikalischen Größenverteilung kleiner als ein vorbestimmter Konvergenzbestimmungswert wird, und Bestimmen der erzielten Anreicherungsverteilung als ursprüngliche Anreicherungsverteilung; und
einen Anpassungsschritt, bei dem eine Differenz zwischen einem unendlichen Multiplikationsfaktor für die ursprüngliche Anreicherungsverteilung und einem unendlichen Multiplikationsfaktor der Basisauslegung größer als der vorbestimmte Konvergenzbestimmungswert ist, Iterieren eines Schritts des Multiplizierens der ursprünglichen Anreicherungsverteilung durch eine Konstante gleichförmig, bis die Differenz kleiner als sie wird,
wobei die äquivalenten spaltbaren Koeffizienten für jeden Anreicherungstyp durch Anwendung des Verfahrens der kleinsten Quadrate auf der Grundlage der Anreicherungsverteilung erzielt werden, die durch diesen Anpassungsschritt eingestellt werden.

$$a_{i,j} = \Delta LDP_{i,j} / \Delta\varepsilon_j \tag{29}$$

wobei

$LDP_i$: Physikalische Größe, die als Auslegungsziel dem Anreicherungstyp $i$ dient,
$\Delta LDP_{i,j}$: Fluktuationsumfang von $LDP_i$ zum Zeitpunkt der Fluktuation der Pu-Anreicherung des Anreicherungstyps $j$
$\Delta\varepsilon_j$: Fluktuationsumfang von Pu-Anreicherung dem Anreicherungstyp $j$
$i$: Tiefgestellt, das der Anreicherungstyp $i$ angibt
$j$: Tiefgestellt, das der Anreicherungstyp $j$ angibt

$$\varepsilon_i^{(n)} = \varepsilon_i^{(n-1)} + \Delta\varepsilon_i^{(n)} \tag{30}$$

$\varepsilon_i^{(n-1)}$ : Anreicherung dem Anreicherungstyp *i* vor Anreicherungsanpassung,
$\varepsilon_i^{(n)}$ : Anreicherung dem Anreicherungstyp *i* nach Anreicherungsanpassung.

$$\mathbf{C} = \mathbf{A}^{-1}\mathbf{B} \tag{31}$$

**A:** Quadratische Matrix mit $a_{ij}$ der Gleichung (29) als Elemente,
**B:** Vektor mit $\Delta LDP_i^{(n-1)}$ als Elemente,
**C:** Vektor mit $\Delta\varepsilon_i^{(n)}$ als Elemente.

$$\Delta LDP_i^{(n-1)} = LDP_i^T - LDP_i^{(n-1)} \tag{32}$$

$LDP_i^T$ **:** Vorbestimmter gewünschter Wert der physikalischen Größe, der als Auslegungsziel der Anreicherungstyp *i* dient,

**8.** Verfahren zum Einstellen von äquivalenten spaltbaren Koeffizienten, das folgendes umfasst:

einen ersten Bearbeitungsschritt mit Bestimmung von äquivalenten spaltbaren Koeffizienten und einer $E_{239}$ Anreicherung, die im Voraus durch das in Anspruch 7 beschriebene Verfahren als nullte äquivalente Koeffizienten erzielt werden, wobei vorläufig eine Plutoniumanreicherung jedes MOX-Brennstabs, die mit der $E_{239}$ Anreicherung aus Gleichung (1) unter Verwendung der nullten Äquivalenzkoeffizienten für jede der ausgewählten Plutonium-Isotopenzusammensetzungen gleich wird, bestimmt und als eine ursprüngliche Anreicherungsverteilung bezeichnet wird;
einen zweiten Bearbeitungsschritt zum Berechnen eines unendlichen Multiplikationsfaktors für die vorläufig bestimmte Plutoniumanreicherungsverteilung und zum Durchführen einer Vergleichsbestimmung seiner Differenz zu einem unendlichen Multiplikationsfaktor der Basisauslegung und dem vorbestimmten Konvergenzbestimmungswert;
einen dritten Bearbeitungsschritt, wenn die Differenz zwischen den unendlichen Multiplikationsfaktoren der beiden größer als der Konvergenzbestimmungswert ist, Einstellen der Plutoniumanreicherung jedes MOX-Brennstabs durch Multiplizieren der vorläufig bestimmten Plutoniumanreicherungsverteilung mit einer Konstante gleichförmig und Erzielen einer neuen vorläufig bestimmten Plutoniumanreicherungsverteilung;
einen Schritt des Iterierens eines Schritts mit Rückkehr zum zweiten Bearbeitungsschritt für die neue vorläufig bestimmte Plutoniumanreicherungsverteilung, die im dritten Bearbeitungsschritt erzielt wurde, erneutes Berechnen des unendlichen Multiplikationsfaktors und Durchführen der Bestimmung, bis die Differenz zwischen den unendlichen Multiplikationsfaktoren der beiden kleiner wird als der Konvergenzbestimmungswert; und
einen vierten Bearbeitungsschritt zum Bestimmen der äquivalenten spaltbaren Koeffizienten durch das im Anspruch 7 beschriebene Verfahren auf der Grundlage der Plutoniumanreicherung jedes MOX-Brennstabes zu einem Zeitpunkt, wenn die Differenz zwischen den unendlichen Multiplikationsfaktoren kleiner als der Konvergenzbestimmungswert und jede Plutoniumzusammensetzung wird, und ihre Bezeichnung als erste äquivalente Koeffizienten,
wobei das Verfahren eine Reihe von Arbeiten vom ersten Bearbeitungsschritt bis zum vierten Bearbeitungsschritt iteriert, wobei jede Reihe von Arbeiten die äquivalenten spaltbaren Koeffizienten, die im vierten Bearbeitungsschritt einer vorherigen Runde bestimmt wurden, im ersten Bearbeitungsschritt der nächsten Runde verwendet, und die Arbeit einer N-ten Runde, die die rasche ist, den ersten Bearbeitungsschritt startet unter Verwendung der (N-1)-ten äquivalenten Koeffizienten und die N-ten Äquivalenzkoeffizienten im vierten Bearbeitungsschritt bestimmt.

**9.** Verfahren zum Einstellen von äquivalenten spaltbaren Koeffizienten nach Anspruch 7 oder 8,
wobei die einzelne physikalische Größe des Ziels der Auslegungsoptimierung ein Maximum der linearen Wärmeerzeugung des Brennstabs von jeder Plutoniumanreicherungsart oder ein Maximum eines Brennstababbrandes ist. Wobei

A: Quadratische Matrix mit $a_{ij}$ der Gleichung (29) als Elemente,
B: Vektor mit $\Delta LDP_i^{(n-1)}$ als Elemente,
C: Vektor mit $\Delta\varepsilon_i^{(n)}$ als Elemente,

Wobei

LDPi: Vorbestimmter gewünschter Wert der physikalischen Größe, der als Auslegungsziel der Anreicherungstyp i dient.

**10.** Verfahren zum Einstellen von äquivalenten spaltbaren Koeffizienten, das folgendes umfasst:

einen ersten Bearbeitungsschritt mit Targeting einer MOX-Brennelementanordnung, die drei Arten oder mehr von Plutoniumanreicherungsarten enthält, als das MOX-Brennelement, um ein Herstellungsobjekt zu bilden, das die äquivalenten spaltbaren Koeffizienten bezeichnet, die im Voraus durch ein Verfahren erzielt werden, das in einem beliebigen der vorstehenden Ansprüche 2 bis 6 als nullte äquivalente Koeffizienten erzielt werden, und Bestimmen einer $E_{239}$-Anreicherung jedes MOX-Brennstabs der Basisauslegung durch Berechnung aus einer Gleichung (1), auf der Grundlage der nullten äquivalenten Koeffizienten und einer Plutoniumanreicherung jedes MOX-Brennstabs der Basisauslegung;
einen zweiten Bearbeitungsschritt des vorläufigen Bestimmens einer Plutoniumanreicherung jedes MOX-Brennstabs, der gleich der $E_{239}$-Anreicherung jedes MOX-Brennstabs der Grundauslegung aus einer Gleichung (1) wird, wobei die nullten äquivalenten Koeffizienten für jede der ausgewählten Plutonium-Isotopenzusammensetzungen verwendet werden und Bezeichnen derselben als die ursprüngliche Anreicherungsverteilung;
einen dritten Bearbeitungsschritt zum Berechnen eines unendlichen Multiplikationsfaktors für die vorläufig bestimmte Plutoniumanreicherungsverteilung und zum Durchführen einer Vergleichsbestimmung seiner Differenz zu einem unendlichen Multiplikationsfaktor der Basisauslegung und einem vorbestimmten Konvergenzbestimmungswert;
einen vierten Bearbeitungsschritt, wenn die Differenz zwischen den unendlichen Multiplikationsfaktoren der beiden größer als der Konvergenzbestimmungswert in der Bestimmung ist, Anpassung der Plutoniumanreicherung jedes MOX-Brennstabs durch Multiplizieren der vorläufig bestimmten Plutoniumanreicherungsverteilung mit einer Konstante gleichförmig und Erzielen einer neuen vorläufig bestimmten Plutoniumanreicherungsverteilung;
einen Schritt des Iterierens des Schritts mit Rückkehr zum dritten Bearbeitungsschritt für die neue vorläufig bestimmte Plutoniumanreicherungsverteilung, die im vierten Bearbeitungsschritt erzielt wurde, und Durchführen der Bestimmung durch erneutes Berechnen des unendlichen Multiplikationsfaktors, bis die Differenz zwischen den unendlichen Multiplikationsfaktoren der beiden kleiner wird als der Konvergenzbestimmungswert; und
einen fünften Bearbeitungsschritt mit Bestimmen der äquivalenten spaltbaren Koeffizienten mit einem Verfahren nach einem beliebigen der vorstehenden Ansprüche 2 bis 6 auf der Grundlage der Plutoniumanreicherung jedes MOX-Brennstabes zu einem Zeitpunkt, wenn die Differenz zwischen den unendlichen Multiplikationsfaktoren kleiner als der Konvergenzbestimmungswert und jede PlutoniumIsotopenzusammensetzung wird, und Bestimmen derselben als die ersten äquivalenten Koeffizienten, wobei das Verfahren eine Reihe von Arbeiten vom ersten Bearbeitungsschritt bis zum fünften Bearbeitungsschritt iteriert, wobei jede Reihe von Arbeiten die äquivalenten spaltbaren Koeffizienten, die im fünften Bearbeitungsschritt der vorherigen Runde bestimmt wurden, im ersten Bearbeitungsschritt der nächsten Runde verwendet, und die Arbeit einer N-ten Runde, die die rasche ist, den ersten Bearbeitungsschritt startet unter Verwendung der (N-1)-ten äquivalenten Koeffizienten und die N-ten Äquivalenzkoeffizienten im fünften Bearbeitungsschritt bestimmt.

## Revendications

**1.** Procédé mis en oeuvre par un ordinateur pour établir des coefficients de fission équivalents pour chacun de nucléides prédéterminés qui, pour un ciblage, en tant qu'objet de fabrication, d'un ensemble de combustible MOX contenant de l'uranium et du plutonium en tant que matériaux de combustible nucléaire, est utilisé pour déterminer un enrichissement de plutonium correspondant à une composition isotopique de plutonium appliquée aux matériaux de combustible nucléaire par un procédé de fission équivalent,
comprenant les étapes de :

sélection d'une pluralité de compositions isotopiques de plutonium qui couvrent une plage de compositions isotopiques de plutonium à appliquer à ceux-ci jusqu'à un nombre supérieur au nombre total des coefficients de fission équivalents ;
détermination d'une distribution d'enrichissement de chaque barre de combustible MOX qui devient équivalent quant à un facteur de multiplication infini à une conception servant de base prédéterminée pour chacune des compositions isotopiques de plutonium sélectionnées ; et

obtention des coefficients de fission équivalents en calculant une équation obtenue en appliquant un procédé des moindres carrés à un procédé de fission équivalent défini par une équation (1) ;
utilisation d'un enrichissement de plutonium ε basé sur la distribution d'enrichissement déterminée et de données basées sur un rapport de poids que chaque isotope occupe dans l'uranium ou le plutonium dans chaque composition isotopique de plutonium.

$$\varepsilon = \frac{\sum_m c_m \cdot w_m - E_{239}}{\sum_m c_m \cdot w_m - \sum_n c_n \cdot w_n} \qquad (1)$$

où

$\varepsilon$ : enrichissement auquel $k_\infty$ dans une désintégration moyenne de noyau de réacteur à EOC devient une valeur égale au $k_\infty$ du combustible standard
$E_{239}$ : enrichissement auquel $k_\infty$ pour une désintégration moyenne de noyau de réacteur à EOC devient une valeur égale à $k_\infty$ du combustible standard dans une composition isotopique virtuelle composée uniquement de Pu239 et d'U238,
$w$ : rapport de poids que chaque isotope occupe dans l'uranium ou le plutonium avec $\sum_m w_m = 1,\ \sum_n w_n = 1$
$c$ : coefficients de fission équivalents de chaque isotope dans l'uranium ou le plutonium. où on définit que $C_{28} = 0$ et $C_{49} = 1$.
$m$ : indice indiquant chaque isotope de l'uranium. avec

24 : U234
25 : U235
26 : U236
28 : U238

$n$ : indice indiquant chaque isotope du plutonium (Am241 est inclus de manière commode). avec

48 : Pu238
49 : Pu239
40 : Pu240
41 : Pu241
42 : Pu242
51 : Am241

**2.** Procédé pour établir des coefficients de fission équivalents selon la revendication 1,
dans lequel l'étape de détermination de la distribution d'enrichissement détermine la distribution d'enrichissement par une étape d'ajustement consistant à itérer l'étape de multiplication de l'enrichissement de chaque barre de combustible MOX qui est donnée en tant que distribution d'enrichissement initiale par une constante uniformément jusqu'à ce qu'une différence entre un facteur de multiplication infini pour la distribution d'enrichissement définie à l'étape et un facteur de multiplication infini de la conception de base devienne inférieure à une valeur de détermination de convergence prédéterminée.

**3.** Procédé pour établir des coefficients de fission équivalents selon l'une ou l'autre des revendications 1 et 2,
dans lequel C est obtenu par calcul en amenant l'enrichissement de plutonium ε de la composition isotopique de plutonium sélectionnée et les données basées sur le rapport de poids que chaque isotope occupe à correspondre à une équation (11) en tant que fonction d'ajustement y et variables x de la fonction d'ajustement.

$$\mathbf{C} = \mathbf{A}^{-1}\,\mathbf{B} \qquad (11)$$

**A** : matrice carrée ayant $a_{ij}$ en tant qu'éléments,
**B** : vecteur ayant $b_i$ en tant qu'éléments,
**C** : vecteur ayant des coefficients de fission équivalents non triviaux et $E_{239}$ en tant qu'éléments,

$$a_{ij} = \sum_{l} \left[ f_i\left(x_{1,l}, x_{2,l}, \ldots\right) \cdot f_j\left(x_{1,l}, x_{2,l}, \ldots\right) \right]$$

$$b_i = \sum_{l} \left[ y_l \cdot f_i\left(x_{1,l}, x_{2,l}, \ldots\right) \right]$$

$l$ : indice indiquant un ensemble de données à ajuster.

**4.** Procédé pour établir des coefficients de fission équivalents selon la revendication 3, dans lequel une fonction montrée dans une équation (12) est établie en tant que fonction d'ajustement y et variables x de la fonction d'ajustement, et dans lequel C est obtenu par calcul en amenant cette équation (12) à correspondre à l'équation (11).

$$\begin{aligned} y &:= -\varepsilon \cdot w_{49} \\ x_1 &:= w_{24} \cdot (1-\varepsilon) \\ x_2 &:= w_{25} \cdot (1-\varepsilon) \\ x_3 &:= w_{26} \cdot (1-\varepsilon) \\ x_4 &:= w_{48} \cdot \varepsilon \\ x_5 &:= w_{40} \cdot \varepsilon \\ x_6 &:= w_{41} \cdot \varepsilon \\ x_7 &:= w_{42} \cdot \varepsilon \\ x_8 &:= w_{51} \cdot \varepsilon \end{aligned}$$

$$\begin{aligned} c_1 &:= c_{24} &;\quad f_1(x_1, x_2, \ldots x_8) &:= x_1 \\ c_2 &:= c_{25} &;\quad f_2(x_1, x_2, \ldots x_8) &:= x_2 \\ c_3 &:= c_{26} &;\quad f_3(x_1, x_2, \ldots x_8) &:= x_3 \\ c_4 &:= c_{48} &;\quad f_4(x_1, x_2, \ldots x_8) &:= x_4 \\ c_5 &:= c_{40} &;\quad f_5(x_1, x_2, \ldots x_8) &:= x_5 \\ c_6 &:= c_{41} &;\quad f_6(x_1, x_2, \ldots x_8) &:= x_6 \\ c_7 &:= c_{42} &;\quad f_7(x_1, x_2, \ldots x_8) &:= x_7 \\ c_8 &:= c_{51} &;\quad f_8(x_1, x_2, \ldots x_8) &:= x_8 \\ c_9 &:= -E_{239} &;\quad f_9(x_1, x_2, \ldots x_8) &:= 1 \end{aligned} \qquad (12)$$

**5.** Procédé pour établir des coefficients de fission équivalents selon l'une ou l'autre des revendications 2 et 3, dans lequel les coefficients de fission équivalents qui devraient être établis sont chacun amenés à dépendre d'une fraction de composition d'un isotope d'un type ou plus qui est sélectionné dans un ordre décroissant d'une section transversale macroscopique, le plus grand en premier, dans le plutonium.

**6.** Procédé pour établir des coefficients de fission équivalents selon la revendication 5, dans lequel une équation (14a) est établie en désignant une fonction montrée dans une équation (13a) en tant que fonction d'ajustement y et variables x de la fonction d'ajustement qui devrait être établie, et C est obtenu par calcul en amenant cette équation (14a) à correspondre à l'équation (11).

$$
\begin{aligned}
c_{m(k)} &= 0, && k=1\\
c_{m(k)} &= c_{m(k),0} + \sum_{k'=1}^{N} c_{m(k),n(k')} \cdot w_{n(k')}, && k>1\\
c_{n(k)} &= 1, && k=1\\
c_{n(k)} &= c_{n(k),0} + \sum_{k'=1}^{N'} c_{n(k),n(k')} \cdot w_{n(k')}, && k>1
\end{aligned}
\qquad (13a)
$$

où

*m(k)* : séquence (exemple : {28, 24, 25, 26}), agencement d'un symbole entier 28 du premier terme (indice $k$ = 1) indiquant l'U238 qui est trivial en tant que coefficient de fission équivalent plus les termes suivants (indice $k$ = 2, ...) de termes entiers indiquant chacun un nucléide d'isotope d'uranium qui est non trivial en tant que coefficient de fission équivalent et qui devrait être pris en considération,
*n(k)* : séquence (exemple : {49, 40, 41, 42, 51, 48}), agencement d'un symbole entier 49 du premier terme (indice $k$ = 1) indiquant le Pu239 qui est trivial en tant que coefficient de fission équivalent plus les termes suivants (indice $k$ = 2, ...) de termes entiers indiquant chacun un nucléide d'isotope de Pu qui est non trivial en tant que coefficient de fission équivalent et qui devrait être pris en considération (Am241 est également inclus de manière commode) (cependant, pour l'indice $k$ = 2 et les $k$ suivants, dans l'ordre décroissant de section transversale macroscopique),
$N$ : nombre d'isotopes de Pu qui devraient être pris en considération lors d'une dépendance d'une fraction de composition d'isotope de Pu des coefficients de fission équivalents
$N'$ : le plus petit de $N$ et de $k$-1 ($N' := \min\{N, k-1\}$).

$$
\begin{aligned}
y &:= -\varepsilon \cdot w_{49} && && \\
x_{m(k),0} &:= (1-\varepsilon) \cdot w_{m(k)}, & x_{m(k),n(k')} &:= x_{m(k),0} \cdot w_{n(k')} &&;\ k>1,\ k'=1, .., N\\
x_{n(k),0} &:= \varepsilon \cdot w_{n(k)}, & x_{n(k),n(k')} &:= x_{n(k),0} \cdot w_{n(k')} &&;\ k>1,\ k'=1, ..., N'\\
f_{m(k),0} &:= x_{m(k),0}, & f_{m(k),n(k')} &:= x_{m(k),n(k')} &&;\ k>1,\ k'=1, ..., N\\
f_{n(k),0} &:= x_{n(k),0}, & f_{n(k),n(k')} &:= x_{n(k),n(k')} &&;\ k>1,\ k'=1, ..., N'\\
f_{49,0} &:= 1 && &&
\end{aligned}
\qquad (14a)
$$

**7.** Procédé pour établir des coefficients de fission équivalents selon l'une quelconque des revendications 2 à 6, comprenant :

une étape, dans le ciblage d'un ensemble de combustible MOX contenant trois types ou plus de types d'enrichissement de plutonium en tant qu'ensemble de combustible MOX pour être un objet de fabrication, d'établissement d'une distribution d'enrichissement qui reproduit une distribution de la quantité physique prédéterminée pour chaque type d'enrichissement de plutonium sur la base d'une équation (30) utilisant une équation (29), une équation (31), et l'équation (32) en relation avec une quantité physique unique d'une cible d'optimisation de conception pour chacune des compositions isotopiques de plutonium sélectionnées ;
une étape d'ajustement pour calculer la quantité physique unique de la cible d'optimisation de conception pour la distribution d'enrichissement établie à l'étape, pour itérer l'étape jusqu'à ce que sa différence par rapport à la distribution de quantité physique prédéterminée devienne inférieure à une valeur de détermination de convergence prédéterminée, et pour désigner la distribution d'enrichissement obtenue en tant que distribution d'enrichissement initiale ; et
une étape d'ajustement, lorsqu'une différence entre un facteur de multiplication infini pour la distribution d'enrichissement initiale et un facteur de multiplication infini de la conception de base est supérieure à la valeur de détermination de convergence prédéterminée, pour itérer une étape de multiplication de la distribution d'enrichissement initiale par une constante uniformément jusqu'à ce que la différence devienne inférieure à celle-ci,

dans lequel les coefficients de fission équivalents sont obtenus pour chaque type d'enrichissement en appliquant le procédé des moindres carrés basé sur la distribution d'enrichissement ajustée par cette étape d'ajustement.

$$a_{i,j} = \Delta LDP_{i,j} / \Delta \varepsilon_j \quad (29)$$

où

$LDP_i$: quantité physique servant d'objectif de conception de type d'enrichissement $i$,
$\Delta LDP_{i,j}$ : quantité de fluctuation de $LDP_i$ à l'instant d'une fluctuation de l'enrichissement de Pu de type d'enrichissement j,
$\Delta\varepsilon_j$ : quantité de fluctuation d'enrichissement de Pu de type d'enrichissement j,
$i$ : indice indiquant un type d'enrichissement i,
$j$ : indice indiquant un type d'enrichissement $j$.

$$\varepsilon_i^{(n)} = \varepsilon_i^{(n-1)} + \Delta\varepsilon_i^{(n)} \quad (30)$$

$\varepsilon_i^{(n-1)}$ : enrichissement de type d'enrichissement $i$ avant un ajustement d'enrichissement,
$\varepsilon_i^{(n)}$ : enrichissement de type d'enrichissement $i$ après un ajustement d'enrichissement.

$$\mathbf{C} = \mathbf{A}^{-1}\,\mathbf{B} \quad (31)$$

**A** : matrice carrée ayant $a_{ij}$ de l'équation (29) en tant qu'éléments,
**B** : vecteur ayant $\Delta LDP_i^{(n-1)}$ en tant qu' éléments,
**C :** vecteur ayant $\Delta\varepsilon_i^{(n)}$ en tant qu'éléments.

$$\Delta LDP_i^{(n-1)} = LDP_i^T - LDP_i^{(n-1)} \quad (32)$$

$LDP_i^T$ **:** valeur souhaitée prédéterminée de quantité physique servant d'objectif de conception de type d'enrichissement i.

**8.** Procédé pour établir des coefficients de fission équivalents, comprenant :

une première étape de traitement pour désigner des coefficients de fission équivalents et un enrichissement en $E_{239}$ qui sont obtenus à l'avance par le procédé décrit dans la revendication 7 en tant que zéro-ièmes coefficients équivalents, pour déterminer provisoirement un enrichissement de plutonium de chaque barre de combustible MOX qui devient égal à l'enrichissement en $E_{239}$ de l'équation (1) en utilisant les zéro-ièmes coefficients équivalents pour chacune des compositions isotopiques de plutonium sélectionnées, et pour le désigner en tant que distribution d'enrichissement initiale ;
une deuxième étape de traitement pour calculer un facteur de multiplication infini pour la distribution d'enrichissement du plutonium déterminée provisoirement et pour effectuer une détermination de comparaison de sa différence par rapport à un facteur de multiplication infini de la conception de base et à la valeur de détermination de convergence prédéterminée ;
une troisième étape de traitement, lorsque la différence entre les facteurs de multiplication infinis des deux est supérieure à la valeur de détermination de convergence, pour ajuster l'enrichissement de plutonium de chaque barre de combustible MOX en multipliant la distribution d'enrichissement du plutonium déterminée provisoirement par une constante uniformément, et pour obtenir une nouvelle distribution d'enrichissement du plutonium déterminée provisoirement ;
une étape d'itération de l'étape de retour à la deuxième étape de traitement pour la nouvelle distribution d'enrichissement du plutonium déterminée provisoirement obtenue à la troisième étape de traitement, de calcul du facteur de multiplication infini de nouveau, et d'exécution de la détermination, jusqu'à ce que la différence entre les facteurs de multiplication infinis des deux devienne inférieure à la valeur de détermination de convergence ; et
une quatrième étape de traitement pour déterminer les coefficients de fission équivalents par le procédé décrit dans la revendication 7 sur la base de l'enrichissement de plutonium de chaque barre de combustible MOX à un moment où la différence entre les facteurs de multiplication infinis devient inférieure à la valeur de détermination de convergence et de chaque composition de plutonium, et pour les désigner en tant que premiers coefficients équivalents,
dans lequel le procédé itère une série de tâches de la première étape de traitement à la quatrième étape de traitement, chaque série de tâches utilise les coefficients de fission équivalents déterminés à la quatrième étape de traitement d'un tour précédent dans la première étape de traitement du tour suivant, et la tâche d'un Nième tour qui est le dernier lance la première étape de traitement en utilisant les (N-1) ièmes coefficients équivalents et détermine les Nièmes coefficients équivalents dans la quatrième étape de traitement.

**9.** Procédé pour établir des coefficients de fission équivalents selon l'une ou l'autre des revendications 7 et 8, dans lequel la quantité physique unique de la cible d'optimisation de conception est un maximum de la génération de chaleur linéaire de la barre de combustible de chaque type d'enrichissement de plutonium ou un maximum de désintégration de la barre de combustible.
Où

A : matrice carrée ayant $a_{ij}$ de l'équation (29) en tant qu'éléments
B : vecteur ayant $\Delta LDP_i^{(n-1)}$ en tant qu' éléments,
C : vecteur ayant $\Delta\varepsilon_i^{(n)}$ en tant qu'éléments.

Où

LDPi : valeur souhaitée prédéterminée de la quantité physique servant d'objectif de conception de type d'enrichissement i.

**10.** Procédé pour établir des coefficients de fission équivalents, comprenant :

une première étape de traitement, lors d'un ciblage d'un ensemble de combustible MOX contenant trois types ou plus de types d'enrichissement de plutonium en tant qu'ensemble de combustible MOX pour être un objet de fabrication, pour désigner les coefficients de fission équivalents obtenus à l'avance par un procédé décrit par l'une quelconque des revendications 2 à 6 en tant que zéro-ièmes coefficients équivalents et pour déterminer un enrichissement en $E_{239}$ de chaque barre de combustible MOX de la conception de base par un calcul à partir d'une équation (1) sur la base des zéro-ièmes coefficients équivalents et d'un enrichissement de plutonium de chaque barre de combustible MOX de la conception de base ;
une deuxième étape de traitement pour déterminer provisoirement un enrichissement de plutonium de chaque barre de combustible MOX qui devient égal à l'enrichissement en $E_{239}$ de chaque barre de combustible MOX de la conception de base à partir d'une équation (1) en utilisant les zéro-ièmes coefficients équivalents pour chacune des compositions isotopiques de plutonium sélectionnées et pour le désigner en tant que distribution d'enrichissement initiale ;
une troisième étape de traitement pour calculer un facteur de multiplication infini pour la distribution d'enrichissement du plutonium déterminée provisoirement et pour effectuer une détermination de comparaison de sa différence par rapport au facteur de multiplication infini de la conception de base et à une valeur de détermination de convergence prédéterminée ;
une quatrième étape de traitement, lorsque la différence entre les facteurs de multiplication infinis des deux est supérieure à la valeur de détermination de convergence dans la détermination, pour ajuster l'enrichissement de plutonium de chaque barre de combustible MOX en multipliant la distribution d'enrichissement du plutonium déterminée provisoirement par une constante uniformément, et pour obtenir une nouvelle distribution d'enrichissement du plutonium déterminée provisoirement ;
une étape d'itération de l'étape de retour à la troisième étape de traitement pour la nouvelle distribution d'enrichissement du plutonium déterminée provisoirement obtenue à la quatrième étape de traitement et d'exécution de la détermination en calculant le facteur de multiplication infini de nouveau jusqu'à ce que la différence entre les facteurs de multiplication infinis des deux devienne inférieure à la valeur de détermination de convergence ; et
une cinquième étape de traitement pour déterminer les coefficients de fission équivalents par un procédé selon l'une quelconque des revendications 2 à 6 sur la base de l'enrichissement de plutonium de chaque barre de combustible MOX à un moment où la différence entre les facteurs de multiplication infinis devient inférieure à la valeur de détermination de convergence et de chaque composition isotopique de plutonium, et pour les désigner en tant que premiers coefficients équivalents, dans lequel le procédé itère une série de tâches de la première étape de traitement à la cinquième étape de traitement, chacune de la série de tâches utilise les coefficients de fission équivalents déterminés dans la cinquième étape de traitement du tour précédent dans la première étape de traitement du tour suivant, et la tâche d'un Nième tour qui est le dernier lance la première étape de traitement en utilisant les (N-1)-ièmes coefficients équivalents et détermine les Nièmes coefficients équivalents à la cinquième étape de traitement.

[Fig.1]

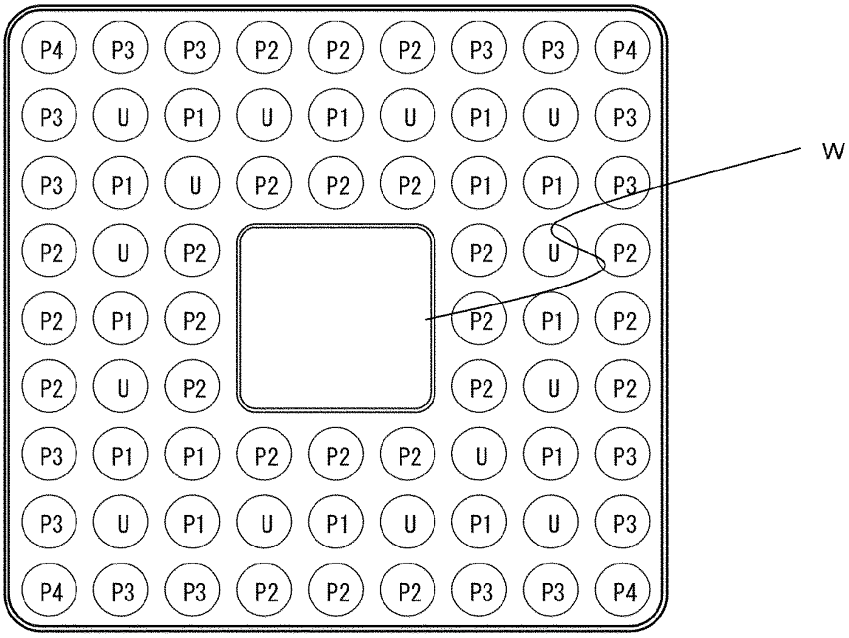
P4
P3
P2
P1
U
W

[Fig.2]

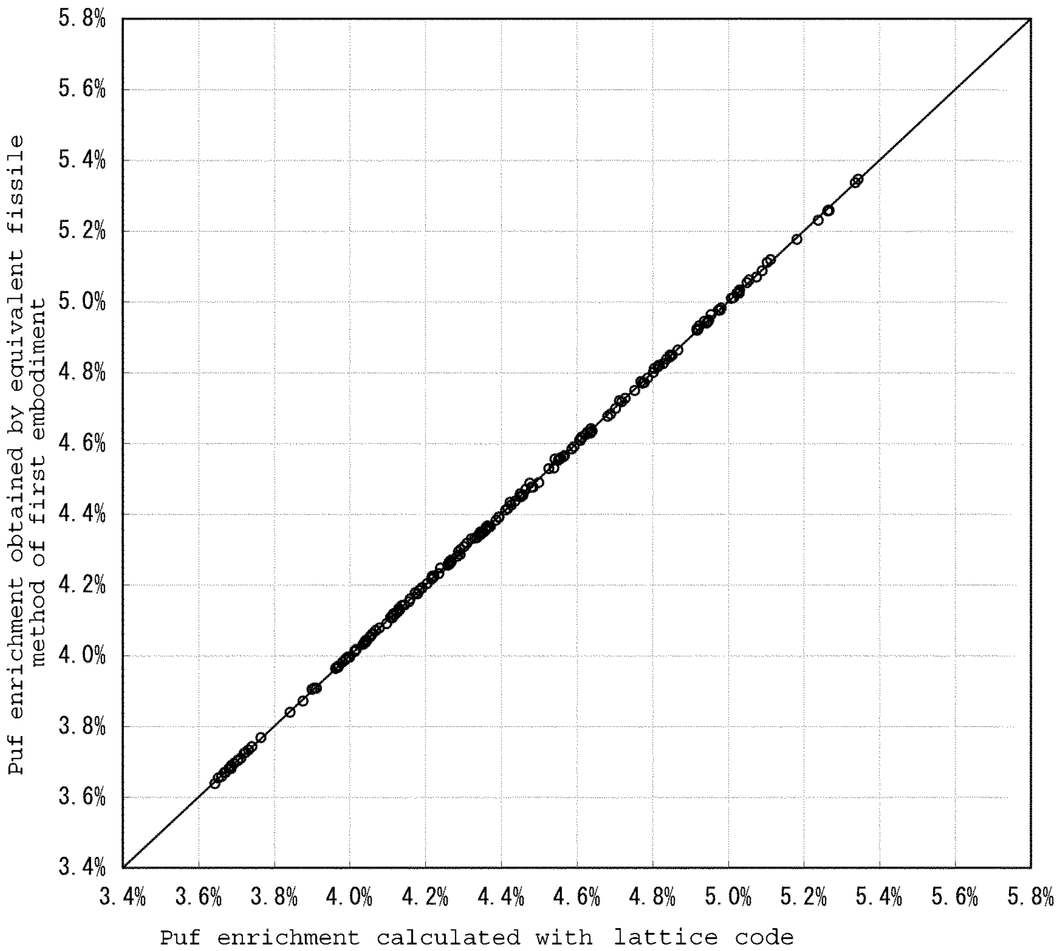
5.8%
5.6%
5.4%
5.2%
5.0%
4.8%
4.6%
4.4%
4.2%
4.0%
3.8%
3.6%
3.4%
Puf enrichment obtained by equivalent fissile method of first embodiment
3.4% 3.6% 3.8% 4.0% 4.2% 4.4% 4.6% 4.8% 5.0% 5.2% 5.4% 5.6% 5.8%
Puf enrichment calculated with lattice code

[Fig.3]

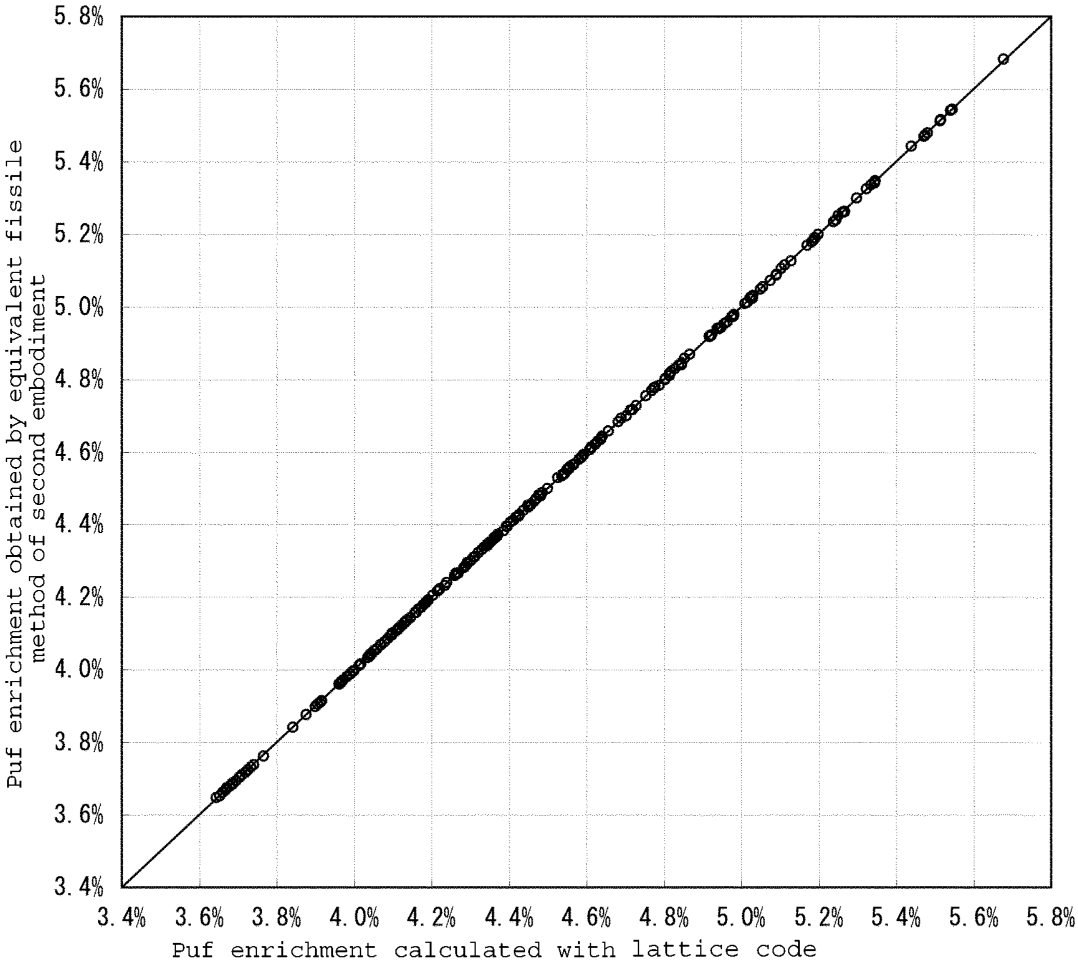
Puf enrichment obtained by equivalent fissile method of second embodiment
5.8%
5.6%
5.4%
5.2%
5.0%
4.8%
4.6%
4.4%
4.2%
4.0%
3.8%
3.6%
3.4%
3.4% 3.6% 3.8% 4.0% 4.2% 4.4% 4.6% 4.8% 5.0% 5.2% 5.4% 5.6% 5.8%
Puf enrichment calculated with lattice code

[Fig.4]

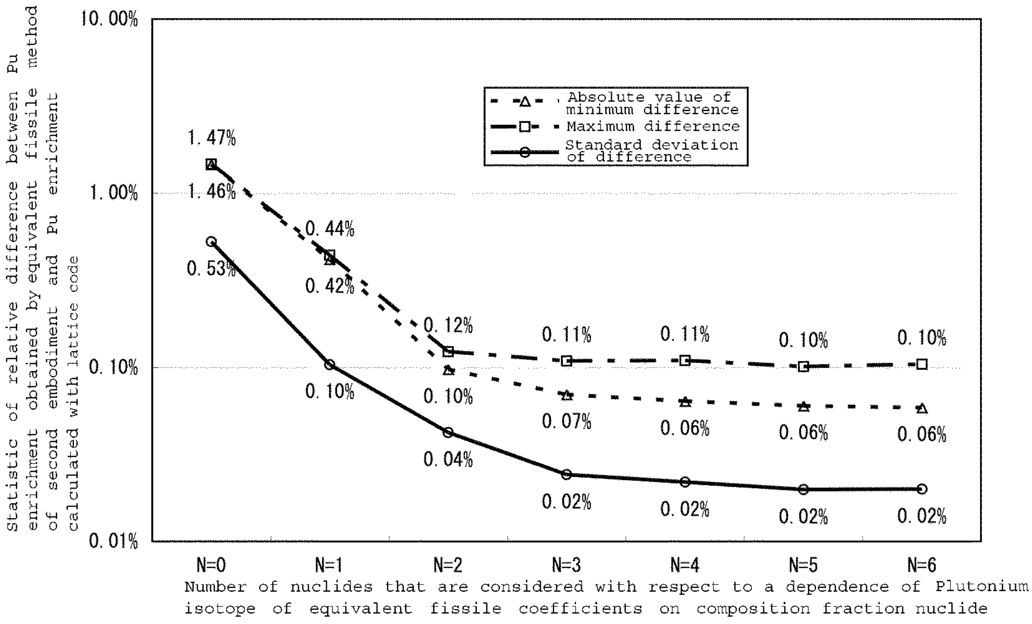
Statistic of relative difference between Pu enrichment obtained by equivalent fissile method of second embodiment and Pu enrichment calculated with lattice code
10.00%
1.00%
0.10%
0.01%
Absolute value of minimum difference
Maximum difference
Standard deviation of difference
1.47%
1.46%
0.53%
0.44%
0.42%
0.10%
0.12%
0.10%
0.04%
0.11%
0.07%
0.02%
0.11%
0.06%
0.02%
0.10%
0.06%
0.02%
0.10%
0.06%
0.02%
N=0 N=1 N=2 N=3 N=4 N=5 N=6
Number of nuclides that are considered with respect to a dependence of Plutonium isotope of equivalent fissile coefficients on composition fraction nuclide

[Fig.5]

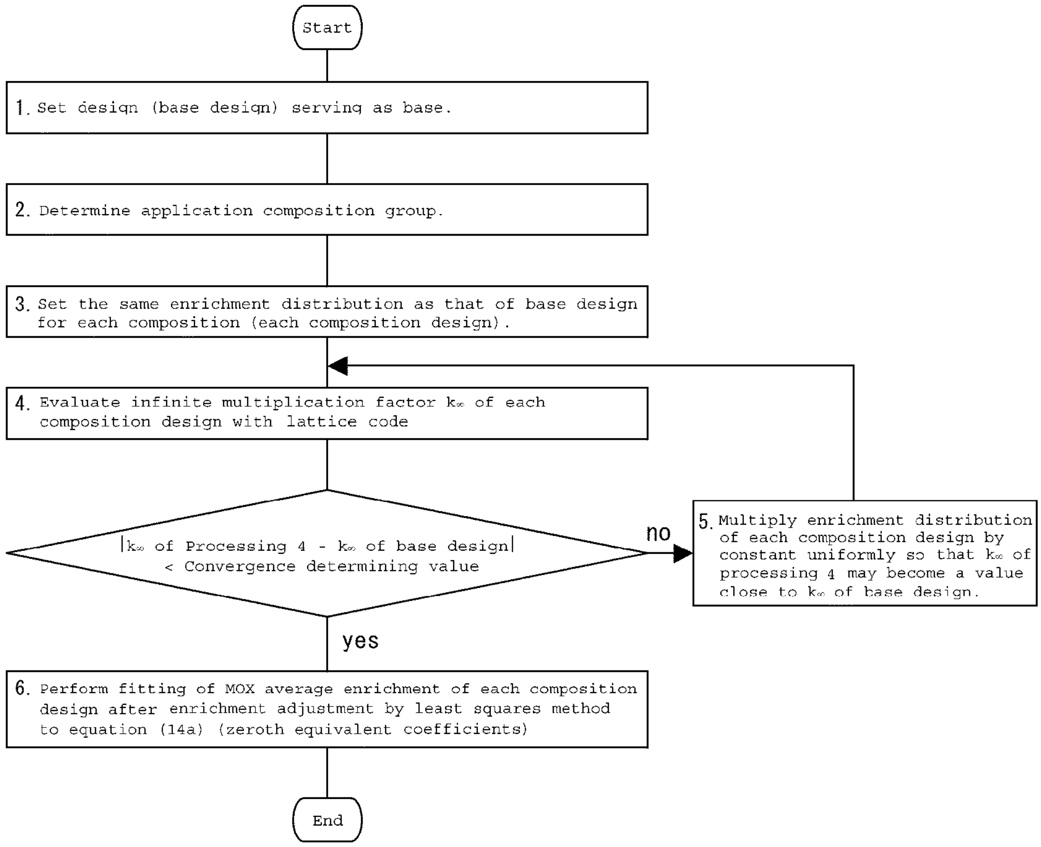
Start
1. Set design (base design) serving as base.
2. Determine application composition group.
3. Set the same enrichment distribution as that of base design for each composition (each composition design).
4. Evaluate infinite multiplication factor k∞ of each composition design with lattice code
|k∞ of Processing 4 - k∞ of base design| < Convergence determining value
no
5. Multiply enrichment distribution of each composition design by constant uniformly so that k∞ of processing 4 may become a value close to k∞ of base design.
yes
6. Perform fitting of MOX average enrichment of each composition design after enrichment adjustment by least squares method to equation (14a) (zeroth equivalent coefficients)
End

[Fig.6]

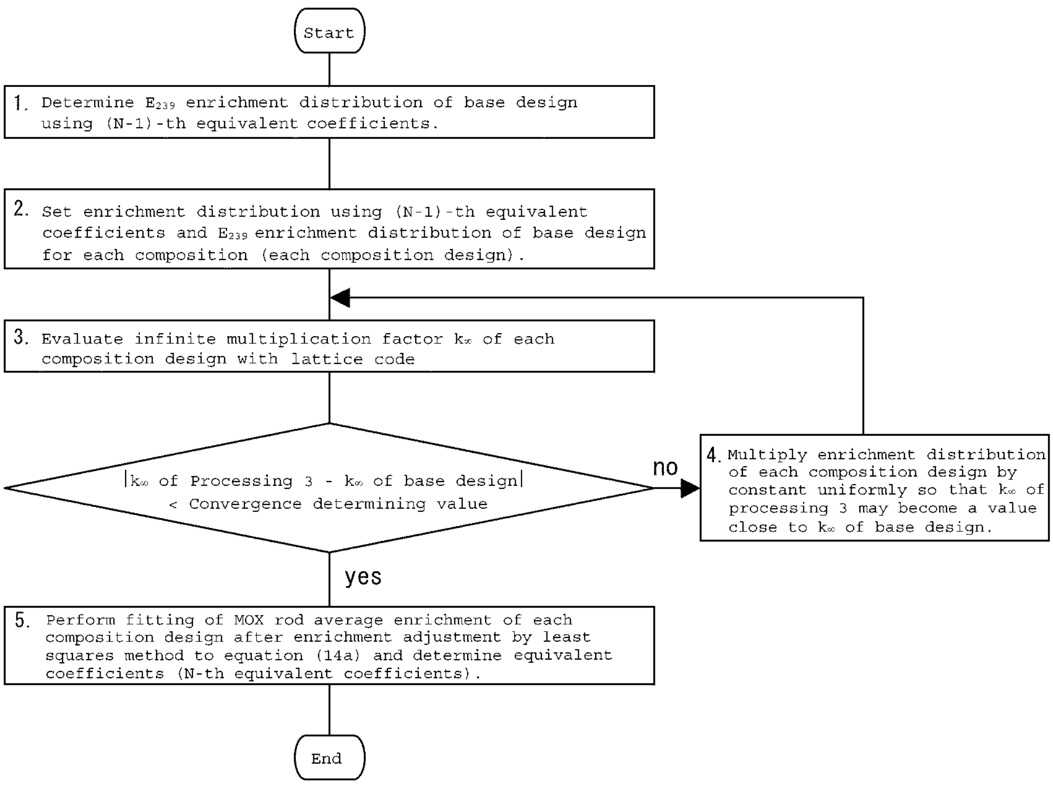
Start
1. Determine E239 enrichment distribution of base design using (N-1)-th equivalent coefficients.
2. Set enrichment distribution using (N-1)-th equivalent coefficients and E239 enrichment distribution of base design for each composition (each composition design).
3. Evaluate infinite multiplication factor k∞ of each composition design with lattice code
|k∞ of Processing 3 - k∞ of base design| < Convergence determining value
no
4. Multiply enrichment distribution of each composition design by constant uniformly so that k∞ of processing 3 may become a value close to k∞ of base design.
yes
5. Perform fitting of MOX rod average enrichment of each composition design after enrichment adjustment by least squares method to equation (14a) and determine equivalent coefficients (N-th equivalent coefficients).
End

[Fig.7]

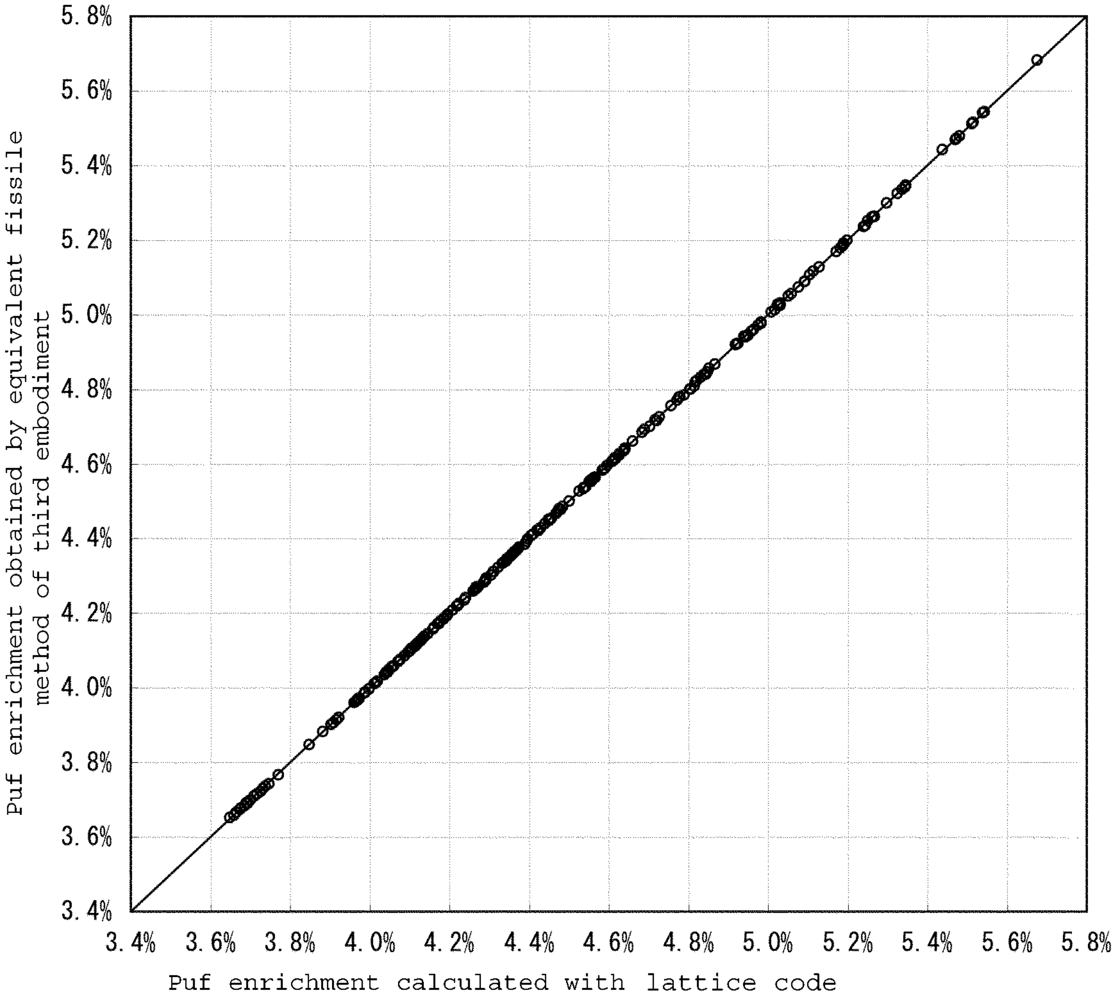
5.8%
5.6%
5.4%
5.2%
5.0%
4.8%
4.6%
4.4%
4.2%
4.0%
3.8%
3.6%
3.4%
Puf enrichment obtained by equivalent fissile method of third embodiment
3.4% 3.6% 3.8% 4.0% 4.2% 4.4% 4.6% 4.8% 5.0% 5.2% 5.4% 5.6% 5.8%
Puf enrichment calculated with lattice code

[Fig.8]

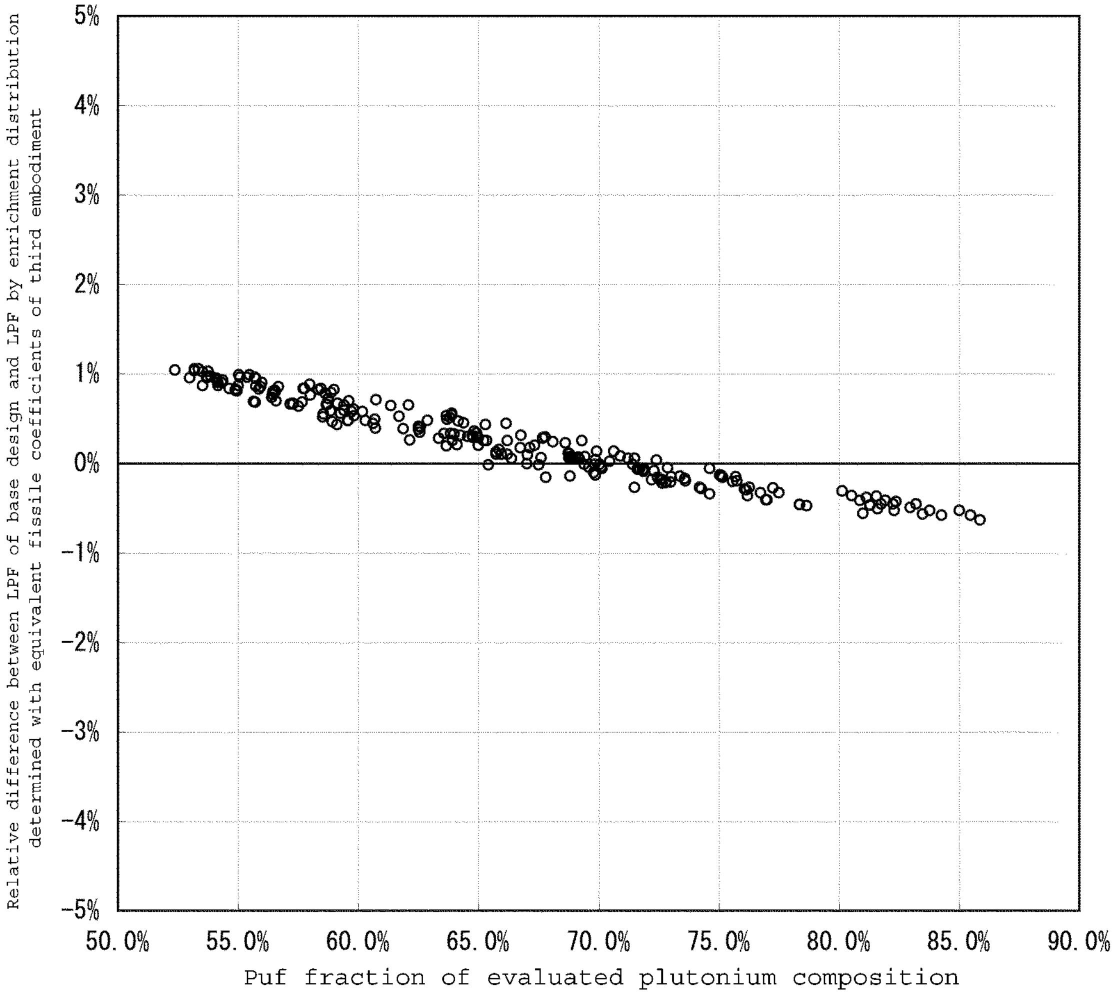
5%
4%
3%
2%
1%
0%
-1%
-2%
-3%
-4%
-5%
50.0%
55.0%
60.0%
65.0%
70.0%
75.0%
80.0%
85.0%
90.0%
Puf fraction of evaluated plutonium composition
Relative difference between LPF of base design and LPF by enrichment distribution determined with equivalent fissile coefficients of third embodiment

[Fig.9]

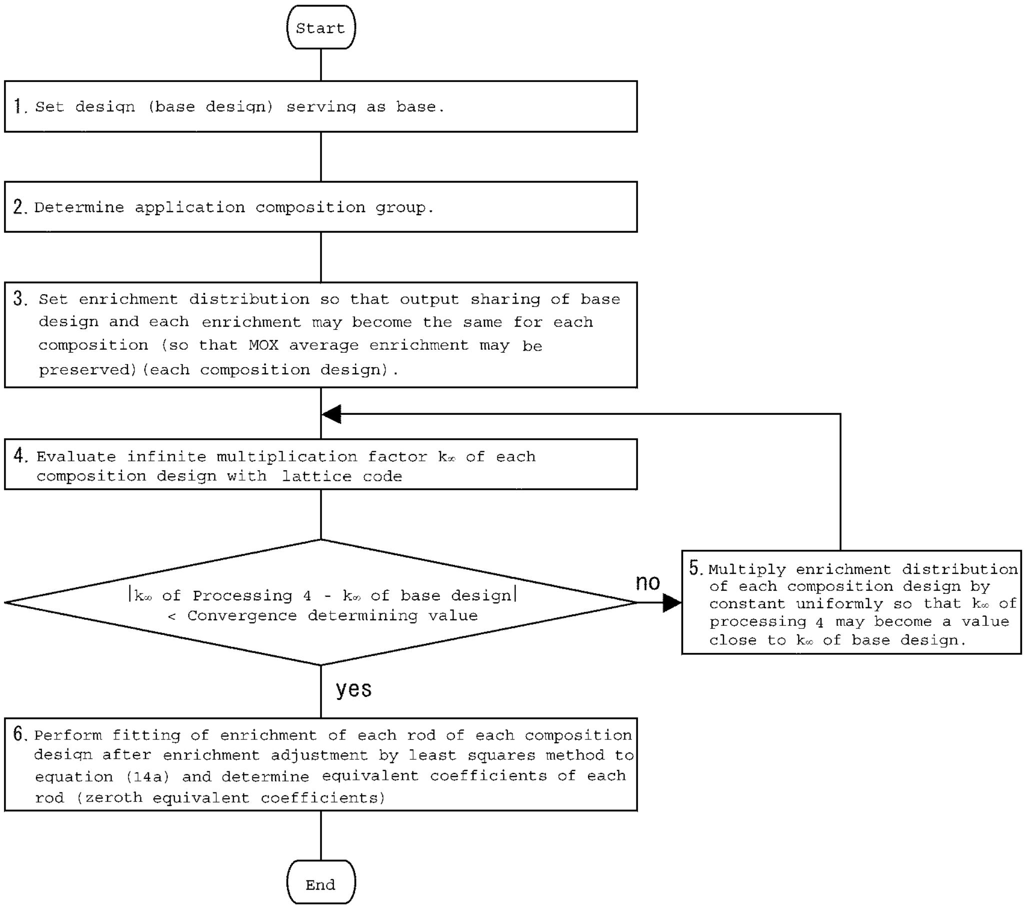
Start
1. Set design (base design) serving as base.
2. Determine application composition group.
3. Set enrichment distribution so that output sharing of base design and each enrichment may become the same for each composition (so that MOX average enrichment may be preserved)(each composition design).
4. Evaluate infinite multiplication factor k∞ of each composition design with lattice code
|k∞ of Processing 4 - k∞ of base design| < Convergence determining value
no
5. Multiply enrichment distribution of each composition design by constant uniformly so that k∞ of processing 4 may become a value close to k∞ of base design.
yes
6. Perform fitting of enrichment of each rod of each composition design after enrichment adjustment by least squares method to equation (14a) and determine equivalent coefficients of each rod (zeroth equivalent coefficients)
End

[Fig.10]

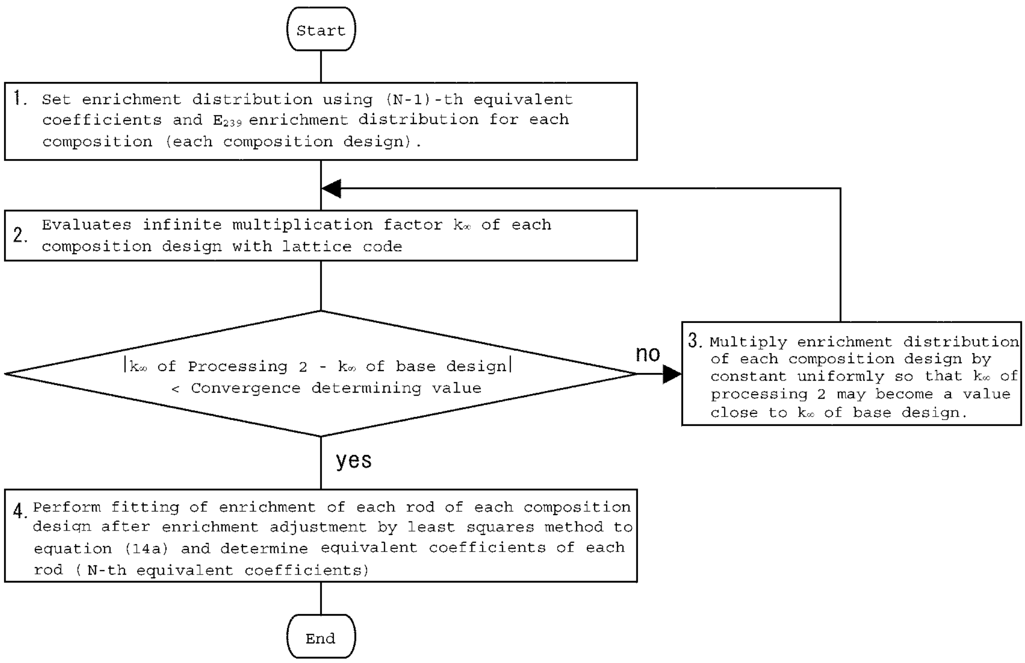
Start
1. Set enrichment distribution using (N-1)-th equivalent coefficients and E239 enrichment distribution for each composition (each composition design).
2. Evaluates infinite multiplication factor k∞ of each composition design with lattice code
|k∞ of Processing 2 - k∞ of base design| < Convergence determining value
no
3. Multiply enrichment distribution of each composition design by constant uniformly so that k∞ of processing 2 may become a value close to k∞ of base design.
yes
4. Perform fitting of enrichment of each rod of each composition design after enrichment adjustment by least squares method to equation (14a) and determine equivalent coefficients of each rod ( N-th equivalent coefficients)
End

[Fig.11]

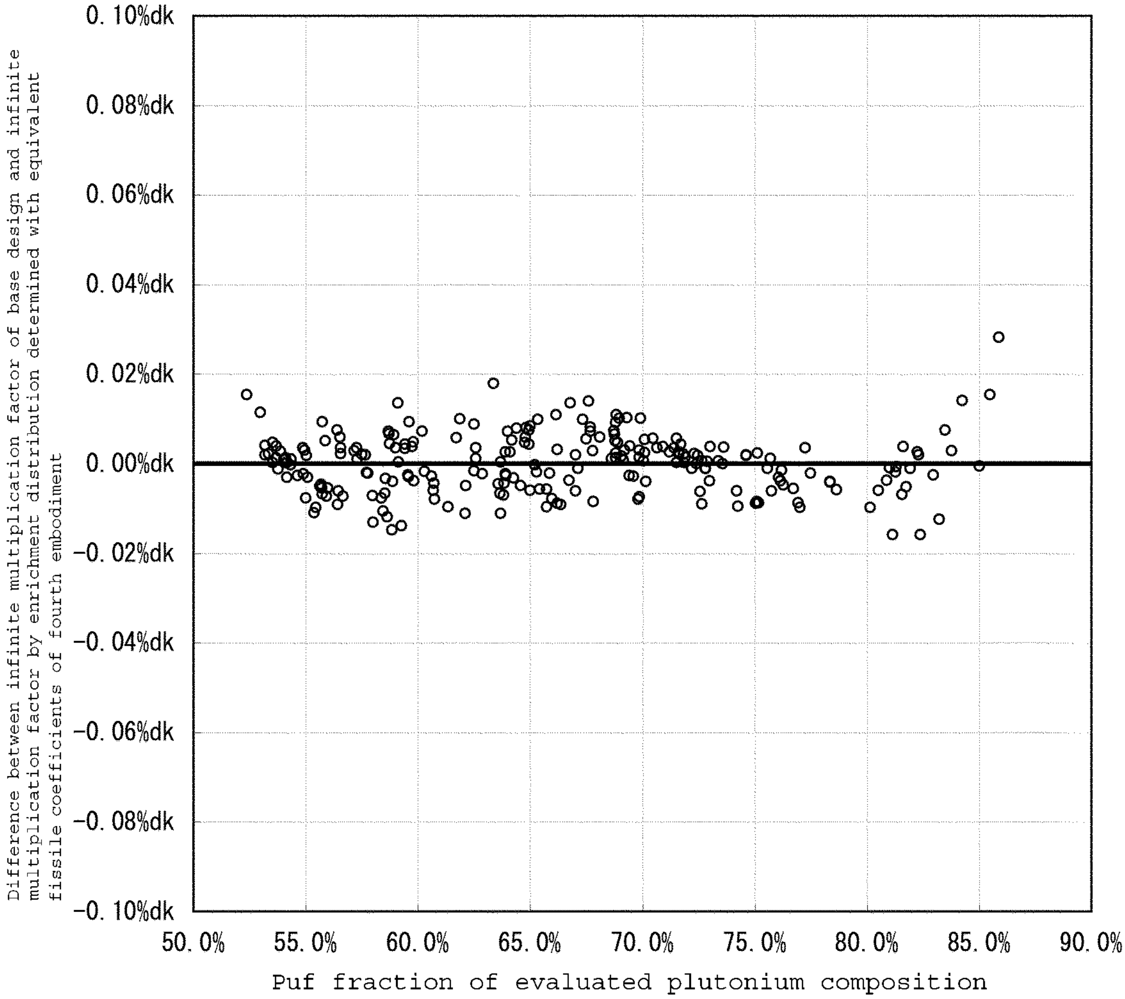
0.10%dk
0.08%dk
0.06%dk
0.04%dk
0.02%dk
0.00%dk
-0.02%dk
-0.04%dk
-0.06%dk
-0.08%dk
-0.10%dk
Difference between infinite multiplication factor of base design and infinite multiplication factor by enrichment distribution determined with equivalent fissile coefficients of fourth embodiment
50.0%
55.0%
60.0%
65.0%
70.0%
75.0%
80.0%
85.0%
90.0%
Puf fraction of evaluated plutonium composition

[Fig.12]

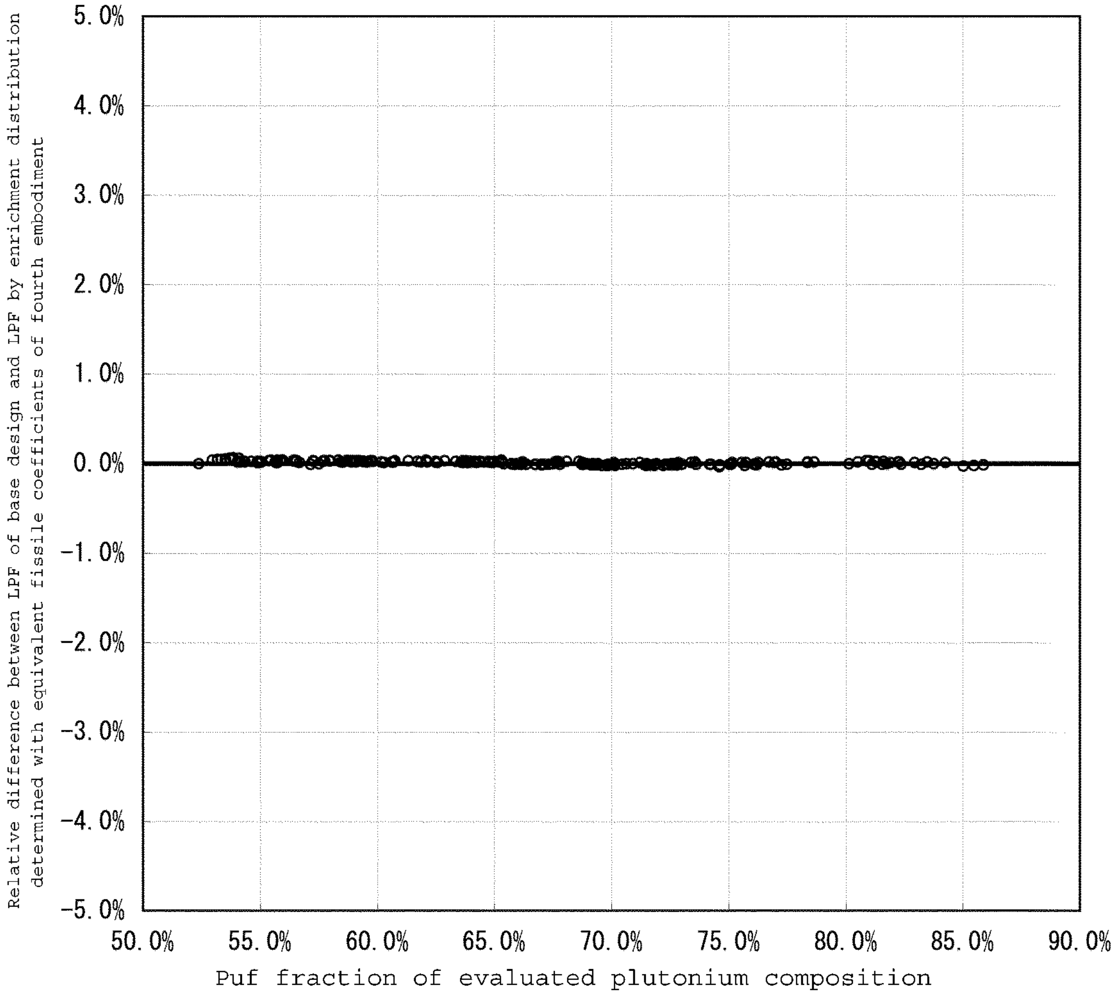


[Fig.13]

```
!-----------------------------------------------------------------------------
!  This program runs demonstrates LSM Fitting.
!-----------------------------------------------------------------------------
program main

   use demo_lsm, only:                                                     &
          demo_Fit

   implicit none

   call demo_Fit ()

end program main
```

[Fig.14]

```
!-----------------------------------------------------------------------------
!    This module provides procedures to demonstrate LSM Fitting for NFI's new
!  EFMC method.
!-----------------------------------------------------------------------------
module demo_lsm

   use numeric, only:                                                        &
          RT => REAL_TYPE

   use io, only:                                                             &
          generate_Unit_Number,                                              &
          get_Number_of_Lines

   use string, only:                                                         &
          count_Tokens

   use math_fitting_curve, only:                                             &
          f

   use math_fitting_lsm, only:                                               &
          fit

   implicit none

   private

   public :: demo_Fit

contains

   !--------------------------------------------------------------------------
   !  This subroutine demonstrates LSM Fitting for NFI's new EFMC method.
   !--------------------------------------------------------------------------
   subroutine demo_Fit ()

      integer,   parameter    :: number_of_Coefficients = 9

      integer                 :: input
      integer                 :: l, m
      character*(1024)        :: s
      real (RT), allocatable  :: x(:, :)
      real (RT), allocatable  :: y(   :)
      real (RT)               :: b(number_of_Coefficients)

   !> allocate x and y
      input = generate_Unit_Number ()
      open (input, file = "input.txt")
      l = get_Number_of_Lines (input) - 1

      read (input, '(/, a)') s
      m = count_Tokens (s) - 1

      allocate (x(m, l))
      allocate (y(   l))
   !<
```

**[Fig.15]**

```
   !> read x and y
      call read_Data (input, x, y)
      close (input)
   !<

   !> fit to curve
      call fit (f, x, y, b)
   !<

      print *, b

      deallocate (x)
      deallocate (y)

   end subroutine demo_Fit

   !-----------------------------------------------------------------------------
   !  This subroutine reads the fitting data from the unit number "input".
   !-----------------------------------------------------------------------------
   subroutine read_Data (input, x, y)

      integer,   intent (in    ) :: input    !  an unit number of input file
      real (RT), intent (in out) :: x(:, :)  !  variables (x1,1  x2,1 ...)
      real (RT), intent (in out) :: y(   :)  !  variables (y1    y2   ...)

      integer :: l

      rewind (input)

      read (input, *)
      do l = 1, size (y)
         read (input, *) x(:, l), y(l)
      end do

   end subroutine read_Data

end module demo_lsm
```

[Fig.16]

```
!---------------------------------------------------------------------------------
!    This module provides utility procedures about the fitting method with Least
!  Squares Method, LSM.
!---------------------------------------------------------------------------------
module math_fitting_lsm

   use numeric, only:                                                            &
          RT => REAL_TYPE

   use math_matrix, only:                                                        &
          solv

   implicit none

   private

   public :: fit

contains

   !------------------------------------------------------------------------------
   !    This subroutine calculates the expansion coefficients "c" for the
   !  fitting curve functions "f".
   !------------------------------------------------------------------------------
   subroutine fit (f, x, y, c)

      real (RT), external        :: f         !  fitting curve functions
      real (RT), intent (in    ) :: x(:, :)   !  variables (x1,1  x2,1 ...)
      real (RT), intent (in    ) :: y(   :)   !  variables (y1    y2   ...)
      real (RT), intent (in out) :: c(:)      !  expansion coefficients

      real (RT), allocatable     :: a(:, :)
      real (RT), allocatable     :: b(:)

      allocate (a(size (c), size (c)))
      allocate (b(size (c)))

      call set_Coefficient_Matrix (f, x,    a)
      call set_Right_Term_Vector  (f, x, y, b)
      call solv (a, c, b)

      deallocate (a)
      deallocate (b)

   end subroutine fit
```

[Fig.17]

```
   !--------------------------------------------------------------------------
   !  This subroutine sets the left term matrix "A" of LSM.
   !--------------------------------------------------------------------------
   subroutine set_Coefficient_Matrix (f, x, a)

      real (RT), external        :: f          !  fitting curve functions
      real (RT), intent (in    ) :: x(:, :)    !  variables (x1,1  x2,1 ...)
      real (RT), intent (in out) :: a(:, :)    !  left term matrix "A" of LSM

      integer   :: i
      integer   :: j
      integer   :: l
      real (RT) :: sum
      do i = 1, size (a, 1)
         do j = 1, size (a, 2)
            sum = 0
            do l = 1, size (x, 2)
               sum = sum + f(i, x(1, l)) * f(j, x(1, l))
            end do
            a(i, j) = sum
         end do
      end do

   end subroutine set_Coefficient_Matrix

   !--------------------------------------------------------------------------
   !  This subroutine sets the right term vector "B" of LSM.
   !--------------------------------------------------------------------------
   subroutine set_Right_Term_Vector (f, x, y, b)

      real (RT), external        :: f          !  fitting curve functions
      real (RT), intent (in    ) :: x(:, :)    !  variables (x1,1  x2,1 ...)
      real (RT), intent (in    ) :: y(   :)    !  variables (y1    y2   ...)
      real (RT), intent (in out) :: b(:)       !  right term vector "B" of LSM

      integer   :: i
      integer   :: l
      real (RT) :: sum
      do i = 1, size (b)
         sum = 0
         do l = 1, size (x, 2)
            sum = sum + f(i, x(1, l)) * y(l)
         end do
         b(i) = sum
      end do

   end subroutine set_Right_Term_Vector

end module math_fitting_lsm
```

**[Fig.18]**

```
!------------------------------------------------------------------------------
!  This module provides utility functions about matrix.
!------------------------------------------------------------------------------
module math_matrix

   use numeric, only:                                                          &
          RT => REAL_TYPE

   implicit none

   private

   public :: solv

contains

   !---------------------------------------------------------------------------
   !  This subroutine solves vector "C" of the equation "A*C = B."
   !---------------------------------------------------------------------------
   subroutine solv (a_Original, c, b_Original)

      real (RT), intent (in    ) :: a_Original(:, :)  !  matrix A
      real (RT), intent (in out) :: c(            :)  !  vector C
      real (RT), intent (in    ) :: b_Original(:)     !  vecotr B

      real (RT), allocatable :: a(:, :)
      real (RT), allocatable :: b(:)
      real (RT)              :: cg
      integer                :: rank
      integer                :: i
      integer                :: j

      rank = size (b_Original)

      allocate (a(rank, rank))
      allocate (b(rank))

      a = a_Original
      c = 0
      b = b_Original

      !  forward elimination
      do j = 2, rank
         do i = j, rank
            cg           = a(i, j - 1)  /      a(j - 1, j - 1)
            b(i)         = b(i)         - cg * b(j - 1)
            a(i, j - 1:) = a(i, j - 1:) - cg * a(j - 1, j - 1:)
         end do
      end do

      !  backward substitution
      c(rank) = b(rank) / a(rank, rank)
      do j = rank - 1, 1, -1
         c(j) = (b(j) - sum (a(j, j + 1:) * c(j + 1:))) / a(j, j)
      end do

      deallocate (a)
      deallocate (b)

   end subroutine solv

end module math_matrix
```

**[Fig.19]**

```
!---------------------------------------------------------------------------
!  This module provides fitting curve functions "f" for NFI's New EFMC Method.
!---------------------------------------------------------------------------
module math_fitting_curve

   use numeric, only:                                                      &
          RT => REAL_TYPE

   implicit none

   private

   public :: f

contains

   !------------------------------------------------------------------------
   !    This function returns the value calculated by the fitting curve function
   !  fn(x).
   !------------------------------------------------------------------------
   real (RT) function f (n, x)

      integer,   parameter       :: number_of_Variables = 8

      integer,   intent (in    ) :: n  !  ID of n-th function
      real (RT), intent (in    ) :: x(number_of_Variables)  !  variables
                                                            !  (x1  x2 ...)
      select case (n)
         case (0)
            f = 0  !  not used

         case (1: number_of_Variables)
            f = x(n)

         case (number_of_Variables + 1)
            f = 1

      end select

   end function f

end module math_fitting_curve
```

[Fig.20]

```
!------------------------------------------------------------------------------
!   This module provides procedures for input/output file.
!------------------------------------------------------------------------------
module io

   implicit none

   private

   public :: generate_Unit_Number
   public :: get_Number_of_Lines

   integer, parameter :: UNIT_NUMBER_LAST = huge (0)

contains

   !---------------------------------------------------------------------------
   !  This function returns external file unit number that not connected.
   !---------------------------------------------------------------------------
   integer function generate_Unit_Number ()

      integer :: n
      logical :: is_Opened

      n = UNIT_NUMBER_LAST
      inquire (unit = n, opened = is_Opened)
      do while (n > 0 .and. is_Opened)
         n = n - 1
         inquire (unit = n, opened = is_Opened)
      end do

      if (is_Opened) then
         stop "(Error: Could not open file any more.)"
      end if

      generate_Unit_Number = n

   end function generate_Unit_Number
```

**[Fig.21]**

```
   !------------------------------------------------------------------------------
   !  This function returns the number of lines in file.
   !------------------------------------------------------------------------------
   integer function get_Number_of_Lines (file)

      integer, intent (in    ) :: file

      integer :: status
      integer :: n

      rewind (file)

      read (file, *, iostat = status)
      n = 1
      do while (status == 0)
         n = n + 1
         read (file, *, iostat = status)
      end do

      rewind (file)

      get_Number_of_Lines = n - 1

   end function get_Number_of_Lines

end module io
```

[Fig.22]

```
!---------------------------------------------------------------------------
!  This module provides utility procedures about string.
!---------------------------------------------------------------------------
module string

   implicit none

   private

   public :: count_Tokens

contains

   !------------------------------------------------------------------------
   !  This function returns the number of tokens in the string "s".
   !------------------------------------------------------------------------
   integer function count_Tokens (s)

      character*(*), intent (in    ) :: s  !  a string to be parsed

      character :: c
      integer   :: i, n

      c = ' '
      n = 0
      do i = 1, len (s)
         if (is_Delimiter (s(i: i)) .neqv. is_Delimiter (c)) then
            n = n + 1
         end if
         c = s(i: i)
      end do

      count_Tokens = n / 2 + mod (n, 2)

   end function count_Tokens

   !------------------------------------------------------------------------
   !    This function returns true if the character "c" is the delimiter (blank
   !  space or tab space).
   !------------------------------------------------------------------------
   logical function is_Delimiter (c)

      character, intent (in    ) :: c

      is_Delimiter = (c == ' ') .or. (c == ' ')

   end function is_Delimiter

end module string
```

[Fig.23]

```
!------------------------------------------------------------------------------
!  This module provides kind type parameters for numeric types.
!------------------------------------------------------------------------------
module numeric

   implicit none

   private

   public :: REAL_TYPE

   !---------------------------------------------------------------------------
   !  Kind type parameter for "real type".
   !---------------------------------------------------------------------------
   integer, parameter :: REAL_TYPE = 16  !  kind (0.0d0)


end module numeric
```

[Fig.24]

```
!--------------------------------------------------------------------------------
!    This module provides procedures to demonstrate LSM Fitting for NFI's new
!  EFMC method.
!--------------------------------------------------------------------------------
module demo_lsm

   use numeric, only:                                                            &
          RT => REAL_TYPE

   use io, only:                                                                 &
          generate_Unit_Number,                                                  &
          get_Number_of_Lines

   use string, only:                                                             &
          count_Tokens

   use math_fitting_curve, only:                                                 &
          f

   use math_fitting_lsm, only:                                                   &
          fit

   implicit none

   private

   public :: demo_Fit

contains

   !-----------------------------------------------------------------------------
   !  This subroutine demonstrates LSM Fitting for NFI's new EFMC method.
   !-----------------------------------------------------------------------------
   subroutine demo_Fit ()

      integer,   parameter    :: number_of_Coefficients = 24

      integer                 :: input
      integer                 :: l, m
      character*(1024)        :: s
      real (RT), allocatable  :: x(:, :)
      real (RT), allocatable  :: y(   :)
      real (RT)               :: b(number_of_Coefficients)

   !> allocate x and y
      input = generate_Unit_Number ()
      open (input, file = "input.txt")
      l = get_Number_of_Lines (input) - 1

      read (input, '(/, a)') s
      m = count_Tokens (s) - 1

      allocate (x(m, l))
      allocate (y(   l))
   !<
```

[Fig.25]

```
   !> read x and y
      call read_Data (input, x, y)
      close (input)
   !<

   !> fit to curve
      call fit (f, x, y, b)
   !<

      print *, b

      deallocate (x)
      deallocate (y)

   end subroutine demo_Fit

   !------------------------------------------------------------------------
   !  This subroutine reads the fitting data from the unit number "input".
   !------------------------------------------------------------------------
   subroutine read_Data (input, x, y)

      integer,   intent (in    ) :: input    !  an unit number of input file
      real (RT), intent (in out) :: x(:, :)  !  variables (x1,1  x2,1 ...)
      real (RT), intent (in out) :: y(   :)  !  variables (y1    y2   ...)

      integer :: l

      rewind (input)

      read (input, *)
      do l = 1, size (y)
         read (input, *) x(:, l), y(l)
      end do

   end subroutine read_Data

end module demo_lsm
```

[Fig.26]

```
!---------------------------------------------------------------------------------
!  This module provides fitting curve functions "f" for NFI's New EFMC Method.
!---------------------------------------------------------------------------------
module math_fitting_curve

   use numeric, only:                                                              &
          RT => REAL_TYPE

   implicit none

   private

   public :: f

contains

   !------------------------------------------------------------------------------
   !    This function returns the value calculated by the fitting curve function
   !  fn(x).
   !------------------------------------------------------------------------------
   real (RT) function f (n, x)

      integer,   parameter       :: number_of_Variables = 23

      integer,   intent (in    ) :: n  !  ID of n-th function
      real (RT), intent (in    ) :: x(number_of_Variables)  !  variables
                                                             !  (x1  x2 ...)
      select case (n)
         case (0)
            f = 0  !  not used

         case (1: number_of_Variables)
            f = x(n)

         case (number_of_Variables + 1)
            f = 1

      end select

   end function f

end module math_fitting_curve
```

[Fig.27]

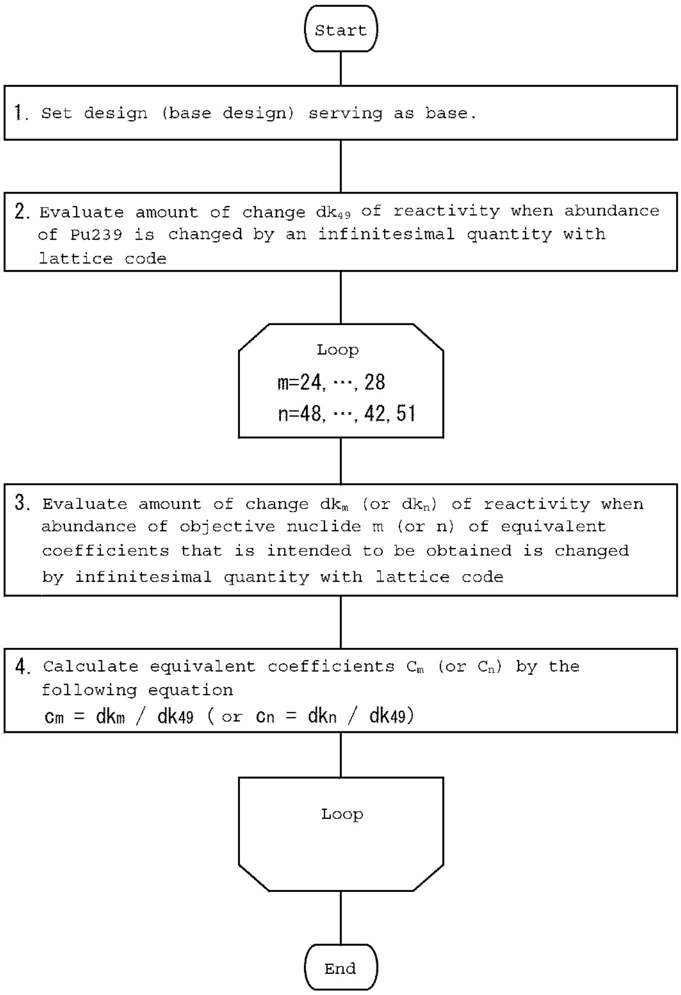
Start
1. Set design (base design) serving as base.
2. Evaluate amount of change $dk_{49}$ of reactivity when abundance of Pu239 is changed by an infinitesimal quantity with lattice code
Loop
m=24, ···, 28
n=48, ···, 42, 51
3. Evaluate amount of change $dk_m$ (or $dk_n$) of reactivity when abundance of objective nuclide m (or n) of equivalent coefficients that is intended to be obtained is changed by infinitesimal quantity with lattice code
4. Calculate equivalent coefficients $C_m$ (or $C_n$) by the following equation
$c_m = dk_m / dk_{49}$ ( or $c_n = dk_n / dk_{49}$)
Loop
End

[Fig.28]

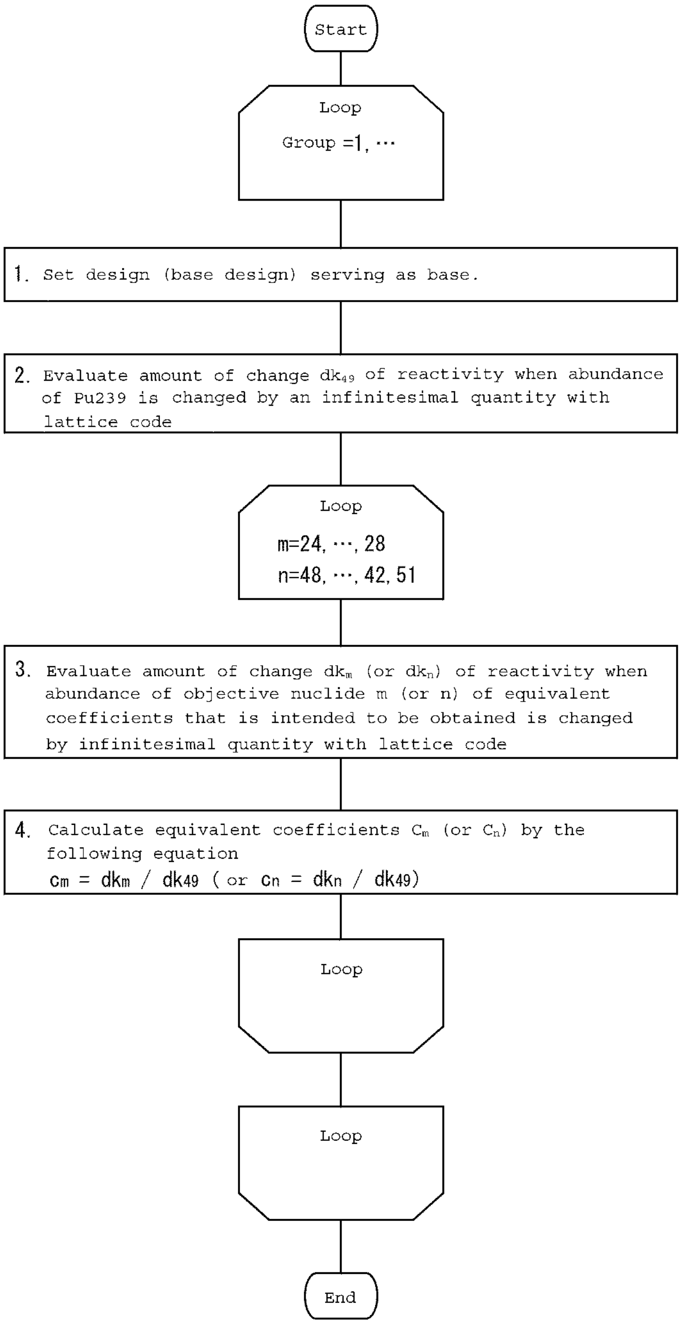
Start
Loop
Group =1, …
1. Set design (base design) serving as base.
2. Evaluate amount of change $dk_{49}$ of reactivity when abundance of Pu239 is changed by an infinitesimal quantity with lattice code
Loop
m=24, …, 28
n=48, …, 42, 51
3. Evaluate amount of change $dk_m$ (or $dk_n$) of reactivity when abundance of objective nuclide m (or n) of equivalent coefficients that is intended to be obtained is changed by infinitesimal quantity with lattice code
4. Calculate equivalent coefficients $C_m$ (or $C_n$) by the following equation
$c_m = dk_m / dk_{49}$ ( or $c_n = dk_n / dk_{49}$)
Loop
Loop
End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3008129 B
- JP 2009014511 A
- JP 2010261866 A

### Non-patent literature cited in the description

- On Plutonium Enrichment of MOX Fuel for PWR. MHI-NES-1001. Mitsubishi Heavy Industries, Ltd, February 1996
- New Edition Handbook of Numerical Computation. Ohmsha, Ltd, September 1990
- Fuel Assembly Nuclear Characteristics Calculation Technique of BWR. NLR-01 Revision 1. NUCLEAR FUEL INDUSTRIES, Ltd, 20 April 2008